(19) **Europäisches Patentamt**
**European Patent Office**
**Office européen des brevets**

(11) **EP 4 679 727 A1**

(12) **EUROPEAN PATENT APPLICATION**
published in accordance with Art. 153(4) EPC

(43) Date of publication:
**14.01.2026   Bulletin 2026/03**

(21) Application number: **24784378.2**

(22) Date of filing: **03.04.2024**

(51) International Patent Classification (IPC):
**H04B 7/06** (2006.01)

(52) Cooperative Patent Classification (CPC):
**H04B 7/0456; H04B 7/06; H04B 17/318;**
**H04B 17/336**

(86) International application number:
**PCT/CN2024/085915**

(87) International publication number:
**WO 2024/208296 (10.10.2024 Gazette 2024/41)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:   **06.04.2023   CN 202310396390**

(71) Applicant: **HUAWEI TECHNOLOGIES CO., LTD.**
**Shenzhen, Guangdong 518129 (CN)**

(72) Inventors:
• **CHAI, Xiaomeng**
  **Shenzhen, Guangdong 518129 (CN)**
• **TIAN, Yang**
  **Shenzhen, Guangdong 518129 (CN)**
• **LIU, Lifu**
  **Shenzhen, Guangdong 518129 (CN)**
• **LI, Yuan**
  **Shenzhen, Guangdong 518129 (CN)**
• **SUN, Yan**
  **Shenzhen, Guangdong 518129 (CN)**

(74) Representative: **Maiwald GmbH**
**Engineering**
**Elisenhof**
**Elisenstrasse 3**
**80335 München (DE)**

(54) **COMMUNICATION METHOD AND COMMUNICATION APPARATUS**

(57)    Embodiments of this application provide a communication method and a communication apparatus. The method includes: generating first channel information, where the first channel information includes K segments, K is an integer greater than 1, a length of each of the K segments is less than or equal to a first threshold, a type of the first channel information is ground truth channel information, and the first channel information is any one of the following: a channel response, a channel eigenvector matrix, a precoding matrix, reference signal received power, or a signal to interference plus noise ratio; and transmitting a part or all of K pieces of uplink control information (uplink control information, UCI) to a network device, where the K pieces of UCI respectively include the K segments. The solutions in embodiments of this application may be applied to a communication system with an AI/ML function, to enable a network device to obtain high-precision channel information.

FIG. 9

**Description**

This application claims priority to Chinese Patent Application No. 202310396390.8, filed with the China National Intellectual Property Administration on April 6, 2023 and entitled "COMMUNICATION METHOD AND COMMUNICATION APPARATUS", which is incorporated herein by reference in its entirety.

**TECHNICAL FIELD**

Embodiments of this application relate to the communication field, and more specifically, to a communication method and a communication apparatus.

**BACKGROUND**

In a communication system, a network device needs to determine, based on downlink channel state information (channel state information, CSI), downlink channel-related configuration information such as a resource, a modulation and coding scheme (modulation and coding scheme, MCS), and precoding that are used to schedule a downlink data channel for a terminal device. The terminal device may calculate the downlink CSI by measuring a downlink reference signal, and feed back the downlink CSI to the network device by using uplink control information (uplink control information, UCI). In this scenario, CSI obtained by the network device is usually compressed to a large degree, and precision of the CSI is low. However, in some scenarios, the network device needs to collect CSI with higher accuracy or higher precision. For example, in an artificial intelligence (artificial intelligence, AI)-based CSI feedback scenario, high-precision CSI is used as training data for training an AI model, or high-precision CSI is used as monitoring data for monitoring performance of an AI model.

Therefore, how to enable the network device to obtain high-precision CSI becomes a problem that urgently needs to be resolved.

**SUMMARY**

Embodiments of this application provide a communication method and a communication apparatus, to enable a network device to obtain high-precision channel information.

According to a first aspect, a communication method is provided. The method may be performed by a terminal device, or may be performed by a chip or a circuit disposed in a terminal device. This is not limited in this application.

The method includes: generating first channel information, where the first channel information includes K segments, K is an integer greater than 1, a length of each of the K segments is less than or equal to a first threshold, a type of the first channel information is ground truth channel information, and the first channel information is any one of the following: a channel response, a channel eigenvector matrix, a precoding matrix, reference signal received power, or a signal to interference plus noise ratio; and transmitting a part or all of K pieces of UCI to a network device, where the K pieces of UCI respectively include the K segments.

In the solution in this embodiment of this application, the ground truth channel information is divided into a plurality of segments, and is transmitted by using a plurality of pieces of UCI, so that the network device can obtain channel information with high feedback overheads, namely, high-precision channel information.

The first threshold is related to a maximum code length supported by the UCI.

For example, the first channel information may be obtained by performing scalar quantization on initial channel information. The initial channel information may be channel information obtained by the terminal device through measurement.

For example, the first channel information may be obtained by performing codebook-based quantization on initial channel information.

With reference to the first aspect, in some implementations of the first aspect, the first threshold is less than or equal to the maximum code length supported by the UCI.

The ground truth channel information has high precision, and correspondingly, also has high feedback overheads. The feedback overheads may exceed the maximum code length supported by the UCI. In the solution in this embodiment of this application, a length of each segment may be less than the maximum code length supported by the UCI, so that the segments can be transmitted by using a plurality of pieces of UCI.

With reference to the first aspect, in some implementations of the first aspect, the first threshold is predefined, or the method further includes: receiving first indication information from the network device, where the first indication information indicates the first threshold.

With reference to the first aspect, in some implementations of the first aspect, a length of each of at least K-1 segments of the K segments is equal to the first threshold.

With reference to the first aspect, in some implementations of the first aspect, the method further includes: receiving second indication information from the network device, where the second indication information indicates a value of K.

The terminal device may segment the first channel information based on the value of K.

With reference to the first aspect, in some implementations of the first aspect, the method further includes: sending third indication information to the network device, where the third indication information indicates lengths of the K segments.

The lengths of the K segments are lengths of the K pieces of UCI. It can be understood that lengths of all of the K pieces of UCI may be the same or different. Whether the lengths are the same or different may be specifically predefined in a protocol or determined based on information between the network device and the terminal device. When the lengths of all of the UCI are the same, the length may be predefined in a protocol, or the network device and the terminal device may be enabled to learn of the length based on information between the network device and the terminal device. When the lengths are different, a length of each of the K pieces of UCI may be determined according to a rule predefined in a protocol, or the network device and the terminal device may be enabled to learn of a length of transmitted UCI based on information between the network device and the terminal device.

In some scenarios, the network device does not know the lengths of the K segments, and the terminal device may notify the network device of a length of each segment, so that the network device can decode each piece of UCI to obtain each segment of the channel information.

With reference to the first aspect, in some implementations of the first aspect, the method further includes: receiving first uplink resource configuration information from the network device, where the first uplink resource configuration information indicates a first uplink resource; and transmitting the part or all of the K pieces of UCI to the network device includes: transmitting the K pieces of UCI to the network device by using the first uplink resource.

For example, the first uplink resource may be distributed in J time resource units, and the time resource unit may be one or a combination of a plurality of slots. The first uplink resource may be considered as J uplink resources. J is a positive integer.

In this way, the K pieces of UCI can be transmitted by using the first uplink resource scheduled by the network device at a time, to help improve channel information transmission efficiency.

With reference to the first aspect, in some implementations of the first aspect, the method further includes: receiving second uplink resource configuration information from the network device, where the second uplink resource configuration information indicates a second uplink resource; and transmitting the part or all of the K pieces of UCI to the network device includes: transmitting the part of the K pieces of UCI to the network device by using the second uplink resource.

With reference to the first aspect, in some implementations of the first aspect, transmitting the part of the K pieces of UCI to the network device by using the second uplink resource includes: transmitting the part of the K pieces of UCI and fourth indication information to the network device by using the second uplink resource, where the fourth indication information indicates at least one of the following: a total length of untransmitted UCI among the K pieces of UCI, or whether the K pieces of UCI include untransmitted UCI; or when the part of the K pieces of UCI include the 1st piece of UCI among the K pieces of UCI, the fourth indication information indicates at least one of the following: a total length of the first channel information, a total length of untransmitted UCI among the K pieces of UCI, or whether the K pieces of UCI include untransmitted UCI.

For example, when the K pieces of UCI include untransmitted UCI, the terminal device may wait for the network device to schedule another uplink resource, to transmit the untransmitted UCI among the K pieces of UCI.

For example, the terminal device receives uplink resource configuration information sent by the network device, where the uplink resource configuration information may indicate an uplink resource, and indicate that the uplink resource is used for transmitting UCI.

For example, when the K pieces of UCI include untransmitted UCI, the terminal device may transmit remaining untransmitted UCI by using one or more other subsequent uplink resources, for example, transmit the untransmitted UCI among the K pieces of UCI by using an uplink resource used for transmitting uplink data.

In the solution in this embodiment of this application, the terminal device may request an uplink resource from the network device to transmit an untransmitted segment. This helps properly utilize uplink resources, to avoid a waste of resources.

With reference to the first aspect, in some implementations of the first aspect, the method further includes: receiving third uplink resource configuration information from the network device, where the third uplink resource configuration information indicates a third uplink resource; and transmitting indication information to the network device by using the third uplink resource, where the indication information indicates a total length of the first channel information.

With reference to the first aspect, in some implementations of the first aspect, transmitting the part or all of the K pieces of UCI to the network device includes: transmitting the part or all of the K pieces of UCI to the network device by using a plurality of uplink resources; and the method further includes: receiving fifth indication information from the network device, where the fifth indication information indicates a quantity of pieces of UCI transmitted on each of the plurality of uplink resources.

For example, the fifth indication information may further indicate specific UCI transmitted on each uplink resource.

For example, the fifth indication information may indicate a number of a segment transmitted on each uplink resource, for example, including a number of each transmitted segment, or including one or more of the following: a starting number of a number of a transmitted segment, a quantity of segments, or an ending number. A part, not indicated by the fifth indication information, of the one or more items may be obtained in another manner, for example, predefined in a protocol. A number of each segment indicates a position of the segment among the K segments.

For example, the plurality of uplink resources may be understood as uplink resources scheduled by the network device at a plurality of times.

For example, the plurality of uplink resources may be understood as a plurality of periodic uplink resources configured by the network device.

For example, an uplink resource scheduled by the network device at a time may be distributed in a plurality of time resource units, and the plurality of time resource units may be used as the plurality of uplink resources.

With reference to the first aspect, in some implementations of the first aspect, transmitting the part or all of the K pieces of UCI to the network device includes: transmitting the part or all of the K pieces of UCI to the network device by using a plurality of uplink resources; and the method further includes: sending sixth indication information to the network device, where the sixth indication information indicates a quantity of pieces of UCI transmitted on each of the plurality of uplink resources.

For example, the sixth indication information may further indicate specific UCI transmitted on each uplink resource, in other words, indicate a position, among the K segments, of a segment included in UCI transmitted on each uplink resource.

For example, the sixth indication information may indicate a number of a segment transmitted on each uplink resource, for example, including a number of each transmitted segment, or including one or more of the following: a starting number of a number of a transmitted segment, a quantity of segments, or an ending number. A part, not indicated by the sixth indication information, of the one or more items may be obtained in another manner, for example, predefined in a protocol. A number of each segment indicates a position of the segment among the K segments.

With reference to the first aspect, in some implementations of the first aspect, transmitting the part or all of the K pieces of UCI to the network device includes: transmitting the part or all of the K pieces of UCI to the network device by using a plurality of uplink resources; and the method further includes: sending seventh indication information to the network device, where the seventh indication information indicates that the plurality of uplink resources correspond to same first channel information.

For example, the seventh indication information includes an identifier carried in an uplink resource. Each uplink resource may carry an identifier, and the identifier is used to distinguish between channel information. If two uplink resources carry a same identifier, information transmitted by using the two uplink resources indicates same channel information. If two uplink resources carry different identifiers, information transmitted by using the two uplink resources indicates different channel information.

With reference to the first aspect, in some implementations of the first aspect, transmitting the part or all of the K pieces of UCI to the network device includes: transmitting the part of the K pieces of UCI to the network device; and the method further includes: discarding untransmitted UCI among the K pieces of UCI, where timing starting from a transmission moment of the 1st piece of UCI among the K pieces of UCI is greater than or equal to a second threshold.

For example, a timer is started at the transmission moment of the 1st piece of UCI, and if timing of the timer is greater than or equal to the second threshold, the untransmitted UCI among the K pieces of UCI is discarded. For example, the transmission moment of the 1st piece of UCI may be a transmission starting moment or a transmission ending moment of the 1st piece of UCI, or another moment that uses the transmission starting moment or the transmission ending moment of the 1st piece of UCI as a reference, provided that the moment can represent duration of transmitting channel information by using the UCI. This is not limited herein.

If the duration of transmitting the channel information is excessively long, the terminal device may determine that transmission of the channel information #3 fails, and discard a remaining segment. This helps avoid a waste of resources.

With reference to the first aspect, in some implementations of the first aspect, transmitting the part or all of the K pieces of UCI to the network device includes: transmitting the part of the K pieces of UCI to the network device; and the method further includes: discarding untransmitted UCI among the K pieces of UCI, where timing starting from a transmission moment of second channel information is greater than or equal to a third threshold, and the first channel information is used to measure precision of the second channel information. For example, the transmission moment of the second channel information may be a transmission starting moment or a transmission ending moment of the second channel channel, or another moment that uses the transmission starting moment or the transmission ending moment of the second channel information as a reference, provided that the moment can represent duration of transmitting the second channel information. This is not limited herein.

For example, a timer is started at the transmission moment of the second channel information, and if timing of the timer is greater than or equal to the third threshold, the untransmitted UCI among the K pieces of UCI is discarded.

The first channel information is used to measure precision of the second channel information. If excessively long duration has elapsed since the transmission moment of the second channel information, actual channel information may have changed, and it is difficult to measure current performance of a model by using the first channel information and the second channel information. The terminal device may determine that transmission of the first channel information fails, and discard a remaining segment. This helps avoid a waste of resources.

According to a second aspect, a communication method is provided. The method may be performed by a terminal device, or may be performed by a chip or a circuit disposed in a terminal device. This is not limited in this application.

The method includes: generating third channel information based on a first feedback configuration, to enable a total length of the third channel information to be less than or equal to a maximum code length supported by UCI, where a type of the third channel information is ground truth channel information; transmitting first UCI to a network device, where the first UCI includes the third channel information; generating fourth channel information based on a second feedback configuration, where precision of the fourth channel information is lower than precision of the third channel information, and a type of the fourth channel information is not ground truth channel information; and transmitting second UCI to the network device, where the second UCI includes the fourth channel information.

According to the solution in this embodiment of this application, when channel information to be fed back by the terminal device is ground truth channel information, high-precision channel information is generated by using the first feedback configuration, and a length of the channel information is enabled to be less than or equal to the maximum code length supported by the UCI. In this way, both the high-precision channel information and other low-precision channel information can be transmitted by using the UCI, to enable the network device to obtain the high-precision channel information.

Precision of channel information may be indicated by a correlation or an error between the channel information and reference channel information of the channel information.

A higher correlation between the channel information and the reference channel information of the channel information indicates higher precision of the channel information.

A smaller error between the channel information and the reference information of the channel information indicates higher precision of the channel information.

The reference channel information of the channel information may be initial channel information corresponding to the channel information, to be specific, channel information obtained by the terminal device through measurement.

With reference to the second aspect, in some implementations of the second aspect, the precision of the third channel information is greater than or equal to a fourth threshold.

With reference to the second aspect, in some implementations of the second aspect, the fourth threshold is predefined, or the method further includes: receiving eighth indication information from the network device, where the eighth indication information indicates the fourth threshold.

With reference to the second aspect, in some implementations of the second aspect, a configuration item of the first feedback configuration includes at least one of the following: a subband configuration of the third channel information, a layer configuration of the third channel information, a quantization precision configuration in a feedback mode based on scalar quantization, a basis configuration in a feedback mode based on codebook-based quantization, or a non-zero coefficient configuration in a feedback mode based on codebook-based quantization.

With reference to the second aspect, in some implementations of the second aspect, a parameter value of a first configuration item in the configuration item of the first feedback configuration is based on a range of the first configuration item.

The terminal device may determine a parameter value of each parameter of the first configuration item within the range of the first configuration item.

The first configuration item may be any one of the following: the subband configuration of the third channel information, the layer configuration of the third channel information, the quantization precision configuration in the feedback mode based on scalar quantization, the basis configuration in the feedback mode based on codebook-based quantization, or the non-zero coefficient configuration in the feedback mode based on codebook-based quantization.

With reference to the second aspect, in some implementations of the second aspect, the range of the first configuration item is predefined, or the method further includes: receiving ninth indication information from the network device, where the ninth indication information indicates the range of the first configuration item.

With reference to the second aspect, in some implementations of the second aspect, the first configuration item includes at least one of the following: the subband configuration of the third channel information, the layer configuration of the third channel information, the quantization precision configuration in the feedback mode based on scalar quantization, the basis configuration in the feedback mode based on codebook-based quantization, or the non-zero coefficient configuration in the feedback mode based on codebook-based quantization;

a range of the subband configuration includes at least one of the following: a value range of a quantity of subbands of the third channel information, a set of subband combinations of the third channel information, or a value range of a subband granularity of the third channel information;

a range of the layer configuration includes at least one of the following: a value range of a quantity of layers of the third channel information, or a set of layer combinations of the third channel information;

a range of the quantization precision configuration in the feedback mode based on scalar quantization includes a value range of quantization precision in the feedback mode based on scalar quantization;

a range of the basis configuration in the feedback mode based on codebook-based quantization includes at least one of the following: a value range indicating a quantity of bases of the third channel information in the feedback mode based on codebook-based quantization, or a set indicating a basis combination of the third channel information in the feedback mode based on codebook-based quantization; or

a range of the non-zero coefficient configuration in the feedback mode based on codebook-based quantization includes at least one of the following: a value range indicating a quantity of non-zero coefficients of the third channel information in the feedback mode based on codebook-based quantization, or a value range indicating non-zero coefficient quantization precision of the third channel information in the feedback mode based on codebook-based quantization.

With reference to the second aspect, in some implementations of the second aspect, parameter values of a plurality of configuration items in the first feedback configuration are based on a correspondence between the parameter values of the plurality of configuration items in the first feedback configuration.

With reference to the second aspect, in some implementations of the second aspect, a parameter value of a second configuration item in the first feedback configuration is based on a parameter value of a third configuration item in the first feedback configuration and the correspondence between the parameter values of the plurality of configuration items in the first feedback configuration, and the third configuration item and the second configuration item belong to the plurality of configuration items.

The second configuration item may be any one of the following: the subband configuration of the third channel information, the layer configuration of the third channel information, the quantization precision configuration in the feedback mode based on scalar quantization, the basis configuration in the feedback mode based on codebook-based quantization, or the non-zero coefficient configuration in the feedback mode based on codebook-based quantization.

The third configuration item may be any one of the following: the subband configuration of the third channel information, the layer configuration of the third channel information, the quantization precision configuration in the feedback mode based on scalar quantization, the basis configuration in the feedback mode based on codebook-based quantization, or the non-zero coefficient configuration in the feedback mode based on codebook-based quantization.

The second configuration item and the third configuration item may be different configuration items.

For example, the parameter value of the third configuration item may be determined by the terminal device.

For example, the parameter value of the third configuration item may be determined based on a range of the third configuration item.

It can be understood that the third configuration item may include the first configuration item.

With reference to the second aspect, in some implementations of the second aspect, the correspondence between the parameter values of the plurality of configuration items is predefined, or the method further includes: receiving tenth indication information from the network device, where the tenth indication information indicates the correspondence between the parameter values of the plurality of configuration items.

With reference to the second aspect, in some implementations of the second aspect, the method further includes: sending eleventh indication information to the network device, where the eleventh indication information indicates parameter values of a part or all of configuration items in the first feedback configuration.

In some scenarios, the parameter values of the part or all of the configuration items may be determined by the terminal device, and the terminal device may notify the network device of the parameter values of the part or all of the configuration items.

According to a third aspect, a communication method is provided. The method may be performed by a terminal device, or may be performed by a chip or a circuit disposed in a terminal device. This is not limited in this application.

The method includes: generating fifth channel information, where a type of the fifth channel information is ground truth channel information; and transmitting the fifth channel information to a network device by using higher layer signaling.

With reference to the third aspect, in some implementations of the third aspect, the higher layer signaling includes a first radio resource control (radio resource control, RRC) message.

With reference to the third aspect, in some implementations of the third aspect, the first RRC message is further used to transmit sixth channel information, and the fifth channel information is used to measure precision of the sixth channel information.

With reference to the third aspect, in some implementations of the third aspect, the first RRC message indicates an association relationship between the fifth channel information and sixth channel information, and the fifth channel information is used to measure precision of the sixth channel information.

For example, the RRC message may further indicate a transmission moment of UCI including the sixth channel information. The transmission moment of the UCI may be indicated by an identifier of a transmission slot of the UCI.

According to a fourth aspect, a communication method is provided. The method may be performed by a first device, or may be performed by a chip or a circuit disposed in a first device. This is not limited in this application.

The method includes: sending a first training dataset to a second device, where the first training dataset includes T1 pieces of training data, and T1 is a positive integer; and sending a second training dataset to a third device, where the second training dataset includes T2 pieces of training data, T2 is a positive integer, the second training dataset and the first training dataset are different subsets of a third training dataset, and the third training dataset is used for model training.

The second device and the third device are different devices.

In the solution in this embodiment of this application, the first device divides the third training dataset into a plurality of subsets, and transmits the plurality of subsets through a plurality of terminal devices, and a device that receives the plurality of subsets may reassemble the plurality of subsets into a training dataset, and perform model training based on the reassembled training dataset. This can avoid severe air interface overheads of terminal devices.

For example, the first device may be a network device, and the second device and the third device may be terminal devices.

For example, the first device may be a server or a cloud server, and the second device and the third device may be terminal devices.

With reference to the fourth aspect, in some implementations of the fourth aspect, sending the first training dataset to the second device includes: sending the first training dataset and first information to the second device, where the first information indicates an attribute of the first training dataset.

With reference to the fourth aspect, in some implementations of the fourth aspect, the first training dataset and the first information are transmitted in different manners or messages.

With reference to the fourth aspect, in some implementations of the fourth aspect, the attribute of the first training dataset includes at least one of the following: an identifier of the third training dataset, an identifier of the first training dataset, a value of T1, positions of the T1 pieces of training data in the third training dataset, an amount of training data in the third training dataset, a minimum value of an amount of training data that is in the third training dataset and that is sufficient for training, a time domain attribute of the T1 pieces of training data, quantization information of the first training dataset, and quantizer information corresponding to the third training dataset.

A value of T1 is a size of the first training dataset.

With reference to the fourth aspect, in some implementations of the fourth aspect, the method further includes: receiving first request information from a fifth device, where the first request message is used to request a fifth training dataset, the fifth training dataset includes T3 pieces of training data, T3 is a positive integer, and the fifth training dataset is a subset of the third training dataset.

The fifth device may be the second device or the third device. Alternatively, the fifth device may be another device different from the second device and the third device.

With reference to the fourth aspect, in some implementations of the fourth aspect, the first request information may include at least one of the following: the identifier of the third training dataset, an identifier of the fifth training dataset, identifiers of the T3 pieces of training data, or an identifier of received training data.

According to a fifth aspect, a communication method is provided. The method may be performed by a network device, or may be performed by a chip or a circuit disposed in a network device. This is not limited in this application.

The method includes: receiving a part or all of K pieces of UCI from a terminal device, where the K pieces of UCI respectively include K segments of first channel information, K is an integer greater than 1, a length of each of the K segments is less than or equal to a first threshold, a type of the first channel information is ground truth channel information, and the first channel information is any one of the following: a channel response, a channel eigenvector matrix, a precoding matrix, reference signal received power, or a signal to interference plus noise ratio; and obtaining, based on the part or all of the K pieces of UCI, a segment included in the part or all of the K pieces of UCI.

With reference to the fifth aspect, in some implementations of the fifth aspect, the first threshold is less than or equal to a maximum code length supported by the UCI.

With reference to the fifth aspect, in some implementations of the fifth aspect, the first threshold is predefined, or the method further includes: sending first indication information to the terminal device, where the first indication information indicates the first threshold.

With reference to the fifth aspect, in some implementations of the fifth aspect, a length of each of at least K-1 segments of the K segments is equal to the first threshold.

With reference to the fifth aspect, in some implementations of the fifth aspect, the method further includes: sending second indication information to the terminal device, where the second indication information indicates a value of K.

With reference to the fifth aspect, in some implementations of the fifth aspect, the method further includes: receiving third indication information from the terminal device, where the third indication information indicates lengths of the K segments.

With reference to the fifth aspect, in some implementations of the fifth aspect, the method further includes: sending first uplink resource configuration information to the terminal device, where the first uplink resource configuration information indicates a first uplink resource; and receiving the part or all of the K pieces of UCI from the terminal device includes: receiving the K pieces of UCI from the terminal device by using the first uplink resource.

With reference to the fifth aspect, in some implementations of the fifth aspect, the method further includes: sending second uplink resource configuration information to the terminal device, where the second uplink resource configuration information indicates a second uplink resource; and receiving the part or all of the K pieces of UCI from the terminal device includes: receiving the part of the K pieces of UCI from the terminal device by using the second uplink resource.

With reference to the fifth aspect, in some implementations of the fifth aspect, receiving the part of the K pieces of UCI from the terminal device by using the second uplink resource includes: receiving the part of the K pieces of UCI and fourth indication information from the terminal device by using the second uplink resource, where the fourth indication information indicates at least one of the following: a total length of untransmitted UCI among the K pieces of UCI, or whether the K pieces of UCI include untransmitted UCI; or when the part of the K pieces of UCI include the 1st piece of UCI among the K pieces of UCI, the fourth indication information indicates at least one of the following: a total length of the first channel information, a total length of untransmitted UCI among the K pieces of UCI, or whether the K pieces of UCI include untransmitted UCI.

With reference to the fifth aspect, in some implementations of the fifth aspect, receiving the part or all of the K pieces of UCI from the terminal device includes: receiving the part or all of the K pieces of UCI from the terminal device by using a plurality of uplink resources; and the method further includes: sending fifth indication information to the terminal device, where the fifth indication information indicates a quantity of pieces of UCI transmitted on each of the plurality of uplink resources.

With reference to the fifth aspect, in some implementations of the fifth aspect, receiving the part or all of the K pieces of UCI from the terminal device includes: receiving the part or all of the K pieces of UCI from the terminal device by using a plurality of uplink resources; and the method further includes: receiving sixth indication information from the terminal device, where the sixth indication information indicates a quantity of pieces of UCI transmitted on each of the plurality of uplink resources.

With reference to the fifth aspect, in some implementations of the fifth aspect, receiving the part or all of the K pieces of UCI from the terminal device includes: receiving the part or all of the K pieces of UCI from the terminal device by using a plurality of uplink resources; and the method further includes: receiving seventh indication information from the terminal device, where the seventh indication information indicates that the plurality of uplink resources correspond to same first channel information.

According to a sixth aspect, a communication method is provided. The method may be performed by a network device, or may be performed by a chip or a circuit disposed in a network device. This is not limited in this application.

The method includes: receiving first UCI from a terminal device, where the first UCI includes third channel information, the third channel information corresponds to a first feedback configuration, and a type of the third channel information is ground truth channel information; and receiving second UCI from the terminal device, where the second UCI includes fourth channel information, the fourth channel information corresponds to a second feedback configuration, precision of the fourth channel information is lower than precision of the third channel information, and a type of the fourth channel information is not ground truth channel information.

With reference to the sixth aspect, in some implementations of the sixth aspect, the precision of the third channel information is greater than or equal to a fourth threshold.

With reference to the sixth aspect, in some implementations of the sixth aspect, the fourth threshold is predefined, or the method further includes: sending eighth indication information to the terminal device, where the eighth indication information indicates the fourth threshold.

With reference to the sixth aspect, in some implementations of the sixth aspect, a configuration item of the first feedback configuration includes at least one of the following: a subband configuration of the third channel information, a layer configuration of the third channel information, a quantization precision configuration in a feedback mode based on scalar quantization, a basis configuration in a feedback mode based on codebook-based quantization, or a non-zero coefficient configuration in a feedback mode based on codebook-based quantization.

With reference to the sixth aspect, in some implementations of the sixth aspect, a parameter value of a first configuration item in the configuration item of the first feedback configuration is based on a range of the first configuration item.

With reference to the sixth aspect, in some implementations of the sixth aspect, the range of the first configuration item is predefined, or the method further includes: sending ninth indication information to the terminal device, where the ninth indication information indicates the range of the first configuration item.

With reference to the sixth aspect, in some implementations of the sixth aspect, the first configuration item includes at least one of the following: the subband configuration of the third channel information, the layer configuration of the third channel information, the quantization precision configuration in the feedback mode based on scalar quantization, the basis configuration in the feedback mode based on codebook-based quantization, or the non-zero coefficient configuration in the feedback mode based on codebook-based quantization;

a range of the subband configuration includes at least one of the following: a value range of a quantity of subbands of the third channel information, a set of subband combinations of the third channel information, or a value range of a subband granularity of the third channel information;

a range of the layer configuration includes at least one of the following: a value range of a quantity of layers of the third channel information, or a set of layer combinations of the third channel information;

a range of the quantization precision configuration in the feedback mode based on scalar quantization includes a value range of quantization precision in the feedback mode based on scalar quantization;

a range of the basis configuration in the feedback mode based on codebook-based quantization includes at least one of the following: a value range indicating a quantity of bases of the third channel information in the feedback mode based on codebook-based quantization, or a set indicating a basis combination of the third channel information in the feedback mode based on codebook-based quantization; or

a range of the non-zero coefficient configuration in the feedback mode based on codebook-based quantization includes at least one of the following: a value range indicating a quantity of non-zero coefficients of the third channel information in the feedback mode based on codebook-based quantization, or a value range indicating non-zero coefficient quantization precision of the third channel information in the feedback mode based on codebook-based quantization.

With reference to the sixth aspect, in some implementations of the sixth aspect, parameter values of a plurality of configuration items in the first feedback configuration are based on a correspondence between the parameter values of the plurality of configuration items in the first feedback configuration.

With reference to the sixth aspect, in some implementations of the sixth aspect, a parameter value of a second configuration item in the first feedback configuration is based on a parameter value of a third configuration item in the first feedback configuration and the correspondence between the parameter values of the plurality of configuration items in the first feedback configuration, and the third configuration item and the second configuration item belong to the plurality of configuration items.

With reference to the sixth aspect, in some implementations of the sixth aspect, the correspondence between the parameter values of the plurality of configuration items is predefined, or the method further includes: sending tenth indication information to the terminal device, where the tenth indication information indicates the correspondence between the parameter values of the plurality of configuration items.

With reference to the sixth aspect, in some implementations of the sixth aspect, the method further includes: receiving eleventh indication information from the terminal device, where the eleventh indication information indicates parameter values of a part or all of configuration items in the first feedback configuration.

According to a seventh aspect, a communication method is provided. The method may be performed by a network device, or may be performed by a chip or a circuit disposed in a network device. This is not limited in this application.

The method includes: receiving fifth channel information from a terminal device by using higher layer signaling, where a type of the fifth channel information is ground truth channel information; and performing data processing based on the fifth channel information, or forwarding the fifth channel information.

For example, the fifth channel information may be used for model monitoring.

For another example, the fifth channel information may be used for model training.

For example, performing data processing based on the fifth channel information may include: performing model training, model monitoring, or the like based on the fifth channel information.

For example, forwarding the fifth channel information may include: forwarding the fifth channel information to another device with an AI module. The AI module is configured to implement a corresponding AI function, for example, model monitoring or model training.

With reference to the seventh aspect, in some implementations of the seventh aspect, the higher layer signaling includes a first RRC message.

With reference to the seventh aspect, in some implementations of the seventh aspect, the first RRC message is further used to transmit sixth channel information, and the fifth channel information is used to measure precision of the sixth channel information.

With reference to the seventh aspect, in some implementations of the seventh aspect, the first RRC message indicates an association relationship between the fifth channel information and sixth channel information, and the fifth channel information is used to measure precision of the sixth channel information.

According to an eighth aspect, a communication method is provided. The method may be performed by a second device, or may be performed by a chip or a circuit disposed in a second device. This is not limited in this application.

The method includes: receiving a first training dataset from a first device, where the first training dataset includes T1 pieces of training data, and T1 is a positive integer; and sending the first training dataset to a fourth device, to enable the fourth device to train a model based on a fourth training dataset, where the fourth training dataset includes at least the first training dataset and a second training dataset, the first training dataset and the second training dataset are different subsets of a third training dataset, the second training dataset includes T2 pieces of training data, and T2 is a positive integer.

The second training dataset is transmitted to the fourth device through a third device. The second device and the third device are different devices.

For example, the first device may be a network device, the second device and the third device may be terminal devices, and the fourth device is a server or a cloud server.

For example, the first device may be a server or a cloud server, the second device and the third device may be terminal devices, and the fourth device is a network device.

With reference to the eighth aspect, in some implementations of the eighth aspect, receiving the first training dataset from the first device further includes: receiving the first training dataset and first information from the first device, where the first information indicates an attribute of the first training dataset.

With reference to the eighth aspect, in some implementations of the eighth aspect, the first training dataset and the first information are transmitted in different manners or messages.

With reference to the eighth aspect, in some implementations of the eighth aspect, the attribute of the first training dataset includes at least one of the following: an identifier of the third training dataset, an identifier of the first training dataset, a value of T1, positions of the T1 pieces of training data in the third training dataset, an amount of training data in the third training dataset, a minimum value of an amount of training data that is in the third training dataset and that is sufficient for training, a time domain attribute of the T1 pieces of training data, quantization information of the first training dataset, and quantizer information corresponding to the third training dataset.

With reference to the eighth aspect, in some implementations of the eighth aspect, the method further includes: sending first request information to the first device, where the first request message is used to request a fifth training dataset, the fifth training dataset includes T3 pieces of training data, T3 is a positive integer, and the fifth training dataset is a subset of the third training dataset.

With reference to the eighth aspect, in some implementations of the eighth aspect, the first request information may include at least one of the following: the identifier of the third training dataset, an identifier of the fifth training dataset, identifiers of the T3 pieces of training data, or an identifier of received training data.

According to a ninth aspect, a communication apparatus is provided. The communication apparatus may be a terminal device, or may be an apparatus, a module, a circuit, a chip, or the like disposed in a terminal device, or may be an apparatus that can be used in cooperation with a terminal device. In a design, the communication apparatus may include modules that are in a one-to-one correspondence with the methods/operations/steps/actions described in any one of the first aspect, the second aspect, the third aspect, or the eighth aspect. The modules may be hardware circuits or software, or may be implemented by using a hardware circuit in combination with software. In a design, the communication apparatus may include a processing module and a communication module.

The sending module is configured to perform a sending action in the method described in any one of the first aspect, the second aspect, the third aspect, or the eighth aspect. The processing module is configured to perform a processing action in the method described in any one of the first aspect, the second aspect, the third aspect, or the eighth aspect.

According to a tenth aspect, a communication apparatus is provided. The communication apparatus may be a network device, or may be an apparatus, a module, a circuit, a chip, or the like disposed in a network device, or may be an apparatus that can be used in cooperation with a network device. In a design, the communication apparatus may include modules that are in a one-to-one correspondence with the methods/operations/steps/actions described in any one of the fourth aspect, the fifth aspect, the sixth aspect, or the seventh aspect. The modules may be hardware circuits or software, or may be implemented by using a hardware circuit in combination with software. In a design, the communication apparatus may include a processing module and a communication module.

The receiving module is configured to perform a receiving action in the method described in any one of the fourth aspect, the fifth aspect, the sixth aspect, or the seventh aspect. The processing module is configured to perform a processing action in the method described in any one of the fourth aspect, the fifth aspect, the sixth aspect, or the seventh aspect.

According to an eleventh aspect, a communication apparatus is provided, and includes a processor and a storage medium. The storage medium stores instructions. When the instructions are run by the processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, the method according to any one of the sixth aspect or the possible implementations of the sixth aspect is implemented, the method according to any one of the seventh aspect or the possible implementations of the seventh aspect is implemented, or the method according to any one of the eighth aspect or the possible implementations of the eighth aspect is implemented.

According to a twelfth aspect, a communication apparatus is provided, and includes a processor. The processor is configured to process data and/or information, to implement the method according to any one of the first aspect or the possible implementations of the first aspect, implement the method according to any one of the second aspect or the possible implementations of the second aspect, implement the method according to any one of the third aspect or the possible implementations of the third aspect, implement the method according to any one of the fourth aspect or the possible implementations of the fourth aspect, implement the method according to any one of the fifth aspect or the possible implementations of the fifth aspect, implement the method according to any one of the sixth aspect or the possible implementations of the sixth aspect, implement the method according to any one of the seventh aspect or the possible implementations of the seventh aspect, or implement the method according to any one of the eighth aspect or the possible implementations of the eighth aspect. Optionally, the communication apparatus may further include a communication interface. The communication interface is configured to receive data and/or information, and transmit the received data and/or information to the processor. Optionally, the communication interface is further configured to output data and/or information processed by the processor.

According to a thirteenth aspect, a chip is provided, and includes a processor. The processor is configured to run a program or instructions, to implement the method according to any one of the first aspect or the possible implementations of the first aspect, implement the method according to any one of the second aspect or the possible implementations of the second aspect, implement the method according to any one of the third aspect or the possible implementations of the third aspect, implement the method according to any one of the fourth aspect or the possible implementations of the fourth aspect, implement the method according to any one of the fifth aspect or the possible implementations of the fifth aspect, implement the method according to any one of the sixth aspect or the possible implementations of the sixth aspect, implement the method according to any one of the seventh aspect or the possible implementations of the seventh aspect, or implement the method according to any one of the eighth aspect or the possible implementations of the eighth aspect. Optionally, the chip may further include a memory, and the memory is configured to store a program or instructions. Optionally, the chip may further include a transceiver.

According to a fourteenth aspect, a computer-readable storage medium is provided. The computer-readable storage medium includes instructions. When the instructions are run by a processor, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, the method according to any one of the sixth aspect or the possible implementations of the sixth aspect is implemented, the method according to any one of the seventh aspect or the possible implementations of the seventh aspect is implemented, or the method according to any one of the eighth aspect or the possible implementations of the eighth aspect is implemented.

According to a fifteenth aspect, a computer program product is provided. The computer program product includes computer program code or instructions. When the computer program code or the instructions are run, the method according to any one of the first aspect or the possible implementations of the first aspect is implemented, the method according to any one of the second aspect or the possible implementations of the second aspect is implemented, the method according to any one of the third aspect or the possible implementations of the third aspect is implemented, the method according to any one of the fourth aspect or the possible implementations of the fourth aspect is implemented, the method according to any one of the fifth aspect or the possible implementations of the fifth aspect is implemented, the method according to any one of the sixth aspect or the possible implementations of the sixth aspect is implemented, the method according to any one of the seventh aspect or the possible implementations of the seventh aspect is implemented, or the method according to any one of the eighth aspect or the possible implementations of the eighth aspect is implemented.

According to a sixteenth aspect, a communication system is provided. The communication system includes one or a combination of the following apparatuses: a communication apparatus for performing any one of the first aspect or the possible implementations of the first aspect, a communication apparatus for performing any one of the second aspect or the possible implementations of the second aspect, a communication apparatus for performing any one of the third aspect or the possible implementations of the third aspect, a communication apparatus for performing any one of the fourth aspect or the possible implementations of the fourth aspect, a communication apparatus for performing any one of the fifth aspect or the possible implementations of the fifth aspect, a communication apparatus for performing any one of the sixth aspect or the possible implementations of the sixth aspect, a communication apparatus for performing any one of the seventh aspect or the possible implementations of the seventh aspect, or a communication apparatus for performing any one of the eighth aspect or the possible implementations of the eighth aspect.

**BRIEF DESCRIPTION OF DRAWINGS**

FIG. 1 is a diagram of a possible application framework in a communication system;
FIG. 2 is a diagram of another possible application framework in a communication system;
FIG. 3 is a diagram of a communication system to which embodiments of this application are applicable;
FIG. 4 is a diagram of another communication system to which embodiments of this application are applicable;
FIG. 5 is a block diagram of an auto-encoder;
FIG. 6 is a diagram of an AI application framework;
FIG. 7 is a schematic flowchart of a communication method according to an embodiment of this application;
FIG. 8 is a diagram of codebook-based feedback according to an embodiment of this application;
FIG. 9 is a schematic flowchart of another communication method according to an embodiment of this application;
FIG. 10 is a schematic flowchart of still another communication method according to an embodiment of this application;
FIG. 11 is a schematic flowchart of still another communication method according to an embodiment of this application;
FIG. 12 is a diagram of an application scenario according to an embodiment of this application;
FIG. 13 is a diagram of another application scenario according to an embodiment of this application;
FIG. 14 is a block diagram of a communication apparatus according to an embodiment of this application; and
FIG. 15 is a block diagram of another communication apparatus according to an embodiment of this application.

**DESCRIPTION OF EMBODIMENTS**

The following describes technical solutions of this application with reference to the accompanying drawings.

The technical solutions provided in this application may be applied to various communication systems, for example, a fifth-generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a sixthgeneration (6th generation, 6G) mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

A network element in a communication system may send a signal to another network element or receive a signal from another network element. The signal may include information, signaling, data, or the like. The network element may alternatively be replaced with an entity, a network entity, a device, a communication device, a communication module, a node, a communication node, or the like. In the present disclosure, the network element is used as an example for description. For example, the communication system may include at least one terminal device and at least one network device. The network device may send a downlink signal to the terminal device, and/or the terminal device may send an uplink signal to the network device. It can be understood that the terminal device in the present disclosure may be replaced with a first network element, the network device may be replaced with a second network element, and the terminal device and the network device perform a corresponding communication method in the present disclosure.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice or data, for example, a handheld device or a vehicle-mounted device with a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, a wearable device, a terminal device in a 5G network, and a terminal device in a future evolved public land mobile network (public land mobile network, PLMN). This is not limited in embodiments of this application.

As an example rather than a limitation, in embodiments of this application, the terminal device may alternatively be a wearable device. The wearable device may also be referred to as a wearable intelligent device, and is a general term for a wearable device that is intelligently designed and developed for daily wear by using a wearable technology, for example, glasses, gloves, a watch, clothing, and shoes. The wearable device is a portable device that is directly worn on a body or integrated into clothes or an accessory of a user. The wearable device is not only a hardware device, but also implements a powerful function through software support, data exchange, and cloud interaction. In a broad sense, wearable intelligent devices include fullfeatured and large-sized devices that can implement complete or partial functions without relying on smartphones, for example, smartwatches or smart glasses, and devices that focus only on one type of application function and need to be used in cooperation with other devices such as smartphones, for example, various smart bands or smart jewelry used for monitoring physical signs.

In embodiments of this application, an apparatus for implementing a function of the terminal device may be a terminal device, or may be an apparatus that can support a terminal device in implementing the function, for example, a chip system, where the apparatus may be mounted in the terminal device or used in cooperation with the terminal device. In embodiments of this application, the chip system may include a chip, or may include a chip and another discrete component. In embodiments of this application, an example in which the apparatus for implementing the function of the terminal device is a terminal device is merely used for description, and constitutes no limitation on the solutions in embodiments of this application.

In embodiments of this application, the network device may be a device for communicating with the terminal device. The network device may also be referred to as an access network device or a radio access network device. For example, the network device may be a base station. In embodiments of this application, the network device may be a radio access network (radio access network, RAN) node (or device) that connects the terminal device to a wireless network. The base station may cover any of the following names in a broad sense, or may be replaced with the following names: for example, a NodeB (NodeB), an evolved NodeB (evolved NodeB, eNB), a next-generation NodeB (next-generation NodeB, gNB), a relay station, an access point, a transmission reception point (transmission reception point, TRP), a transmission point (transmission point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), and a positioning node. The base station may be a macro base station, a micro base station, a relay node, a donor node, or the like, or a combination thereof. The base station may alternatively be a communication module, a modem, or a chip disposed in the foregoing device or apparatus. The base station may alternatively be a mobile switching center, a device that performs a function of a base station in D2D, V2X, or M2M communication, a network-side device in a 6G network, a device that performs a function of a base station in a future communication system, or the like. The base station may support networks of a same access technology or different access technologies. Optionally, the RAN node may alternatively be a server, a wearable device, a vehicle, a vehicle-mounted device, or the like. For example, an access network device in a vehicle-to-everything (vehicle-to-everything, V2X) technology may be a roadside unit (roadside unit, RSU). A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU, or a device including a CU and a DU, or a device including a CU-control plane (central unit-control plane (central unit-control plane, CU-CP)) node, a CU-user plane (central unit-user plane (central unit-user plane, CU-UP)) node, and a DU node. For example, the network device may include a gNB-CU-CP, a gNB-CU-UP, and a gNB-DU.

In some deployments, a plurality of RAN nodes cooperate to assist the terminal in implementing radio access, and different RAN nodes separately implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more categories of fronthaul interfaces, and different fronthaul interfaces correspond to DUs and RUs with different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is an enhanced common public radio interface (enhanced common public radio interface, eCPRI), compared with the implementation of the CPRI, some downlink baseband functions and/or uplink baseband functions are moved from the DU to the RU for implementation. Different manners of splitting the DU and the RU correspond to different categories (category, Cat) of eCPRIs, for example, eCPRI Cat A, B, C, D, E, and F.

The eCPRI Cat A is used as an example. For downlink transmission, splitting is performed at layer mapping. The DU is configured to implement the layer mapping and one or more functions before the layer mapping (to be specific, one or more of encoding, rate matching, scrambling, modulation, and the layer mapping), and other functions (for example, one or more of RE mapping, digital beamforming (beamforming, BF), or inverse fast Fourier transform (inverse fast Fourier transform, IFFT)/cyclic prefix (cyclic prefix, CP) addition) after the layer mapping are moved to the RU for implementation. For uplink transmission, splitting is performed at RE demapping. The DU is configured to implement the demapping and one or more functions before the demapping (to be specific, one or more of the following functions: decoding, de-rate matching, descrambling, demodulation, inverse discrete Fourier transform (inverse discrete Fourier transform, IDFT), channel equalization, and the RE demapping), and other functions (for example, one or more of digital BF or fast Fourier transform (FFT)/CP removal) after the demapping are moved to the RU for implementation. It can be understood that, for function descriptions of DUs and RUs corresponding to various categories of eCPRIs, reference may be made to the eCPRI protocol. Details are not described herein.

In a possible design, a processing unit for implementing a baseband function in the BBU is referred to as a baseband high (baseband high, BBH) unit, and a processing unit for implementing a baseband function in the RRU, the AAU, or the RRH is referred to as a baseband low (baseband low, BBL) unit.

In different systems, the CU (or the CU-CP and the CU-UP), the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

In embodiments of this application, an apparatus for implementing a function of the network device may be a network device, or may be an apparatus that can support a network device in implementing the function, for example, a chip system, a hardware circuit, a software module, or a combination of a hardware circuit and a software module, where the apparatus may be mounted in the network device or used in cooperation with the network device. In embodiments of this application, an example in which the apparatus for implementing the function of the network device is a network device is merely used for description, and constitutes no limitation on the solutions in embodiments of this application.

The network device and/or the terminal device may be deployed on land, including an indoor or outdoor scenario and a handheld or vehicle-mounted scenario; or may be deployed on water; or may be deployed on an airplane, a balloon, and a satellite in the air. Scenarios in which the network device and the terminal device are located are not limited in embodiments of this application. In addition, the terminal device and the network device may be hardware devices; or may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network, for example, in a mobile communication network, services supported by the network are increasingly diversified, and therefore requirements that need to be met are increasingly diversified. For example, the network needs to be capable of supporting an ultra-high rate, an ultra-low latency, and/or massive connections. This feature makes network planning, network configuration, and/or resource scheduling increasingly complex. In addition, because the network has increasingly powerful functions, for example, supporting an increasingly high spectrum and supporting new technologies such as a higher-order multiple-input multiple-output (multiple-input multiple-output, MIMO) technology, beamforming, and/or beam management, network energy saving becomes a hot research topic. These new requirements, scenarios, and features cause unprecedented challenges to network planning, operation and maintenance, and efficient operation. To address the challenges, an artificial intelligence technology may be introduced into the wireless communication network to implement network intelligence.

To support the AI technology in a wireless network, an AI node may be further introduced into the network.

Optionally, the AI node may be deployed at one or more of the following positions in the communication system: an access network device, a terminal device, a core network device, or the like. Alternatively, the AI node may be independently deployed, for example, deployed at a position other than any one of the foregoing devices, for example, a host or a cloud server in an over the top (over the top, OTT) system. The AI node may communicate with other devices in the communication system. The other devices may be, for example, one or more of the following: a network device, a terminal device, a network element of a core network, or the like.

It can be understood that a quantity of AI nodes is not limited in this application. For example, when there are a plurality of AI nodes, the plurality of AI nodes may be obtained through division based on functions. For example, different AI nodes are responsible for different functions.

It can be further understood that the AI nodes may be independent devices, or may be integrated into a same device to implement different functions, or may be network elements in a hardware device, or may be software functions running on dedicated hardware, or may be virtualized functions instantiated on a platform (for example, a cloud platform). A specific form of the AI node is not limited in this application.

The AI node may be an AI network element or an AI module.

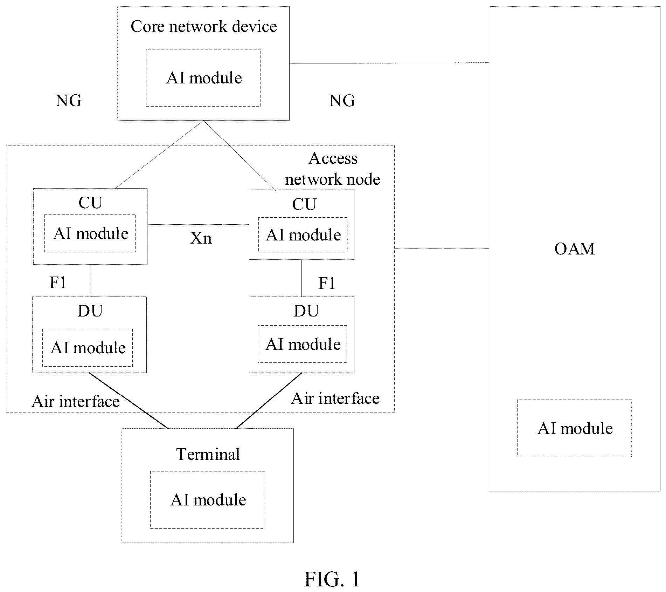

FIG. 1 is a diagram of a possible application framework in a communication system. As shown in FIG. 1, network elements in the communication system are connected through an interface (for example, NG or Xn) or an air interface. One or more AI modules (for clarity, only one AI module is shown in FIG. 1) are deployed on these network element nodes, for example, one or more of the following devices: a core network device, an access network node (RAN node), a terminal, or an OAM. The access network node may serve as an independent RAN node, or may include a plurality of RAN nodes, for example, include a CU and a DU. One or more AI modules may also be deployed in the CU and/or the DU. Optionally, the CU may be further split into a CU-CP and a CU-UP. One or more AI modules are deployed in the CU-CP and/or the CU-UP.

The AI module is configured to implement a corresponding AI function. AI modules deployed in different network elements may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of a neural network, a connection relationship between layers, a weight of a neuron, an activation function of a neuron, or a bias in an activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One model may obtain one output through inference, where the output includes one or more parameters. Learning processes, training processes, or inference processes of different models may be deployed on different nodes or devices, or may be deployed on a same node or device.

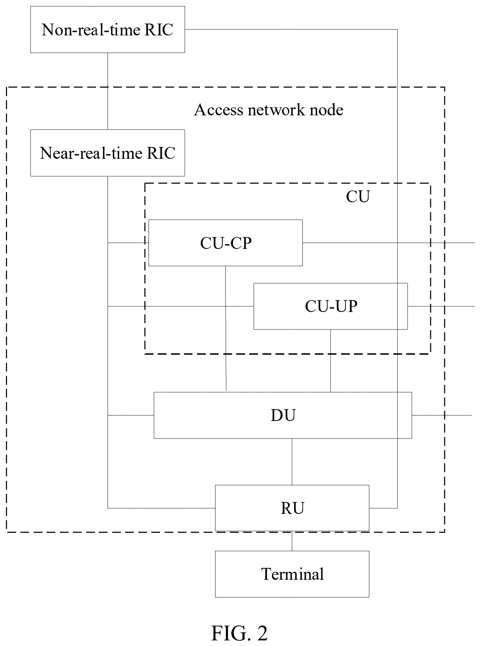

FIG. 2 is a diagram of a possible application framework in a communication system. As shown in FIG. 2, the communication system includes a RAN intelligent controller (RAN intelligent controller, RIC). For example, the RIC may be AI modules 117 and 118 shown in FIG. 1, and is configured to implement an AI-related function. The RIC includes a near-real-time RIC (near-real time RIC, near-RT RIC) and a non-real-time RIC (non-real time RIC, Non-RT RIC). The non-real-time RIC mainly processes non-real-time information, for example, latencyinsensitive data. A latency of the data may be several seconds. The real-time RIC mainly processes near-real-time information, for example, latency-sensitive data. A latency of the data is tens of milliseconds.

The near-real-time RIC is used for model training and inference, for example, is configured to train an AI model and perform inference by using the AI model. The near-real-time RIC may obtain network-side information and/or terminal-side information from a RAN node (for example, a CU, a CU-CP, a CU-UP, a DU, and/or an RU) and/or a terminal. The information may be used as training data or inference data. Optionally, the near-real-time RIC may deliver an inference result to the RAN node and/or the terminal. Optionally, the CU and the DU may exchange an inference result, and/or the DU and the RU may exchange an inference result. For example, the near-real-time RIC delivers an inference result to the DU, and the DU sends the inference result to the RU.

The non-real-time RIC is also used for model training and inference, for example, is configured to train an AI model and perform inference by using the model. The non-real-time RIC may obtain network-side information and/or terminal-side information from the RAN node (for example, the CU, the CU-CP, the CU-UP, the DU, and/or the RU) and/or the terminal. The information may be used as training data or inference data, and an inference result may be delivered to the RAN node and/or the terminal. Optionally, the CU and the DU may exchange an inference result, and/or the DU and the RU may exchange an inference result. For example, the non-real-time RIC delivers an inference result to the DU, and the DU sends the inference result to the RU.

The near-real-time RIC and the non-real-time RIC each may alternatively be independently deployed as a network element. Optionally, the near-real-time RIC and the non-real-time RIC may alternatively serve as a part of another device. For example, the near-real-time RIC is deployed on the RAN node (for example, the CU or the DU), and the non-real-time RIC is deployed on an OAM, a cloud server, a core network device, or another network device.

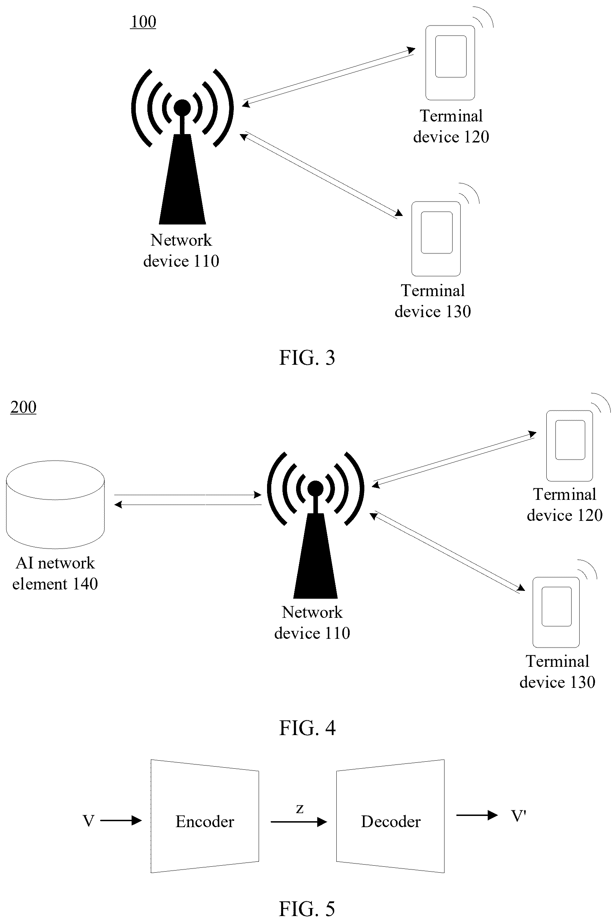

FIG. 3 is a diagram of a communication system to which a communication method according to an embodiment of this application is applicable. As shown in FIG. 3, the communication system 100 may include at least one network device, for example, a network device 110 shown in FIG. 3. The communication system 100 may further include at least one terminal device, for example, a terminal device 120 and a terminal device 130 shown in FIG. 3. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

FIG. 4 is a diagram of another communication system to which a communication method according to an embodiment of this application is applicable. Compared with the communication system 100 shown in FIG. 3, the communication system 200 shown in FIG. 4 further includes an AI network element 140. The AI network element 140 is configured to perform an AI-related operation, for example, constructing a training dataset or training an AI model.

In a possible implementation, the network device 110 may send data related to training of the AI model to the AI network element 140, and the AI network element 140 constructs a training dataset and trains the AI model. For example, the data related to training of the AI model may include data reported by the terminal device. The AI network element 140 may send a result of an operation related to the AI model to the network device 110, and the network device 110 forwards the result of the operation related to the AI model to the terminal device. For example, the result of the operation related to the AI model may include at least one of the following: a trained AI model, an evaluation result or a test result for the model, and the like. For example, a part of the trained AI model may be deployed on the network device 110, and the other part is deployed on the terminal device. Alternatively, the trained AI model may be deployed on the network device 110. Alternatively, the trained AI model may be deployed on the terminal device.

It should be understood that, in FIG. 4, that the AI network element 140 is directly connected to the network device 110 is used only as an example for description. In another scenario, the AI network element 140 may alternatively be connected to the terminal device. Alternatively, the AI network element 140 may be connected to both the network device 110 and the terminal device. Alternatively, the AI network element 140 may be connected to the network device 110 through a third-party network element. A connection relationship between the AI network element and another network element is not limited in embodiments of this application.

The AI network element 140 may alternatively be deployed on a network device and/or a terminal device as a module, for example, deployed on the network device 110 or the terminal device shown in FIG. 3.

It should be noted that FIG. 3 and FIG. 4 are merely simplified diagrams of examples for ease of understanding. For example, the communication system may further include another device, for example, may further include a wireless relay device and/or a wireless backhaul device, which are/is not shown in FIG. 3 and FIG. 4. During actual application, the communication system may include a plurality of network devices, and may also include a plurality of terminal devices. Quantities of network devices and terminal devices included in the communication system are not limited in embodiments of this application.

For ease of understanding the solutions in embodiments of this application, the following describes terms that may be used in embodiments of this application.

(1) AI model:

The AI model is an algorithm or a computer program that can implement an AI function. The AI model represents a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

(2) Two-side model:

The two-side model may also be referred to as a bilateral model, a cooperative model, a dual model, a two-side (two-side) model, or the like. The two-side model is a model including a plurality of submodels. The plurality of submodels included in the model need to match each other. The plurality of submodels may be deployed on different nodes.

Embodiments of this application relate to an encoder for compressing CSI and a decoder for recovering compressed CSI. The encoder and the decoder are used in cooperation. It can be understood that the encoder and the decoder are AI models that match each other. One encoder may include one or more AI models, and a decoder matching the encoder also includes one or more AI models. An encoder and a decoder that are used in cooperation include a same quantity of AI models, and AI models included in the encoder are in a one-to-one correspondence with AI models included in the decoder.

In a possible design, a set of encoder (encoder) and decoder (decoder) that are used in cooperation may be specifically two parts of a same auto-encoder (auto-encoder, AE), for example, as shown in FIG. 5. An AE model in which an encoder and a decoder are separately deployed on different nodes is a typical bilateral model. The encoder and the decoder of the AE model are usually an encoder and a decoder that are jointly trained and that are used in cooperation. The encoder processes an input V to obtain a processed result z, and the decoder can decode the output z of the encoder into an expected output V'.

The auto-encoder is an unsupervised learning neural network, and is characterized by using input data as label data. Therefore, the auto-encoder may also be understood as a selfsupervised learning neural network. The auto-encoder may be configured to compress and recover data. For example, the encoder in the auto-encoder may compress (encode) data A to obtain data B, and the decoder in the auto-encoder may decompress (decode) the data B to obtain the data A through recovery. Alternatively, this may be understood as that the decoder is an inverse operation of the encoder.

For example, the AI model in embodiments of this application may include an encoder and a decoder. The encoder and the decoder are used in cooperation. It can be understood that the encoder and the decoder are AI models that match each other. The encoder and the decoder may be separately deployed on a terminal device and a network device.

Alternatively, the AI model in embodiments of this application may be a single-side model, and the AI model may be deployed on a terminal device or a network device.

(3) Neural network (neural network, NN):

The neural network is a specific implementation form of AI or machine learning. According to the universal approximation theorem, the neural network can approximate any continuous function in theory, so that the neural network has a capability of learning any mapping.

The neural network may include a neuron. The neuron may be an operation unit that uses $x_s$ and an intercept of 1 as an input. The neural network is a network formed by connecting many individual neurons together. To be specific, an output of a neuron may be an input for another neuron. An input for each neuron may be connected to a local receptive field of a previous layer to extract a feature of the local receptive field. The local receptive field may be a region including several neurons.

For example, a type of an AI model is a neural network. The AI model in the present disclosure may be a deep neural network (deep neural network, DNN). Based on a network construction mode, the DNN may include a feedforward neural network (feedforward neural network, FNN), a convolutional neural network (convolutional neural network, CNN), a recurrent neural network (recurrent neural network, RNN), and the like.

(4) Training dataset and inference data:

In the machine learning field, a ground truth (ground truth) is usually considered as accurate data or true data.

The training dataset is used to train an AI model. The training dataset may include an input for the AI model, or include an input for the AI model and a target output of the AI model. The training dataset includes one or more pieces of training data. The training data may include a training sample input to the AI model, or may include the target output of the AI model. The target output may also be referred to as a label, a sample label, or a label sample. The label is a ground truth.

In the communication field, the training dataset may include simulation data collected by a simulation platform, or may include experimental data collected in an experiment scenario, or may include actual measurement data collected in an actual communication network. Because geographical environments and channel conditions in which data is generated are different, for example, indoor/outdoor environments, moving speeds, frequency bands, or antenna configurations are different, collected data may be classified when the data is obtained. For example, data with a same channel propagation environment and a same antenna configuration is classified into one type.

Model training is essentially learning some features of training data from the training data. During training of an AI model (for example, a neural network model), because an output of the AI model is expected to be close, as much as possible, to a predicted value that is actually expected, a predicted value of a current network may be compared with a target value that is actually expected, and then a weight vector of each layer of the AI model is updated based on a difference between the predicted value and the target value (certainly, before the 1st update, an initialization process is usually performed, to be specific, parameters are preconfigured for all layers of the AI model). For example, if the predicted value of the network is large, the weight vector is adjusted to decrease the predicted value, and adjustment is continuously performed until the AI model can obtain, through prediction, the target value that is actually expected or a value that is quite close to the target value that is actually expected. Therefore, "how to obtain, through comparison, a difference between a predicted value and a target value" needs to be predefined. This is a loss function (loss function) or an objective function (objective function). The loss function and the objective function are important equations for measuring a difference between a predicted value and a target value. The loss function is used as an example. A larger output value (loss) of the loss function indicates a greater difference. In this case, the training of the AI model is a process of minimizing the loss, to make a value of the loss function be less than a threshold, or make a value of the loss function meet a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of a neuron.

The inference data may be used as an input for a trained AI model and used for inference by the AI model. During model inference, the inference data is input to the AI model to obtain a corresponding output, namely, an inference result.

(5) AI model design:

The AI model design mainly includes a data collection phase (for example, collection of training data and/or inference data), a model training phase, and a model inference phase, and may further include an inference result application phase.

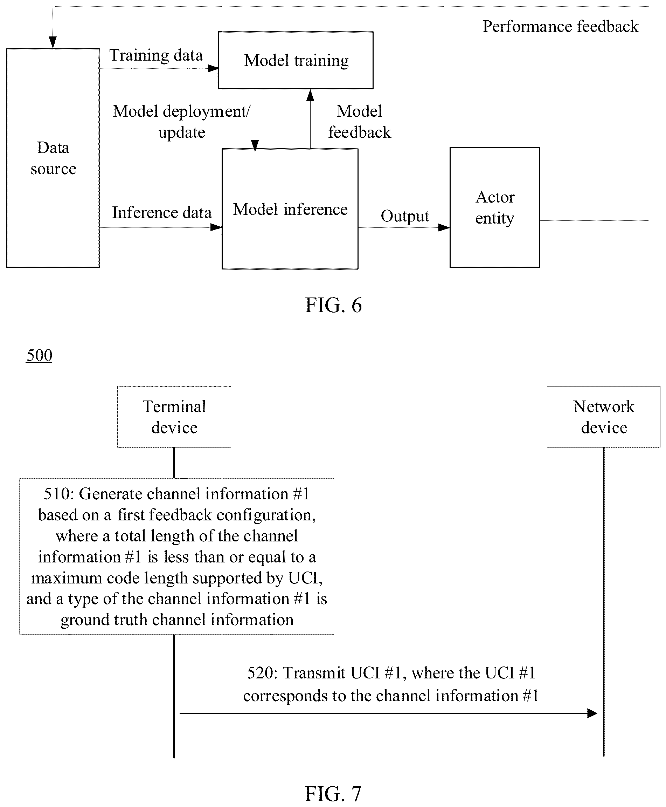

FIG. 6 shows an AI application framework.

In the data collection phase, a data source (data source) is used to provide a training dataset and inference data. In the model training phase, training data (training data) provided by the data source is analyzed or trained to obtain an AI model. The AI model represents a mapping relationship between an input and an output of the model. Obtaining the AI model through learning by using a model training node is equivalent to obtaining the mapping relationship between the input and the output of the model through learning by using the training data. In the model inference phase, the AI model obtained through training in the model training phase is used to perform inference based on the inference data provided by the data source, to obtain an inference result. This phase may also be understood as follows: The inference data is input to the AI model, to obtain an output through the AI model, where the output is the inference result. The inference result may indicate a configuration parameter used (executed) by an actor object, and/or an operation performed by the actor object. The inference result is published in the inference result application phase. For example, the inference result may be planned by an actor (actor) entity in a unified manner. For example, the actor entity may send the inference result to one or more actor objects (for example, a network device or a terminal device) for execution. For another example, the actor entity may further feed back performance of the model to the data source, to facilitate subsequent model updating and training.

It can be understood that a communication system may include a network element with an artificial intelligence function. The foregoing phases related to the AI model design may be performed by one or more network elements with the artificial intelligence function. In a possible design, the AI function (for example, an AI module or an AI entity) may be configured in an existing network element in the communication system, to implement an AI-related operation, for example, AI model training and/or inference. For example, the existing network element may be a network device or a terminal device. Alternatively, in another possible design, an independent network element may be introduced into the communication system to perform an AI-related operation, for example, AI model training. The independent network element may be referred to as an AI network element, an AI node, or the like. The name is not limited in embodiments of this application. For example, the AI network element may be directly connected to a network device in the communication system, or may be indirectly connected to the network device through a third-party network element. The third-party network element may be a core network element like an authentication management function (authentication management function, AMF) network element or a user plane function (user plane function, UPF) network element, an operation administration and maintenance (operation administration and maintenance, OAM), a cloud server, or another network element. This is not limited. For example, the independent network element may be deployed on one or more of a network device side, a terminal device side, or a core network side. Optionally, the independent network element may be deployed on a cloud server. For example, the AI network element 140 is introduced into the communication system shown in FIG. 4.

Training processes for different models may be deployed on different devices or nodes, or may be deployed on a same device or node. Inference processes for different models may be deployed on different devices or nodes, or may be deployed on a same device or node. For example, a model training phase is performed by a terminal device. After training an encoder and a decoder that match each other, the terminal device may send a model parameter of the decoder to a network device. For example, a model training phase is performed by a network device. After training an encoder and a decoder that match each other, the network device may indicate a model parameter of the encoder to a terminal device. For example, a model training phase is performed by an independent AI network element. After training an encoder and a decoder that match each other, the AI network element may send a model parameter of the encoder to a terminal device, and send a model parameter of the decoder to a network device. Then a model inference phase corresponding to the encoder is performed on the terminal device, and a model inference phase corresponding to the decoder is performed on the network device.

The model parameter may include one or more of the following: a structure parameter of the model (for example, a quantity of layers of the model and/or a weight), an input parameter of the model (for example, an input dimension or a quantity of input ports), or an output parameter of the model (for example, an output dimension or a quantity of output ports). It can be understood that the input dimension may be a size of one piece of input data. For example, when the input data is a sequence, an input dimension corresponding to the sequence may indicate a length of the sequence. The quantity of input ports may be a quantity of pieces of input data. Similarly, the output dimension may be a size of one piece of output data. For example, when the output data is a sequence, an output dimension corresponding to the sequence may indicate a length of the sequence. The quantity of output ports may be a quantity of pieces of output data.

(6) Channel state information:

In a communication system (for example, an LTE communication system or an NR communication system), a network device needs to determine, based on CSI, configurations such as a resource, an MCS, and precoding that are used to schedule a downlink data channel for a terminal device. It can be understood that the CSI is channel information, and is information that can indicate a channel feature or channel quality.

CSI measurement means that a receive end obtains channel information based on a reference signal sent by a transmit end, that is, estimates the channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), or the like. The CSI-RS, the SSB, the DMRS, and the like may be used to measure downlink CSI. The SRS, the DMRS, and the like may be used to measure uplink CSI.

An FDD communication scenario is used as an example. In the FDD communication scenario, an uplink channel and a downlink channel are not reciprocal, in other words, reciprocity between an uplink channel and a downlink channel cannot be ensured. Therefore, the network device usually sends a downlink reference signal to the terminal device, and the terminal device performs channel measurement or interference measurement based on the received downlink reference signal to estimate downlink CSI. The terminal device generates a CSI report in a manner predefined in a protocol or in a manner configured by the network device, and feeds back the CSI report to the network device, so that the network device obtains the downlink CSI.

For example, the CSI may include at least one of the following: a channel quality indicator (channel quality indicator, CQI), a precoding matrix indicator (precoding matrix indicator, PMI), a rank indicator (rank indicator, RI), a CSI-RS resource indicator (CSI-RS resource indicator, CRI), a layer indicator (layer indicator, LI), reference signal received power (reference signal received power, RSRP), a signal to interference plus noise ratio (signal to interference plus noise ratio, SINR), or the like. The signal to interference plus noise ratio may also be referred to as a signal-to-interference-plus-noise ratio.

The RI indicates a quantity, recommended by the terminal device, of layers of downlink transmission. The CQI indicates a modulation and coding scheme, determined by the terminal device, that can be supported in a current channel condition. The PMI indicates precoding recommended by the terminal device. A quantity, indicated by the PMI, of layers of precoding corresponds to the RI.

It should be understood that the RI, the CQI, the PMI, and the like that are indicated by the CSI report are only recommended values provided by the terminal device, and the network device may perform downlink transmission based on a part or all of information indicated by the CSI report. Alternatively, the network device may perform downlink transmission without referring to information indicated by the CSI report.

An AI technology is introduced into a wireless communication network to obtain an AI model-based CSI feedback mode. The terminal device compresses and feeds back CSI by using an AI model, and the network device recovers compressed CSI by using an AI model. A sequence (for example, a bit sequence) is transmitted in AI-based CSI feedback, and overheads are lower than overheads of CSI in conventional CSI feedback.

FIG. 5 is used as an example. In FIG. 5, an encoder may be a CSI generator, and a decoder may be a CSI reconfigurator. The encoder may be deployed on the terminal device, and the decoder may be deployed on the network device. The terminal device may generate CSI feedback information z based on CSI raw information V by using the encoder. The terminal device reports a CSI report, where the CSI report may include the CSI feedback information z. The network device may reconstruct CSI information by using the decoder to obtain CSI recovery information V'.

The CSI raw information V may be obtained by the terminal device through CSI measurement. For example, the CSI raw information V may include a channel response of a downlink channel or an eigenvector matrix (a matrix including eigenvectors) of a downlink channel. The encoder processes the eigenvector matrix of the downlink channel to obtain the CSI feedback information z. In other words, performing a compression operation and/or a quantization operation on an eigenmatrix based on a codebook in a related solution is replaced with the operation of processing the eigenmatrix by the encoder to obtain the CSI feedback information z. The terminal device reports the CSI feedback information z. The network device processes the CSI feedback information z by using the decoder to obtain the CSI recovery information V'.

The following further describes examples of a training process and an inference process for the AI model in embodiments of this application.

Training data for training the AI model includes a training sample and a sample label. For example, the training sample is channel information determined by the terminal device, and the sample label is real channel information, namely, ground truth CSI. When the encoder and the decoder belong to a same auto-encoder, the training data may include only the training sample, in other words, the training sample is the sample label.

In the wireless communication field, the ground truth CSI may be high-precision CSI.

A specific training process is as follows: A model training node processes channel information, namely, the training sample, by using the encoder, to obtain CSI feedback information; processes the feedback information by using the decoder, to obtain recovered channel information, namely, CSI recovery information; and then calculates a difference between the CSI recovery information and a corresponding sample label, that is, a value of a loss function, and updates parameters of the encoder and the decoder based on the value of the loss function, to minimize the difference between the recovered channel information and the corresponding sample label, that is, minimize the loss function. For example, the loss function may be a minimum mean square error (mean square error, MSE) or a cosine similarity. The foregoing operations may be repeated to obtain an encoder and a decoder that meet a target requirement. The model training node may be the terminal device, the network device, or another network element with an AI function in the communication system.

It should be understood that the foregoing example in which the AI model is used for CSI compression is merely used for description, and during CSI feedback, the AI model may alternatively be used in another scenario. For example, the AI model may be used for CSI prediction, to be specific, predicting channel information at one or more future moments based on channel information measured at one or more historical moments. A specific purpose of the AI model in the CSI feedback scenario is not limited in embodiments of this application.

(7) UCI

The UCI is assistance information or signaling, other than service load, that is sent by a terminal device to a network device. The UCI may be reported to the network device through a physical uplink control channel (physical uplink control channel, PUCCH) or a physical uplink shared channel (physical uplink shared channel, PUSCH).

In a protocol, content of the UCI includes at least one of the following: a scheduling request, a hybrid automatic repeat request acknowledgement (hybrid automatic repeat request acknowledgement, HARQ-ACK), CSI feedback information, preconfigured grant (configured grant, CG)-UCI, or the like. When load is greater than 11 bits, polar coding (polar code) is usually used for the UCI.

An example in which the content of the UCI is the CSI feedback information is used below as an example to describe a process of determining the UCI.

The CSI feedback information is represented by a CSI report. The CSI feedback information may be divided into two parts: a part 1 (part 1) and a part 2 (part 2). In other words, the CSI report may be divided into two parts. The two parts may be respectively used to generate two UCI bit sequences (bit sequence). The 1st UCI bit sequence corresponds to the part 1, and includes an RI, a CQI, a quantity of non-zero coefficients, and the like. The 2nd UCI bit sequence corresponds to the part 2, and includes a PMI.

Table 1 shows an example mapping order for mapping parts 1 of CSI reports to UCI bit sequences. Table 2 shows an example mapping order for mapping parts 2 of CSI reports to UCI bit sequences.

For example, as shown in Table 1, in the 1st UCI bit sequence, parts 1 of n CSI reports are sorted based on sequence numbers of the n CSI reports. $a_0^{(1)}$ indicates the 1st bit of the 1st UCI bit sequence, $a_1^{(1)}$ indicates the 2nd bit of the 1st UCI bit sequence, and by analogy, $a_{A^{(1)}-1}^{(1)}$ indicates an $A^{(1)\text{th}}$ bit of the 1st UCI bit sequence. $A^{(1)}$ indicates a length of the 1st UCI bit sequence, and $A^{(1)}$ is a positive integer. n is a positive integer. A part 2 may be divided into three groups: a group 0 (group 0), a group 1 (group 1), and a group 2 (group 2). For example, as shown in Table 2, in the 2nd UCI bit sequence, groups 0 in parts 2 of n CSI reports are sorted based on sequence numbers of the n CSI reports, and then groups 1 and groups 2 of the n CSI reports are sorted based on the sequence numbers of the n CSI reports. The group 0 may include $i_{1,1}$, $i_{1,2}$, and $i_{1,8,l}$, where $i_{1,1}$ indicates spatial domain basis selection information, $i_{1,2}$ indicates oversampling selection information, and $i_{1,8,l}$ indicates a coefficient with a largest value among non-zero coefficients at each layer. The group 1 may include a part of $i_{2,3,l}$, $i_{1,5}$, $i_{i,6,l}$, and $i_{2,4,l}$, a part of $i_{2,5,l}$, and a part of $i_{1,7,l}$, where $i_{2,3,l}$ indicates reference amplitude information, $i_{1,5}$ indicates common frequency domain basis selection information, $i_{i,6,l}$ indicates frequency domain basis selection information at each layer, $i_{2,4,l}$ indicates amplitude information of each coefficient at each layer, $i_{2,5,l}$ indicates phase information of each coefficient at each layer, and $i_{1,7,l}$ indicates non-zero coefficient selection information at each layer. The group 2 may include another part of $i_{2,4,l}$, another part of $i_{2,5,l}$, and another part of $i_{1,7,l}$. $a_0^{(2)}$ indicates the 1st bit of the 2nd UCI bit sequence, $a_1^{(2)}$ indicates the 2nd bit of the 2nd UCI bit sequence, and by analogy, $a_{A^{(2)}-1}^{(2)}$ indicates an $A^{(2)\text{th}}$ bit of the 2nd UCI bit sequence. $A^{(2)}$ indicates a length of the 2nd UCI bit sequence, and $A^{(2)}$ is a positive integer.

Table 1

| UCI bit sequence | CSI report sequence number |
|---|---|
| UCI bit sequence | Part 1 of a CSI report #1 |
|  | CSI report sequence number |
| $a_0^{(1)}$ | Part 1 of a CSI report #2 |
| $a_1^{(1)}$ | ... |
| $a_2^{(1)}$ | Part 1 of a CSI report #n |
| $a_3^{(1)}$ |  |
| ⋮ |  |
| $a_{A^{(1)}-1}^{(1)}$ |  |

Table 2

| UCI bit sequence | CSI report sequence number |
|---|---|
| $a_0^{(2)}$ $a_1^{(2)}$ $a_2^{(2)}$ $a_3^{(2)}$ ⋮ $a_{A^{(2)}-1}^{(2)}$ | Wideband (wideband) in a part 2 of the CSI report #1 or a group 0 in a part 2 of the CSI report #1 if the part 2 exists in the CSI report #1 |
|  | Wideband in a part 2 of the CSI report #2 or a group 0 in a part 2 of the CSI report #2 if the part 2 exists in the CSI report #2 |
|  | ... |
|  | Wideband in a part 2 of the CSI report #n or a group 0 in a part 2 of the CSI report #n if the part 2 exists in the CSI report #n |
|  | Subband (subband) in a part 2 of the CSI report #1 or a group 1 and a group 2 in a part 2 of the CSI report #1 if the part 2 exists in the CSI report #1 |
|  | Subband in a part 2 of the CSI report #2 or a group 1 and a group 2 in a part 2 of the CSI report #2 if the part 2 exists in the CSI report #2 |
|  | ... |
|  | Subband in a part 2 of the CSI report #n or a group 1 and a group 2 in a part 2 of the CSI report #n if the part 2 exists in the CSI report #n |

In the foregoing scenario, the CSI feedback is mainly used by the network device to perform precoding, beam management, scheduling, or other operations. In this scenario, high-precision CSI is usually not required. Therefore, CSI actually fed back by the terminal device to the network device is usually compressed to a large degree, and has low precision. In a codebook-based CSI feedback mode, to improve CSI feedback precision, some codebooks with high feedback overheads may be used, for example, a codebook of a type (type) in release (release, R) 16 of the 3GPP protocol and a codebook in a release later than R16. In this case, a CSI report is usually carried in a PUSCH. In an NR system, polar coding is used for channel coding of UCI. The protocol supports a maximum code length of 1706 bits for polar coding, and the protocol supports a maximum CSI feedback overhead of approximately 800 bits. The maximum CSI feedback overhead supported in the protocol is less than the maximum code length supported in the protocol for polar coding. The CSI report may be transmitted by using UCI. However, in some scenarios, for example, in an AI-based CSI feedback scenario, the network device needs to collect channel information with higher accuracy or higher precision.

For example, channel information may be used as training data for training an AI model. The training data for the AI model may include a training sample and/or a sample label. The channel information may be used as the training sample and/or the sample label. Usually, higher accuracy or precision of the channel information indicates better model training effect. If CSI is reported to the network device in the foregoing mode, for example, an R16 codebook-based feedback mode, precision of CSI obtained by the network device is low, and an AI model with good performance can hardly be obtained through training by using the CSI obtained by the network device as training data. For another example, channel information may be used as monitoring data for monitoring performance of an AI model. Specifically, the channel information may be used for comparison with an output of the model, to determine model performance. Higher accuracy or precision of the channel information indicates higher accuracy of a result of determining model performance. If CSI is reported to the network device in the foregoing mode, for example, an R16 codebook-based feedback mode, precision of CSI obtained by the network device is low, and model performance can hardly be accurately evaluated by using the CSI obtained by the network device as a basis for determining model performance.

High-precision channel information is usually larger than CSI fed back in a current CSI feedback mode. To be specific, higher overheads are needed for transmitting the high-precision channel information, and may exceed the limitation of the maximum code length supported in the protocol for polar coding, and therefore the high-precision channel information cannot be fed back by using UCI.

In view of this, this application provides a communication method and a communication apparatus, to enable a network device to obtain high-precision channel information, and facilitate subsequent data transmission between the network device and a terminal device. The communication method may be applied to the foregoing communication system, for example, the FDD communication scenario. In addition, optionally, the communication method may alternatively be applied to a TDD communication scenario. This is not limited in the present disclosure.

It should be understood that, in this application, the indication includes a direct indication (also referred to as an explicit indication) and an implicit indication. Directly indicating information A means including the information A. Implicitly indicating the information A means indicating the information A by directly indicating information B and based on a correspondence between the information A and the information B. The correspondence between the information A and the information B may be predefined, prestored, pre-burned, or preconfigured.

It should be understood that, in this application, that information C is used to determine information D includes that the information D is determined only based on the information C, and also includes that the information D is determined based on the information C and other information. In addition, that information C is used to determine information D may further include an indirect determining case. For example, the information D is determined based on information E, and the information E is determined based on the information C.

In addition, in embodiments of this application, that "a network element A sends information A to a network element B" may be understood as that a destination end of the information A or an intermediate network element in a transmission path between the network element A and the destination end is the network element B, and may include directly or indirectly sending information to the network element B; and that "a network element B receives information A from a network element A" may be understood as that a source end of the information A or an intermediate network element in a transmission path between the network element B and the source end is the network element A, and may include directly or indirectly receiving information from the network element A. Information may undergo necessary processing, for example, a format change, between the source end for sending the information and the destination end. However, the destination end may understand valid information from the source end. Similar descriptions in this application may be understood similarly, and details are not described herein.

The solutions in embodiments of this application may be applied to precoding, beam management, or other scenarios.

FIG. 7 is a schematic flowchart of a communication method according to this application.

As shown in FIG. 7, the method 500 may include the following steps.

510: A terminal device generates channel information #1 (an example of third channel information) based on a first feedback configuration, where a total length of the channel information #1 is less than or equal to a maximum code length supported by UCI, and the channel information #1 is ground truth channel information.

520: Transmit UCI #1 (an example of first UCI) to a network device, where the UCI #1 corresponds to the channel information #1.

In this embodiment of this application, the UCI is information used before encoding. One piece of UCI may be understood as one UCI bit sequence used before encoding, to be specific, a bit sequence on which channel coding is to be independently performed. After undergoing channel coding, the UCI may be transmitted by using an uplink resource.

For example, the uplink resource may be a PUCCH or a PUSCH.

That the UCI #1 corresponds to the channel information #1 indicates that the channel information #1 is transmitted as independent UCI. To be specific, the UCI includes content of the channel information #1. Transmitting the UCI #1 is transmitting the channel information #1 by using the UCI #1. The total length of the channel information #1 may be understood as a quantity of bits of the channel information #1, that is, a length of the UCI #1.

In this embodiment of this application, that the terminal device generates channel information may also be understood as that the terminal device generates a CSI report, and the CSI report indicates the channel information. Correspondingly, that the terminal device transmits channel information to the network device by using UCI may also be understood as that the terminal device transmits, to the network device by using the UCI, a CSI report indicating the channel information.

Ground truth channel information is high-precision channel information. A specific definition manner may be determined by the network device or predefined.

The ground truth channel information may also be referred to as ground truth CSI.

For example, the ground truth channel information may be channel information whose precision is greater than or equal to a threshold #1. The threshold may be specified by the network device or predefined.

In an AI-based feedback mode, the ground truth CSI may be used as any one or more of the following information of an AI model: target CSI, label CSI, input CSI, or the like.

For example, the ground truth CSI may be used as training data during training of the AI model. For example, the ground truth CSI may be used as a training sample input to the AI model and/or a target output of the AI model. The target output may also be referred to as a label, a sample label, a ground truth (ground-truth), a target, or the like.

For example, the ground truth CSI may be used as a target output of the AI model during testing of the AI model, to be specific, used to measure performance of the AI model.

For example, the ground truth CSI may be used as a target output of the AI model during performance monitoring of the AI model, to be specific, used to measure performance of the AI model.

For example, the AI model includes a CSI generator and a CSI reconfigurator. The terminal device may perform channel measurement based on a reference signal sent by the network device, to obtain CSI raw information (namely, initial channel information). The terminal device processes the CSI raw information based on the CSI generator to generate CSI feedback information, and feeds back the CSI feedback information to the network device by using a CSI report. The network device reconstructs the CSI feedback information by using the CSI reconfigurator to obtain CSI recovery information. The terminal device may send, to the network device, the channel information #1 obtained based on the CSI raw information. The network device may evaluate accuracy of the CSI recovery information #1 based on the CSI recovery information and the channel information #1, to evaluate performance of the AI model. It should be understood that the foregoing descriptions are merely examples, and constitute no limitation on the solution in this embodiment of this application.

Optionally, the method 500 may further include step 530 and step 540 (not shown in the figure).

530: The terminal device generates channel information #2 (an example of fourth channel information) based on a second feedback configuration, where the channel information #2 is not ground truth channel information, and precision of the channel information #2 is lower than precision of the channel information #1.

540: The terminal device transmits UCI #2 (an example of second UCI) to the network device, where the UCI #2 corresponds to the channel information #2.

For example, the channel information #2 may be compressed CSI reported in a conventional mode (for example, based on an R16 codebook). For another example, the channel information #2 may be CSI feedback information reported in an AI-based feedback mode.

In other words, when channel information to be fed back by the terminal device is ground truth channel information, high-precision channel information is generated by using the first feedback configuration, and a total length of the channel information is enabled to be less than or equal to the maximum code length supported by the UCI; or when channel information to be fed back by the terminal device is not ground truth channel information, low-precision channel information is generated by using the second feedback configuration, and correspondingly, feedback overheads of the channel information are lower than feedback overheads of the channel information generated based on the first feedback configuration.

That the UCI #2 corresponds to the channel information #2 indicates that the channel information #2 is transmitted as independent UCI. To be specific, the UCI includes content of the channel information #2. Transmitting the UCI #2 is transmitting the channel information #2 by using the UCI #2.

In the solution in this embodiment of this application, when channel information to be fed back by the terminal device is ground truth channel information, high-precision channel information is generated by using the first feedback configuration, and a length of the channel information is enabled to be less than or equal to the maximum code length supported by the UCI. In this way, both the high-precision channel information and other low-precision channel information can be transmitted by using the UCI, to enable the network device to obtain the high-precision channel information.

In this embodiment of this application, the channel information may also be referred to as CSI. The CSI is information for representing a channel state.

For example, a type of the channel information may be any one of the following: a channel response, an eigenvector matrix of a channel, a precoding matrix, an RSRP, an SINR, or the like.

The channel response may also be referred to as a channel matrix. The eigenvector matrix of the channel is a matrix including eigenvectors of the channel.

The type of the channel information may be predefined. Alternatively, the type of the channel information may be configured by the network device.

A dimension of the channel information is related to the type of the channel information.

For example, if the channel information is a spatial domain or frequency domain channel response, the channel information may be represented by a matrix with a dimension of $N_{tx} \times N_{rx} \times F$. $N_{tx}$ indicates a quantity of antenna ports of the network device, and $N_{tx}$ is a positive integer. $N_{rx}$ indicates a quantity of antenna ports of the terminal device, and $N_{rx}$ is a positive integer. F indicates bandwidth. The bandwidth may be represented by a quantity of bandwidth units, for example, a quantity of resource blocks (resource block, RB) or a quantity of subbands. F is a positive integer.

For example, if the channel information is the eigenvector matrix of the channel, the channel information may be represented by a matrix with a dimension of $N_{tx} \times N_{rank} \times F$. $N_{rank}$ indicates a quantity of ranks (rank) of an eigenvector, a quantity of layers, or a quantity of streams. $N_{rank}$ is a positive integer.

For ease of description, in this embodiment of this application, an example in which the channel information is the eigenvector matrix of the channel is mainly used for description, and constitutes no limitation on the solution in this embodiment of this application.

The terminal device may generate, based on the initial channel information, channel information to be fed back to the network device, for example, the channel information #1 or the channel information #2.

For example, the initial channel information may be raw CSI obtained by the terminal device through measurement.

For example, the initial channel information may be CSI that has not undergone overhead adjustment. For example, the initial channel information may be CSI that is not compressed and/or quantized.

The channel information #1 and the channel information #2 may be understood as channel information actually fed back by the terminal device.

In step 510, the terminal device may report the channel information #2 to the network device in a plurality of feedback modes. In other words, the terminal device may process the initial channel information in a plurality of feedback modes, to generate the channel information #2 to be fed back to the network device. A channel information feedback mode may also be referred to as a format in which the terminal device feeds back channel information.

A feedback mode 1 and a feedback mode 2 are used below as examples to describe the channel information feedback mode.

Feedback mode 1: a scalar quantization mode.

Reporting channel information in the scalar quantization mode means performing scalar quantization on the channel information, and feeding back quantized channel information to the network device by using a CSI report.

For example, scalar quantization is performed on an element in the initial channel information, and quantized data is fed back to the network device by using a CSI report. The quantized data may be used as the channel information #1. For example, the initial channel information is an eigenvector matrix of a channel, and the eigenvector matrix of the channel is a matrix with a dimension of $N_{tx} \times N_{rank} \times F$. Scalar quantization is performed on each element in the matrix with a dimension of $N_{tx} \times N_{rank} \times F$, and a result obtained through scalar quantization is sorted in a preset order to obtain the channel information #1.

For example, a type of the scalar quantization may include any one of the following: N-bit (bit) scalar quantization, floating-point number (float) 16 quantization, float32 quantization, integer (int) 8 quantization, or the like. N may be a positive integer. For example, N may be any integer ranging from 1 to 8.

In the feedback mode based on scalar quantization, feedback overheads may be controlled based on quantization precision of scalar quantization or the like. For example, the feedback overheads are reduced by using lower quantization precision.

Feedback mode 2: a codebook-based quantization mode.

Reporting channel information in the codebook-based quantization mode means processing the channel information based on a codebook, and feeding back processed channel information to the network device by using a CSI report.

The codebook is a codebook for CSI feedback.

For example, the codebook may be a codebook defined in an NR protocol for CSI feedback. For example, the codebook may be any one of the following: a type I codebook in R15 of the 3GPP protocol, a type II codebook in R15 of the 3GPP protocol, an enhanced type (enhanced type, etype) II codebook in R16 of the 3GPP protocol, a codebook in R17 of the 3GPP protocol, a codebook in R18 of the 3GPP protocol, or the like.

The foregoing descriptions are merely examples. In another implementation, the codebook for CSI feedback may alternatively be another codebook. For example, a codebook format defined in the protocol and a user-defined codebook parameter may be used in the codebook for CSI feedback. The user-defined codebook parameter is one or more groups of user-defined codebook parameters. For another example, a user-defined codebook format and a user-defined codebook parameter may be used in the codebook for CSI feedback.

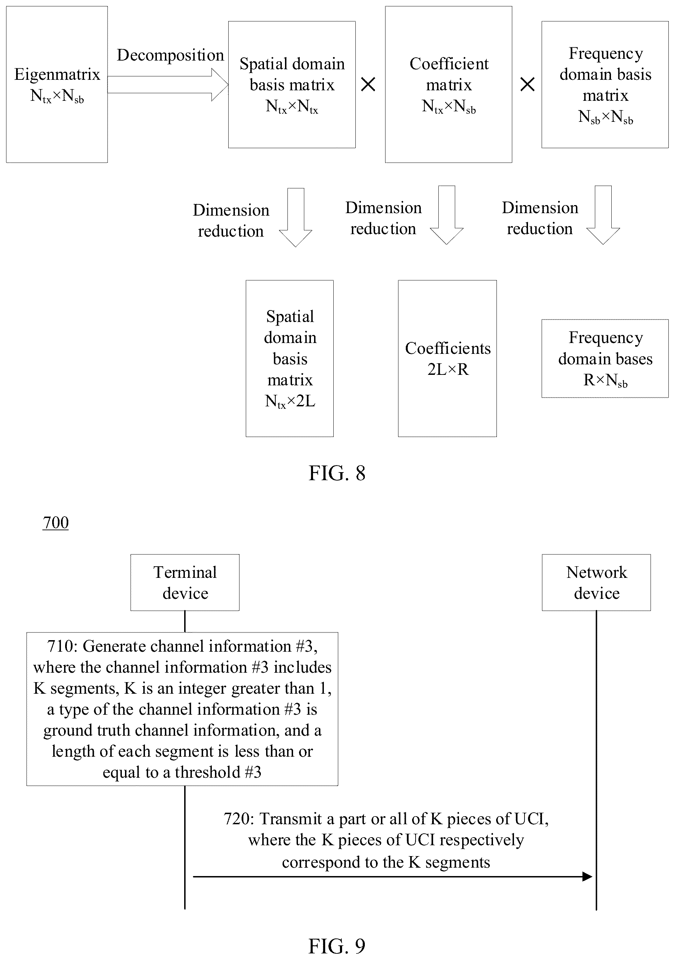

FIG. 8 is a diagram of feedback based on the etype II codebook in R16 of the 3GPP protocol.

As shown in FIG. 8, a main principle of reporting channel information based on the etype II codebook in R16 is to decompose an eigenvector matrix at each layer into three matrices that are multiplied. A dimension of the eigenvector matrix at each layer is $N_{tx} \times N_{sb}$, where $N_{sb}$ indicates a quantity of subbands, and $N_{sb}$ is a positive integer. For ease of description, the three matrices are referred to as a spatial domain basis matrix, a coefficient matrix, and a frequency domain matrix. A dimension of the spatial domain basis matrix is $N_{tx} \times N_{tx}$, a dimension of the coefficient matrix is $N_{tx} \times N_{sb}$, and a dimension of the frequency domain basis matrix is $N_b \times N_b$. Because the coefficient matrix includes a large quantity of coefficients with small values, dimension reduction may be performed on the spatial domain basis matrix, the coefficient matrix, and the frequency domain matrix. For example, a spatial domain basis column vector corresponding to a coefficient with a large value in the coefficient matrix is retained in the spatial domain basis matrix, and a frequency domain basis column vector corresponding to a coefficient with a large value in the coefficient matrix is retained in the frequency domain basis matrix. For example, 2L spatial domain basis column vectors are selected from the spatial domain basis matrix, R frequency domain basis row vectors are selected from the frequency domain basis matrix, and $2L \times R$ coefficients in the coefficient matrix that correspond to the 2L spatial domain basis column vectors and the R frequency domain basis row vectors are determined. P non-zero coefficients are selected from the $2L \times R$ coefficients. P is a positive integer less than or equal to $2L \times R$. Scalar quantization is performed on each of the P non-zero coefficients. L is a positive integer, and R is a positive integer.

The spatial domain basis matrix and the frequency domain basis matrix are defined by the codebook. The spatial domain basis matrix and the frequency domain basis matrix may be discrete Fourier transform (discrete Fourier transform, DFT) matrices or matrices obtained by transforming a DFT matrix. The terminal device may feed back the selected spatial domain basis column vectors, the selected frequency domain basis row vectors, the selected non-zero coefficients, and values of the non-zero coefficients by using a CSI report. The spatial domain basis column vector may also be referred to as a spatial domain basis. The frequency domain basis row vector may also be referred to as a frequency domain basis. The terminal device only needs to notify the network device of a specific selected spatial domain basis, a specific selected frequency domain basis, a specific selected non-zero coefficient, and a value of the non-zero coefficient, so that the network device can obtain the channel information.

In the feedback mode based on the etype II codebook in R16, content fed back by the terminal device includes $i_{1,1}$, $i_{1,2}$, $i_{1,5}$, $i_{1,6,l}$, $i_{1,7,l}$, $i_{1,8,l}$, $i_{2,3,l}$, $i_{2,4,l}$, $i_{2,5,l}$, where $l$ is an identifier of a layer, and a value of $l$ is 1, 2, ..., or $N_{rank}$. $i_{1,1}$ indicates spatial domain basis selection information, $i_{1,2}$ indicates oversampling selection information, $i_{1,8,l}$ indicates a coefficient with a largest value among non-zero coefficients at each layer, $i_{2,3,l}$ indicates reference amplitude information, $i_{1,5}$ indicates common frequency domain basis selection information, $i_{i,6,l}$ indicates frequency domain basis selection information at each layer, $i_{2,4,l}$ indicates amplitude information of each coefficient at each layer, $i_{2,5,l}$ indicates phase information of each coefficient at each layer, and $i_{1,7,l}$ indicates non-zero coefficient selection information at each layer.

$i_{1,1}$ and $i_{1,2}$ indicate a specific selected spatial domain basis. $i_{1,5}$ and $i_{1,6,l}$ indicate a specific frequency domain basis selected at each layer. $i_{1,1}$ $i_{1,2}$, $i_{1,5}$, and $i_{1,6,l}$ may be collectively referred to as basis selection information. $i_{1,7,l}$ is an identifier of a non-zero coefficient selected at an $l^{th}$ layer. To be specific, $i_{1,7,l}$ may indicate a specific non-zero coefficient selected at each layer. $i_{1,8,l}$ may indicate a coefficient with a largest value among non-zero coefficients at each layer. $i_{2,3,l}$, $i_{2,4,l}$ and $i_{2,5,l}$ may indicate a value of each non-zero coefficient. $i_{1,7,l}$ and $i_{1,8,l}$ may be collectively referred to as coefficient selection information. $i_{2,3,l}$, $i_{2,4,l}$ and $i_{2,5,l}$ may be collectively referred to as coefficient value information. Values of L, P, and R may be determined by codebook parameters of the etype II codebook in R16.

For example, the initial channel information is an eigenvector matrix of a channel. For example, the initial channel information is processed based on the codebook, to decompose an eigenvector matrix at each layer into three matrices that are multiplied. 2L spatial domain bases are selected from a spatial domain basis matrix, R frequency domain bases are selected from a frequency domain basis matrix, and $2L \times R$ coefficients in a coefficient matrix that correspond to the 2L spatial domain bases and the R frequency domain bases are determined. P non-zero coefficients are selected from the $2L \times R$ coefficients. Scalar quantization is performed on each of the P non-zero coefficients. Channel information that can be determined based on the selected spatial domain bases, the selected frequency domain bases, the selected non-zero coefficients, and values of the non-zero coefficients is the channel information #1, to be specific, channel information actually fed back by the terminal device. The terminal device notifies the network device of the selected spatial domain bases, the selected frequency domain bases, the selected non-zero coefficients, and the values of the non-zero coefficients, so that the network device can obtain the channel information #1.

As described above, in the solution in this embodiment of this application, a codebook format defined in the protocol and a user-defined codebook parameter may be used in the codebook. For example, a codebook format defined by the etype II codebook in R16 and user-defined codebook parameters such as values of L, P, and R may be used in the codebook in this embodiment of this application.

In the feedback mode based on codebook-based quantization, feedback overheads may be controlled by adjusting a quantity of selected bases, a quantity of non-zero coefficients, non-zero coefficient quantization precision, or the like. For example, the feedback overheads are reduced by using one or more of the following: fewer bases, fewer non-zero coefficients, lower non-zero coefficient quantization precision, or the like.

A feedback mode used by the terminal device may be predefined, or a feedback mode used by the terminal device may be configured by the network device. For example, whether the feedback mode 1 or the feedback mode 2 is to be used by the terminal device may be predefined, or may be configured by the network device.

Feedback overheads of channel information may be adjusted in a plurality of manners. In other words, channel information actually fed back by the terminal device may be adjusted in a plurality of manners.

A manner 1 to a manner 4 are used below as examples to describe a manner of adjusting feedback overheads of channel information. For example, feedback overheads of channel information may be adjusted in any one or more of the manner 1 to the manner 4.

Manner 1: Adjust a bandwidth dimension of the channel information #1.

A smaller bandwidth dimension of the channel information #1 indicates lower feedback overheads of the channel information #1.

In the manner 1, the bandwidth dimension of the channel information #1 is smaller than a bandwidth dimension of the initial channel information. To be specific, feedback overheads are reduced by reducing a bandwidth dimension of channel information actually fed back to the network device.

For example, a part of subbands may be selected from a plurality of subbands of the initial channel information and fed back to the network device. A quantity of subbands of the channel information #1 is a quantity of the part of subbands.

The quantity of subbands of the channel information #1 is less than a quantity of subbands of the initial channel information.

For example, the quantity of subbands of the initial channel information is $N_{sb}$, and $N_{sb1}$ subbands are selected from the $N_{sb}$ subbands and fed back to the network device. The quantity of subbands of the channel information #1 is $N_{sb1}$, where $N_{sb1}$ is a positive integer less than $N_{sb}$.

In this way, feedback overheads can be controlled by a quantity of subbands selected from the initial channel information. Feedback overheads of channel information may be reduced by reducing a quantity of subbands of channel information actually fed back to the network device.

For example, a subband granularity of the channel information may be increased. A subband granularity of the channel information #1 is an increased subband granularity of the channel information.

In this case, the subband granularity of the channel information #1 is greater than a subband granularity of the initial channel information.

A larger subband granularity of the channel information #1 indicates a smaller quantity of subbands of the channel information #1 and lower overheads for transmitting the channel information #1, that is, lower feedback overheads.

For example, the subband granularity may be represented by a quantity of resource blocks of a subband.

For example, the subband granularity of the initial channel information is 4 RBs, a quantity of subbands is a positive integer closest to $N_{rb}/4$, and bandwidth of the initial channel information is $N_{rb}$ RBs, where $N_{rb}$ is a positive integer. The increased subband granularity is 6 RBs. In other words, the subband granularity of the channel information #1 is 6 RBs. The quantity of subbands of the channel information #1 is a positive integer closest to $N_{rb}/6$.

In this way, feedback overheads can be controlled by the subband granularity of the channel information #1. A quantity of subbands of channel information fed back to the network device may be reduced by increasing a subband granularity, to reduce feedback overheads.

Manner 2: Adjust a quantity of layers of the channel information #1.

For example, a part of layers may be selected from a plurality of layers of the initial channel information and fed back to the network device. The quantity of layers of the channel information #1 is a quantity of the part of layers. In this case, the quantity of layers of the channel information #1 is less than a quantity of layers of the initial channel information.

For example, the quantity of layers of the initial channel information is 2, and one layer is selected from the two layers and fed back to the network device. The quantity of layers of the channel information #1 is 1.

A smaller quantity of layers of the channel information #1 indicates lower feedback overheads of the channel information #1.

In this way, feedback overheads can be controlled by the quantity of layers of the channel information #1. Feedback overheads of channel information may be reduced by reducing a quantity of layers of channel information actually fed back to the network device.

Manner 3: Adjust quantization precision of scalar quantization.

Optionally, step 510 may include: performing scalar quantization on the initial channel information based on the first feedback configuration to generate the channel information #1.

In other words, channel information is reported in the scalar quantization mode.

For example, data in the initial channel information is in a float16 format, and each piece of data in the initial channel information is converted into an int8 format in the scalar quantization mode. Data in the channel information #1 is in the int8 format.

The channel information #1 is obtained through scalar quantization. Lower quantization precision of scalar quantization indicates lower feedback overheads of the channel information #1.

In this way, feedback overheads can be controlled by the quantization precision of scalar quantization. Feedback overheads of channel information may be reduced by reducing the quantization precision of scalar quantization.

The manner 1 and the manner 3 may be used in combination. To be specific, the quantity of subbands of the channel information #1 is less than the quantity of subbands of the initial channel information, and the channel information #1 is obtained through scalar quantization.

For example, step 510 may include: performing scalar quantization on channel information #1-1 to generate the channel information #1, where the channel information #1-1 is a part of the plurality of subbands of the initial channel information.

A part of subbands are selected from the plurality of subbands of the initial channel information to obtain the channel information #1-1, and scalar quantization is performed on each element in the channel information #1-1, where quantized channel information #1-1 is the channel information #1.

For example, step 510 may include: performing scalar quantization on the initial channel information to obtain channel information #1-2; and selecting a part of subbands from a plurality of subbands of the channel information #1-2 to generate the channel information #1, where the part of subbands selected from the channel information #1-2 is the channel information #1.

In this way, feedback overheads can be controlled by a quantity of subbands selected from the initial channel information (namely, the quantity of subbands of the channel information #1) and the precision of scalar quantization.

For example, step 510 may include: increasing the subband granularity of the initial channel information to obtain channel information #1-3; and performing scalar quantization on each element in the channel information #1-3 to generate the channel information #1.

In this way, feedback overheads can be controlled by the subband granularity of the channel information #1 and the precision of scalar quantization.

For example, step 510 may include: increasing the subband granularity of the initial channel information to obtain channel information #1-3; selecting a part of subbands from a plurality of subbands of the channel information #1-3 to obtain channel information #1-4; and performing scalar quantization on each element in the channel information #1-4 to generate the channel information #1.

In this way, feedback overheads can be controlled by a quantity of subbands selected from the initial channel information, the subband granularity of the channel information #1, and the precision of scalar quantization.

It should be understood that the foregoing descriptions are merely examples, and the manner 1 and the manner 3 may alternatively be combined in another manner. This is not limited in this embodiment of this application.

The manner 2 and the manner 3 may be used in combination. To be specific, the quantity of layers of the channel information #1 is less than the quantity of layers of the initial channel information, and the channel information #1 is obtained through scalar quantization.

For example, step 510 may include: performing scalar quantization on channel information #1-5 to generate the channel information #1, where the channel information #1-5 is a part of the plurality of layers of the initial channel information.

The part of layers are selected from the plurality of layers of the initial channel information to obtain the channel information #1-5, and scalar quantization is performed on each element in the channel information #1-5, where quantized channel information #1-5 is the channel information #1.

In this way, feedback overheads can be controlled by the quantity of layers of the channel information #1 and the precision of scalar quantization.

It should be understood that the foregoing descriptions are merely examples, and the manner 2 and the manner 3 may alternatively be combined in another manner. This is not limited in this embodiment of this application.

Manner 4: Adjust a related configuration of codebook-based quantization.

Optionally, step 510 may include: processing the initial channel information based on the first feedback configuration and a codebook to generate the channel information #1.

In other words, channel information is reported in a codebook-based mode. For specific descriptions, refer to the foregoing feedback mode 2. Details are not described herein again.

The channel information #1 is obtained through codebook-based quantization. During codebook-based quantization, the channel information #1 is represented by a selected basis and a selected non-zero coefficient. A smaller quantity of selected bases indicates lower precision of the channel information #1 and lower overheads for transmitting the channel information #1. A smaller quantity of selected non-zero coefficients indicates lower precision of the channel information #1 and lower overheads for transmitting the channel information #1. Lower non-zero coefficient quantization precision indicates lower precision of the channel information #1 and lower overheads for transmitting the channel information #1.

In this way, feedback overheads can be controlled by a quantity of selected bases, a quantity of selected non-zero coefficients, and non-zero coefficient quantization precision. Feedback overheads of channel information may be reduced by reducing the quantity of selected bases, the quantity of selected non-zero coefficients, or the non-zero coefficient quantization precision.

The manner 1 and the manner 4 may be used in combination. To be specific, the quantity of subbands of the channel information #1 is less than the quantity of subbands of the initial channel information, and the channel information #1 is obtained through codebook-based quantization.

For example, step 510 may include: performing codebook-based quantization on channel information #1-6 to obtain the channel information #1, where the channel information #1-6 is a part of the plurality of subbands of the initial channel information.

The part of subbands are selected from the plurality of subbands of the initial channel information to obtain the channel information #1-6, and codebook-based quantization is performed on the channel information #1-6, where processed channel information is the channel information #1.

In this way, feedback overheads can be controlled by a quantity of subbands selected from the initial channel information, a quantity of selected bases, a quantity of selected non-zero coefficients, and non-zero coefficient quantization precision.

For example, step 510 may include: increasing the subband granularity of the initial channel information to obtain channel information #1-7; and codebook-based quantization is performed on the channel information #1-7, where processed channel information is the channel information #1.

In this way, feedback overheads can be controlled by the subband granularity of the channel information #1, a quantity of selected bases, a quantity of selected non-zero coefficients, and non-zero coefficient quantization precision.

It should be understood that the foregoing descriptions are merely examples, and the manner 1 and the manner 4 may alternatively be combined in another manner. This is not limited in this embodiment of this application.

The manner 2 and the manner 4 may be used in combination. To be specific, the quantity of layers of the channel information #1 is less than the quantity of layers of the initial channel information, and the channel information #1 is obtained through codebook-based quantization.

For example, for example, step 510 may include: performing codebook-based quantization on channel information #1-8 to generate a CSI report, where the channel information #1-8 is a part of the plurality of layers of the initial channel information.

The part of layers are selected from the plurality of layers of the initial channel information to obtain the channel information #1-8, and codebook-based quantization is performed on the channel information #1-8, where processed channel information is the channel information #1.

In this way, feedback overheads can be controlled by the quantity of layers of the channel information #1, a quantity of selected bases, a quantity of selected non-zero coefficients, and non-zero coefficient quantization precision.

It should be understood that the foregoing descriptions are merely examples, and the manner 2 and the manner 4 may alternatively be combined in another manner. This is not limited in this embodiment of this application.

Feedback overheads of channel information are based on a feedback configuration. Feedback overheads of the channel information #1 are based on the first feedback configuration. Feedback overheads of the channel information #2 are based on the second feedback configuration.

The first feedback configuration is different from the second feedback configuration.

A configuration item of the first feedback configuration may be the same as or different from a configuration item of the second feedback configuration.

The feedback overheads of the channel information #1 may be adjusted by adjusting parameter values of one or more configuration items of the first feedback configuration.

For example, the configuration item of the first feedback configuration may include any one or more of the following: a subband configuration of the channel information #1, a layer configuration of the channel information #1, a quantization precision configuration in the feedback mode based on scalar quantization, a basis configuration in the feedback mode based on codebook-based quantization, a non-zero coefficient configuration in the feedback mode based on codebook-based quantization, or the like.

For example, the subband configuration of the channel information #1 may indicate any one or more of the following: the quantity of subbands of the channel information #1, a subband of the channel information #1, the subband granularity of the channel information #1, or the like.

In other words, the subband configuration of the channel information #1 may indicate any one or more of the following: a quantity of subbands in the initial channel information that are actually fed back to the network device, a specific subband in the initial channel information that is actually fed back to the network device, a subband granularity of channel information actually fed back to the network device, or the like.

For example, the layer configuration of the channel information #1 may indicate any one or more of the following: the quantity of layers of the channel information #1, an identifier of a layer of the channel information #1, or the like.

In other words, the layer configuration of the channel information #1 may indicate one or more of the following: a quantity of layers in the initial channel information that are actually fed back to the network device, a specific layer in the initial channel information that is actually fed back to the network device, and the like.

The quantization precision configuration in the feedback mode based on scalar quantization may indicate quantization precision used for scalar quantization when the channel information #1 is obtained through scalar quantization.

The basis configuration in the feedback mode based on codebook-based quantization is a related configuration for representing a basis of the channel information #1, that is, a related configuration of a selected basis, when the channel information #1 is obtained through codebook-based quantization.

For example, the basis configuration in the feedback mode based on codebook-based quantization may indicate any one or more of the following: a quantity of bases selected in the feedback mode based on codebook-based quantization, a basis selected in the feedback mode based on codebook-based quantization, or the like. The basis may include a spatial domain basis and a frequency domain basis.

In other words, the basis configuration in the feedback mode based on codebook-based quantization may indicate one or more of the following: a quantity of bases selected during codebook-based quantization, a specific selected basis, and the like.

The non-zero coefficient configuration in the feedback mode based on codebook-based quantization is a related configuration for representing a non-zero coefficient of the channel information #1, that is, a related configuration of a selected non-zero coefficient, when the channel information #1 is obtained through codebook-based quantization.

For example, the non-zero coefficient configuration in the feedback mode based on codebook-based quantization may indicate any one or more of the following: a quantity of non-zero coefficients selected in the feedback mode based on codebook-based quantization, a non-zero coefficient selected in the feedback mode based on codebook-based quantization, non-zero coefficient quantization precision selected in the feedback mode based on codebook-based quantization, or the like.

In other words, the non-zero coefficient configuration in the feedback mode based on codebook-based quantization may indicate one or more of the following: a quantity of non-zero coefficients selected during codebook-based quantization, a specific selected non-zero coefficient, quantization precision used for quantizing the non-zero coefficient, and the like.

The first feedback configuration may be predefined, or may be configured by the network device, or may be determined by the terminal device.

A manner of determining the first feedback configuration is described below based on an example 1 to an example 3.

Example 1:

In the example 1, all of parameter values in the first feedback configuration are predefined or are configured by the network device. Channel information reported by the terminal device based on the first feedback configuration is the channel information #1. In this case, a size of the channel information #1 is predefined or is determined by the network device.

For example, any one or more of the following may be predefined or may be configured by the network device: the quantity of subbands of the channel information #1, an identifier of the subband of the channel information #1, the subband granularity of the channel information #1, the quantity of layers of the channel information #1, the identifier of the layer of the channel information #1, the quantization precision in the feedback mode based on scalar quantization, the quantity of bases selected in the feedback mode based on codebook-based quantization, an identifier of the basis in the feedback mode based on codebook-based quantization, the quantity of non-zero coefficients in the feedback mode based on codebook-based quantization, an identifier of the non-zero coefficient in the feedback mode based on codebook-based quantization, the non-zero coefficient quantization precision in the feedback mode based on codebook-based quantization, or the like.

For example, all of the parameter values in the first feedback configuration are predefined.

Alternatively, all of the parameter values in the first feedback configuration are configured by the network device.

Alternatively, a part of the parameter values in the first feedback configuration are predefined, and the other part of the parameter values are configured by the network device.

Optionally, before step 510, step 500 may further include: The terminal device receives indication information #1 sent by the network device, where the indication information #1 indicates the part or all of the parameter values in the first feedback configuration.

Example 2:

In the example 1, parameter values of a part of configuration items in the first feedback configuration are predefined or are configured by the network device, and parameter values of the other part of the configuration items are determined by the terminal device. The terminal device may report channel information based on the first feedback configuration.

In a possible implementation, a range of a size of the channel information #1 is predefined or is determined by the network device. The terminal device may determine a specific size of the channel information #1 within the range. The range of the size of the channel information #1 is a range of feedback overheads.

The following provides examples for description with reference to an example 2-1 to an example 2-3.

Example 2-1:

Ranges of the part or all of the configuration items in the first feedback configuration are configured by the network device or are predefined. The terminal device may determine parameter values of the part or all of the configuration items within the ranges of the part or all of the configuration items.

For example, ranges of all of the configuration items in the first feedback configuration are configured by the network device or are predefined, and the terminal device may determine parameter values of all of the configuration items within the ranges of the configuration items.

In this case, a range of a size of the channel information #1 is predefined or is determined by the network device. The terminal device may determine a specific size of the channel information #1 within the range.

For another example, ranges of a part of the configuration items in the first feedback configuration are configured by the network device or are predefined, and parameter values of the other part of the configuration items are determined by the network device or are predefined. The terminal device may determine parameter values of the part of the configuration items within the ranges of the part of the configuration items.

In this case, a range of a size of the channel information #1 is predefined or is determined by the network device. The terminal device may determine a specific size of the channel information #1 within the range.

Optionally, the method 500 may further include: The terminal device determines a parameter value of a first configuration item in the first feedback configuration based on a range of the first configuration item.

The terminal device determines the parameter value of the first configuration item based on the range of the first configuration item.

The "first" in the first configuration item merely indicates that a range of the configuration item is indicated by the network device or is predefined, but does not constitute other limitations. In other words, among configuration items in the first feedback configuration, a configuration item whose range is indicated by the network device or a configuration item whose range is predefined may be referred to as the first configuration item.

The first configuration item may include the part or all of the configuration items in the first feedback configuration.

For example, the first configuration item may include any one or more of the following: the subband configuration of the channel information #1, the layer configuration of the channel information #1, the quantization precision configuration in the feedback mode based on scalar quantization, the basis configuration in the feedback mode based on codebook-based quantization, the non-zero coefficient configuration in the feedback mode based on codebook-based quantization, or the like.

The terminal device may notify the network device of a parameter value determined by the terminal device.

Optionally, the method 500 may further include: The terminal device sends indication information #2 (an example of eleventh indication information) to the network device, where the indication information #2 indicates parameter values of the part or all of the configuration items. For example, the part or all of the configuration items may include the first configuration item.

For example, the indication information #2 may indicate one or more of the following: the subband of the channel information #1, the layer of the channel information #1, the quantization precision in the feedback mode based on scalar quantization, the basis in the feedback mode based on codebook-based quantization, the non-zero coefficient selected in the feedback mode based on codebook-based quantization, the non-zero coefficient quantization precision selected in the feedback mode based on codebook-based quantization, or the like.

In other words, the indication information #2 may indicate one or more of the following: a specific selected subband, a specific selected layer, quantization precision of scalar quantization, a specific selected basis, a specific selected non-zero coefficient, non-zero coefficient quantization precision, or the like.

The range of the first configuration item may be configured by the network device or may be predefined.

Optionally, before step 510, step 500 may further include: The terminal device receives indication information #3 (an example of ninth indication information) sent by the network device, where the indication information #3 indicates the range of the first configuration item.

The following describes the range of the first configuration item with reference to examples.

The first configuration item may include the subband configuration of the channel information #1.

A range of the subband configuration of the channel information #1 may include at least one of the following: a value range of the quantity of subbands of the channel information #1, a set of subband combinations of the channel information #1, or a value range of the subband granularity of the channel information #1.

The value range of the quantity of subbands may be a continuous value range or a discontinuous value range.

The terminal device may determine a specific value from the value range, to be specific, determine a selected quantity of subbands, and then determine a specific subband to be selected. The indication information #2 may indicate a subband selected by the terminal device.

For example, the value range of the quantity of subbands of the channel information #1 may be as follows: The quantity of subbands of the channel information #1 is greater than or equal to 1 and less than or equal to 3. In this case, a quantity of subbands selected by the terminal device from the initial channel information is greater than or equal to 1 and less than or equal to 3. For example, the terminal device selects one subband from the plurality of subbands of the initial channel information for feedback.

For another example, the value range of the quantity of subbands of the channel information #1 may be {2, 4}. In this case, a quantity of subbands selected by the terminal device from the initial channel information may be 2 or 4. For example, the terminal device selects four subbands from the plurality of subbands of the initial channel information for feedback.

An element in the set of the subband combinations of the channel information #1 may be a subband combination that can be selected by the terminal device. The terminal device may determine a specific element from the set, to be specific, determine a specific subband combination to be used. The indication information #2 may indicate a subband selected by the terminal device.

The combinations may include same or different quantities of subbands.

For example, a subband combination may be represented by a combination of numbers of subbands.

For example, the set of the subband combinations of the channel information #1 may be {(1, 3), (1, 4)}. In this case, a subband selected by the terminal device from the initial channel information may be a subband numbered 1 and a subband numbered 4, or a subband numbered 1 and a subband numbered 3. For example, the terminal device selects the subband numbered 1 and the subband numbered 4 from the initial channel information, and feeds back the subbands to the network device.

The value range of the subband granularity may be a continuous value range or a discontinuous value range. The terminal device may determine a specific value from the value range, to be specific, determine a selected subband granularity. The indication information #2 may indicate the subband granularity.

For example, the value range of the subband granularity of the channel information #1 may be as follows: The subband granularity of the channel information #1 is greater than or equal to 5 RBs. In this case, the terminal device may determine that the subband granularity of the channel information #1 is greater than or equal to 5 RBs. For example, the terminal device determines that the subband granularity of the channel information #1 is 6 RBs.

For another example, the value range of the subband granularity of the channel information #1 may be {4, 6}. In this case, the terminal device may determine that the subband granularity of the channel information #1 is 4 or 6. For example, the terminal device may determine that the subband granularity of the channel information #1 is 6 RBs.

It should be understood that the foregoing range is merely an example, and constitutes no limitation on the solution in this embodiment of this application.

The first configuration item may include the layer configuration of the channel information #1.

A range of the layer configuration of the channel information #1 may include at least one of the following: a value range of the quantity of layers of the channel information #1, or a set of layer combinations of the channel information #1.

The value range of the quantity of layers may be a continuous value range or a discontinuous value range. The terminal device may determine a specific value from the value range, to be specific, determine a selected quantity of layers, and then determine a specific layer to be selected. The indication information #2 may indicate a layer selected by the terminal device.

For example, the value range of the quantity of layers of the channel information #1 may be as follows: The quantity of layers of the channel information #1 is greater than or equal to 1 and less than or equal to 2. In this case, a quantity of layers selected by the terminal device from the initial channel information is greater than or equal to 1 and less than or equal to 2. For example, the terminal device selects one layer from the plurality of layers of the initial channel information for feedback.

For another example, the value range of the quantity of layers of the channel information #1 may be {1, 3}. In this case, a quantity of layers selected by the terminal device from the initial channel information may be 1 or 3. For example, the terminal device selects one layer from the plurality of layers of the initial channel information for feedback.

An element in the set of the layer combinations of the channel information #1 may be a layer combination that can be selected by the terminal device. The terminal device may determine a specific element from the set, to be specific, determine a specific layer combination to be used. The indication information #2 may indicate a layer selected by the terminal device.

The combinations may include same or different quantities of layers.

For example, a layer combination may be represented by a combination of numbers of layers.

For example, the set of the layer combinations of the channel information #1 may be {(1, 2), (1, 3)}. In this case, a layer selected by the terminal device from the initial channel information may be a layer numbered 1 and a layer numbered 2, or a layer numbered 1 and a layer numbered 3. For example, the terminal device selects the layer numbered 1 and the layer numbered 2 from the initial channel information, and feeds back the layers to the network device.

It should be understood that the foregoing range is merely an example, and constitutes no limitation on the solution in this embodiment of this application.

The first configuration item may include the quantization precision configuration in the feedback mode based on scalar quantization.

A range of the quantization precision configuration in the feedback mode based on scalar quantization may be a value range of quantization precision in the feedback mode based on scalar quantization.

The terminal device may determine a specific value from the value range, to be specific, determine quantization precision to be used. The indication information #2 may indicate the quantization precision to be used by the terminal device in the feedback mode based on scalar quantization.

For example, the value range of the quantization precision may be represented by a set of scalar quantization types.

For example, the value range of the quantization precision in the feedback mode based on scalar quantization may be {int8, float16}. In this case, the terminal device may determine that an element in the channel information #1 is in an int8 format or a float16 format. For example, the terminal device converts an element in the initial channel information into the int8 format.

It should be understood that the foregoing range is merely an example, and constitutes no limitation on the solution in this embodiment of this application.

The first configuration item may include the basis configuration in the feedback mode based on codebook-based quantization.

A range of the basis configuration in the feedback mode based on codebook-based quantization may include at least one of the following: a value range of the quantity of bases selected in the feedback mode based on codebook-based quantization, or a set of basis combinations in the feedback mode based on codebook-based quantization.

The value range of the quantity of bases in the feedback mode based on codebook-based quantization may be a continuous value range or a discontinuous value range. The terminal device may determine a specific value from the value range, to be specific, determine a selected quantity of bases, and then determine a specific basis to be selected. The indication information #2 may indicate a basis selected by the terminal device.

For example, the value range of the quantity of bases selected in the feedback mode based on codebook-based quantization may be represented by a value range of a quantity of selected spatial domain bases and a value range of a quantity of selected frequency domain bases.

For example, the value range of the quantity of bases selected in the feedback mode based on codebook-based quantization may include: The quantity of selected spatial domain bases is greater than or equal to 5 and less than or equal to 10, and the quantity of selected frequency domain bases is greater than or equal to 5 and less than or equal to 10. For example, the terminal device selects six spatial domain bases from spatial domain bases defined in a codebook, and selects eight frequency domain bases.

For another example, the value range of the quantity of bases selected in the feedback mode based on codebook-based quantization may include: The value range of the quantity of selected spatial domain bases is {6, 8, 10}, and the value range of the quantity of selected frequency domain bases is {6, 8, 10}. For example, the terminal device selects six spatial domain bases from spatial domain bases defined in a codebook, and selects eight frequency domain bases.

For example, the value range of the quantity of bases selected in the feedback mode based on codebook-based quantization may be represented by a set of combinations of quantities of selected spatial domain bases and quantities of selected frequency domain bases.

For example, the value range of the quantity of bases selected in the feedback mode based on codebook-based quantization may include {(6, 8), (8, 6), (6, 10)}. In each combination, the 1st item may be a quantity of selected spatial domain bases, and the 2nd item may be a quantity of selected frequency domain bases. The 1st combination is six spatial domain bases and eight frequency domain bases, and so on. For example, the terminal device selects the 1st combination from spatial domain bases defined in a codebook, to be specific, selects six spatial domain bases and eight frequency domain bases.

An element in the set of the basis combinations selected in the feedback mode based on codebook-based quantization may be a basis combination that can be selected by the terminal device. The terminal device may determine a specific element from the set, to be specific, determine a specific basis combination to be used. The indication information #2 may indicate a basis selected by the terminal device. For example, the indication information #2 may indicate a number of a combination. For another example, the indication information #2 may indicate a number of a basis.

The combinations may include same or different quantities of bases.

For example, a selected basis combination may be represented by a combination of numbers of bases.

For example, a selected set of basis combinations may include a selected set of spatial domain basis combinations and a selected set of frequency domain basis combinations.

For example, the set of the spatial domain basis combinations may be {(1, 2, 3), (1, 3, 4)}, and the set of the frequency domain basis combinations may be {(2, 3, 4), (1, 2, 4)}. The terminal device selects the 1st element from the set of the spatial domain basis combinations, and selects the 2nd element from the set of the frequency domain basis combinations. To be specific, the terminal device selects a spatial domain basis numbered 1, a spatial domain basis numbered 2, a spatial domain basis numbered 3, a frequency domain basis numbered 1, a frequency domain basis numbered 2, and a frequency domain basis numbered 4.

For example, a selected set of basis combinations may include a set of combinations of spatial domain bases and frequency domain bases.

For example, the set of the basis combinations may be {[(1, 2, 3), (2, 3, 4)], [(1, 3, 4), (1, 2, 4)]}. The 1st item in each element is a spatial domain basis combination, and the 2nd item in each element is a frequency domain basis combination. The terminal device selects the 1st element from the set. To be specific, the terminal device selects a spatial domain basis numbered 1, a spatial domain basis numbered 2, a spatial domain basis numbered 3, a frequency domain basis numbered 2, a frequency domain basis numbered 3, and a frequency domain basis numbered 4.

It should be understood that the foregoing range is merely an example, and constitutes no limitation on the solution in this embodiment of this application.

The first configuration item may include the non-zero coefficient configuration in the feedback mode based on codebook-based quantization.

A range of the non-zero coefficient configuration in the feedback mode based on codebook-based quantization may include at least one of the following: a value range of a quantity of non-zero coefficients selected in the feedback mode based on codebook-based quantization, or a value range of non-zero coefficient quantization precision selected in the feedback mode based on codebook-based quantization.

The value range of the quantity of non-zero coefficients selected in the feedback mode based on codebook-based quantization may be a continuous value range or a discontinuous value range. The terminal device may determine a specific value from the value range, to be specific, determine a selected quantity of non-zero coefficients, and then determine a specific non-zero coefficient to be selected. The indication information #2 may indicate a non-zero coefficient selected by the terminal device.

For example, the value range of the quantity of non-zero coefficients selected in the feedback mode based on codebook-based quantization may include: The quantity of non-zero coefficients is greater than or equal to 5 and less than or equal to 10. For example, the terminal device selects six non-zero coefficients from coefficients corresponding to selected frequency domain bases and spatial domain bases.

For another example, the value range of the quantity of non-zero coefficients selected in the feedback mode based on codebook-based quantization may include: The value range of the quantity of non-zero coefficients is {6, 8, 10}. For example, the terminal device selects six non-zero coefficients from coefficients corresponding to selected frequency domain bases and spatial domain bases.

The first configuration item may include non-zero coefficient quantization precision selected in the feedback mode based on codebook-based quantization.

A range of the non-zero coefficient quantization precision selected in the feedback mode based on codebook-based quantization may be a value range of the non-zero coefficient quantization precision selected in the feedback mode based on codebook-based quantization.

The terminal device may determine a specific value from the value range, to be specific, determine quantization precision to be used. The indication information #2 may indicate non-zero coefficient quantization precision used by the terminal device in the feedback mode based on codebook-based quantization.

For example, the value range of the quantization precision may be represented by a set of scalar quantization types.

For example, the value range of the non-zero coefficient quantization precision in the feedback mode based on codebook-based quantization may be {int8, float16}. In this case, the terminal device may determine to convert the non-zero coefficient into an int8 format or a float16 format.

It should be understood that the foregoing range is merely an example, and constitutes no limitation on the solution in this embodiment of this application.

Example 2-2:

A correspondence between parameter values of the part or all of the configuration items in the first feedback configuration may be predefined or may be determined by the network device. The terminal device may determine specific values of a part of parameters in the first feedback configuration, and determine specific values of corresponding parameters based on the correspondence between the parameter values of the part or all of the configuration items.

For example, a correspondence between parameter values of all of the configuration items in the first feedback configuration may be predefined or may be determined by the network device. The terminal device may determine specific values of a part of parameters in the first feedback configuration, and determine specific values of corresponding parameters based on the correspondence between all of the configuration items.

In this case, a range of a size of the channel information #1 is predefined or is determined by the network device. The terminal device may determine a specific size of the channel information #1 within the range.

Optionally, the method 500 may include: The terminal device determines parameter values of a plurality of configuration items in the first feedback configuration based on a correspondence between the parameter values of the plurality of configuration items.

Specifically, a parameter value of a second configuration item in the first feedback configuration is based on a parameter value of a third configuration item in the first feedback configuration and the correspondence between the parameter values of the plurality of configuration items in the first feedback configuration, and the third configuration item and the second configuration item belong to the plurality of configuration items.

The terminal device may determine the parameter value of the second configuration item based on the parameter value of the third configuration item and the correspondence.

For example, the parameter value of the third configuration item may be determined by the terminal device.

To be specific, the terminal device determines a part of parameter values of the plurality of configuration items, for example, the parameter value of the third configuration item; and determines a corresponding parameter value, for example, the parameter value of the second configuration item, based on the part of parameter values and the correspondence between the parameter values of the plurality of configuration items.

For example, the plurality of configuration items may include at least two of the following: the subband configuration of the channel information #1, the layer configuration of the channel information #1, the quantization precision configuration in the feedback mode based on scalar quantization, the basis configuration in the feedback mode based on codebook-based quantization, the non-zero coefficient configuration in the feedback mode based on codebook-based quantization, or the like.

The terminal device may notify the network device of a parameter value determined by the terminal device.

Optionally, the method 500 may further include: The terminal device sends indication information #2 to the network device, where the indication information #2 indicates parameter values of the part or all of the configuration items. For example, the part or all of the configuration items may include the plurality of configuration items.

The correspondence between the parameter values of the plurality of configuration items may be predefined or may be configured by the network device.

Optionally, before step 510, step 500 may further include: The terminal device receives indication information #4 (an example of tenth indication information) sent by the network device, where the indication information #4 indicates the correspondence between the parameter values of the plurality of configuration items.

Table 3 shows an example correspondence between a parameter value of the layer configuration and a parameter value of the subband configuration. Specifically, Table 3 shows an example correspondence between the quantity of layers of the channel information #1, a quantity of ports, and the quantity of subbands of the channel information #1. The quantity of ports may be configured by the network device.

Table 3

| Number | Quantity of ports | Quantity of layers fed back to the network device | Quantity of subbands fed back to the network device |
|--------|-------------------|---------------------------------------------------|-----------------------------------------------------|
| 1 | 16 | 1 | 16 |
| 2 | 16 | 2 | 8 |
| 3 | 32 | 1 | 8 |
| 4 | 32 | 2 | 4 |

For example, the terminal device may determine the quantity of layers of the channel information #1, and determine the quantity of subbands of the channel information #1 based on the quantity of layers and the correspondence shown in Table 3. For example, the quantity of ports that is configured by the network device is 16; and the terminal device determines that the quantity of layers of the channel information #1 is 1, and determines, based on the correspondence shown in Table 3, that the quantity of subbands of the channel information #1 is 16.

Alternatively, the terminal device may determine the quantity of subbands of the channel information #1, and determine the quantity of layers of the channel information #1 based on the quantity of subbands and the correspondence shown in Table 3. For example, the quantity of ports that is configured by the network device is 32; and the terminal device determines that the quantity of subbands of the channel information #1 is 8, and determines, based on the correspondence shown in Table 3, that the quantity of layers of the channel information #1 is 1.

It should be understood that Table 3 is merely an example, and constitutes no limitation on the solution in this embodiment of this application. For example, the plurality of configuration items may alternatively be other configuration items. For example, in this embodiment of this application, the correspondence between the parameter values of the plurality of configuration items may alternatively be a correspondence between parameter values of configuration items of another quantity. For example, the correspondence between the parameter values of the plurality of configuration items may be a correspondence between the quantity of layers of the channel information #1, the quantity of subbands of the channel information #1, and the quantization precision in the feedback mode based on scalar quantization. For another example, the correspondence between the parameter values of the plurality of configuration items may be a correspondence between the quantity of layers of the channel information #1, the quantity of non-zero coefficients selected in the feedback mode based on codebook-based quantization, and the non-zero coefficient quantization precision selected in the feedback mode based on codebook-based quantization. For another example, the correspondence between the parameter values of the plurality of configuration items may include a correspondence between the quantity of layers of the channel information #1 and a layer combination of the channel information #1.

For example, the indication information #2 may indicate a correspondence, used by the terminal device, in the correspondence between the parameter values of the plurality of configuration items. For example, a number of the correspondence is predefined, or a number of the correspondence is configured by the network device. The indication information #2 may include the number of the correspondence used by the terminal device. The network device may determine, based on the number of the correspondence used by the terminal device, a parameter value used by the terminal device. Table 3 is used as an example. The quantity of ports that is configured by the network device is 16. The terminal device determines that a quantity of layers to be fed back to the network device is 1, and determines, based on a correspondence 1 shown in Table 3, that a quantity of subbands to be fed back to the network device is 16. The terminal device sends a number of the 1st correspondence in Table 3, that is, a number 1, to the network device, to notify the network device that the terminal device uses the correspondence 1. The numbering manner in Table 3 is merely an example, and constitutes no limitation on the solution in this embodiment of this application.

For descriptions of the indication information #2, refer to the example 2-1. Details are not described herein again.

The example 2-1 and the example 2-2 may alternatively be used in combination. For example, the third configuration item may be the first configuration item, and the parameter value of the third configuration item may be determined based on a range of the third configuration item. For specific descriptions, refer to the example 2-1.

Example 2-3:

A precision range of the channel information #1 is configured by the network device or is predefined. The terminal device may determine, within the precision range of the channel information #1, parameter values of the part or all of the configuration items in the first feedback configuration.

In this case, a range of a size of the channel information #1 is predefined or is determined by the network device. The terminal device may determine a specific size of the channel information #1 within the range.

Optionally, the method 500 may further include: The terminal device determines parameter values of the part or all of the configuration items in the first feedback configuration based on a threshold #1 (an example of a fourth threshold). Precision of the channel information #1 is greater than or equal to the threshold #1.

The terminal device may notify the network device of a parameter value determined by the terminal device.

Optionally, the method 500 may further include: The terminal device sends indication information #2 to the network device, where the indication information #2 indicates parameter values of the part or all of the configuration items.

For descriptions of the indication information #2, refer to the example 2-1. Details are not described herein again.

Optionally, before step 510, step 500 may further include: The terminal device receives indication information #5 (an example of eighth indication information) sent by the network device, where the indication information #5 indicates the precision range of the channel information #1, for example, indicates the threshold #1.

Precision of channel information may be indicated by a correlation or an error between the channel information and reference channel information of the channel information.

The reference channel information of the channel information may be initial channel information corresponding to the channel information, to be specific, channel information obtained by the terminal device through measurement.

A higher correlation between the channel information and the reference channel information of the channel information indicates higher precision of the channel information.

A smaller error between the channel information and the reference information of the channel information indicates higher precision of the channel information.

For example, the precision of the channel information #1 may be represented by a correlation between the channel information #1 and the initial channel information.

For example, the precision of the channel information #1 may be a generalized cosine similarity (generalized cosine similarity, GCS) or a squared generalized cosine similarity (squared generalized cosine similarity, SGCS) between the channel information #1 and the initial channel information.

The SGCS is used as an example. For example, the threshold #1 is 0.9, and the precision range of the channel information #1 is a range of SGCS≥0.9. The terminal device may determine the first feedback configuration based on an actual status of the channel information #1, for example, overheads of the channel information #1, importance of each part of the initial channel information, and a similarity between different parts of the initial channel information, to enable the SGCS between the channel information #1 and the initial channel information to be greater than or equal to 0.9.

For example, the precision of the channel information #1 may be represented by an error between the channel information #1 and the initial channel information.

For example, the precision of the channel information #1 may be represented by a normalized mean square error (normalized mean square error, NMSE) between the channel information #1 and the initial channel information.

The precision of the channel information #1 may alternatively be represented by an error between the channel information #1 and the initial channel information. The precision range of the channel information #1 may be as follows: The error between the channel information #1 and the initial channel information is less than or equal to a threshold #2. In this case, the indication information #5 may alternatively indicate the threshold #2.

If a feedback configuration is preset, for example, the network device indicates a feedback configuration #1, the terminal device may further determine whether to adjust the feedback configuration #1. The terminal device may further send indication information to the network device, to notify the network device of whether the terminal device has adjusted the feedback configuration #1. If the feedback configuration #1 is adjusted, the indication information may indicate an adjusted feedback configuration #1, namely, the first feedback configuration.

For example, the terminal device may determine, based on overheads of the channel information #1 in the feedback configuration #1, whether to adjust the feedback configuration #1. If the overheads of the channel information #1 in the feedback configuration #1 exceed the maximum code length supported by the UCI, the feedback configuration #1 is adjusted within the precision range of the channel information #1, to make the overheads of the channel information #1 fall within a code length range supported by the UCI. If the overheads of the channel information #1 in the feedback configuration #1 are within a code length supported by the UCI, the feedback configuration #1 may be used as the first feedback configuration.

The plurality of implementations in the example 2 may be used independently or in combination.

For example, the example 2-1 and the example 2-2 are combined. A correspondence between parameter values of a part of configuration items in the first feedback configuration is configured by the network device or is predefined, and ranges of a plurality of configuration items in the first feedback configuration other than the part of configuration items are configured by the network device or are predefined.

For example, the example 2-1 and the example 2-3 are combined. Ranges of a part of configuration items in the first feedback configuration are configured by the network device or are predefined, and the precision range of the channel information #1 is configured by the network device or is predefined.

For example, the example 2-2 and the example 2-3 are combined. A correspondence between parameter values of a part of configuration items in the first feedback configuration is configured by the network device or is predefined, and the precision range of the channel information #1 is configured by the network device or is predefined.

For example, the example 2-1, the example 2-2, and the example 2-3 are combined. A correspondence between parameter values of a part of configuration items in the first feedback configuration is configured by the network device or is predefined, ranges of a plurality of configuration items in the first feedback configuration other than the part of configuration items are configured by the network device or are predefined, and the precision range of the channel information #1 is configured by the network device or is predefined.

Example 3:

The terminal device determines the first feedback configuration, and then reports channel information based on the first feedback configuration.

In the example 3, the terminal device has full freedom. For example, the terminal device may determine, based on an actual status of the channel information #1, for example, overheads of the channel information #1, importance of each part of the initial channel information, and a similarity between different parts of the initial channel information, to adjust feedback overheads in one or more of the foregoing manner 1 to manner 4, that is, the terminal device may determine the first feedback configuration.

Optionally, the method 500 may further include: The terminal device sends indication information #2 to the network device, where the indication information #2 indicates parameter values of a part or all of configuration items in the first feedback configuration.

If a feedback configuration is preset, for example, the network device indicates a feedback configuration #1, the terminal device may further determine whether to adjust the feedback configuration #1. The terminal device may further send indication information to the network device, to notify the network device of whether the terminal device has adjusted the feedback configuration #1. If the feedback configuration #1 is adjusted, the indication information may indicate an adjusted feedback configuration #1, namely, the first feedback configuration.

For example, the terminal device may determine, based on overheads of the channel information #1 in the feedback configuration #1, whether to adjust the feedback configuration #1. If the overheads of the channel information #1 in the feedback configuration #1 exceed the maximum code length supported by the UCI, the feedback configuration #1 is adjusted, to make the overheads of the channel information #1 fall within a code length range supported by the UCI. If the overheads of the channel information #1 in the feedback configuration #1 are within a code length range supported by the UCI, the feedback configuration #1 may be used as the first feedback configuration.

In this embodiment of this application, the channel information #1 may be transmitted by using one piece of UCI.

In the solution in this embodiment of this application, the first feedback configuration enables feedback overheads of channel information to fall within the code length range supported by the UCI, and ensures precision of channel information fed back to the network device. In this way, the terminal device reports channel information based on the first feedback configuration, to help ensure that the network device can obtain high-precision channel information by using the UCI.

FIG. 9 is a schematic flowchart of another communication method according to an embodiment of this application.

As shown in FIG. 9, the method 700 may include the following steps.

710: A terminal device generates channel information #3 (an example of first channel information), where the channel information #3 includes K segments, and K is an integer greater than 1. A type of the channel information #3 is ground truth channel information. A length of each segment is less than or equal to a threshold #3 (an example of a first threshold). The channel information #3 is any one of the following: a channel response, an eigenvector matrix of a channel, a precoding matrix, an RSRP, or an SINR.

720: The terminal device transmits a part or all of K pieces of UCI to a network device, where the K pieces of UCI respectively correspond to the K segments.

In this embodiment of this application, the UCI is information used before encoding. One piece of UCI may be understood as one UCI bit sequence used before encoding, to be specific, a bit sequence on which channel coding is to be independently performed. After channel coding is performed on the K pieces of UCI separately, K pieces of encoded UCI may be transmitted by using an uplink resource.

For example, the uplink resource may be a PUCCH or a PUSCH.

That the K pieces of UCI respectively correspond to the K segments indicates that each segment is transmitted as independent UCI, in other words, each piece of UCI includes content of one segment. Channel coding may be performed on the K segments separately. Transmitting the K pieces of UCI is transmitting the K segments by using the K pieces of UCI respectively. Lengths of the K segments may be understood as quantities of bits of the K segments, to be specific, quantities of bits in the K pieces of UCI corresponding to the K segments.

For example, the channel information #3 may be a part 2 in a CSI report.

For example, the threshold #3 is related to a maximum code length supported by the UCI. In other words, the threshold #3 is determined based on the maximum code length supported by the UCI.

The maximum code length supported by the UCI is a maximum code length supported by UCI that has not undergone channel coding.

Optionally, the threshold #3 is less than or equal to the maximum code length supported by the UCI.

For example, the threshold #3 may be predefined or may be configured by the network device.

Optionally, the network device may receive indication information #10 (an example of first indication information) sent by the network device, and the indication information #10 indicates the threshold #3.

In the solution in this embodiment of this application, the ground truth channel information is divided into a plurality of segments, and is transmitted by using a plurality of pieces of UCI, so that the network device can obtain channel information with high feedback overheads, namely, high-precision channel information.

The ground truth channel information has high precision, and correspondingly, also has high feedback overheads. The feedback overheads may exceed the maximum code length supported by the UCI. In the solution in this embodiment of this application, a length of each segment may be less than the maximum code length supported by the UCI, so that the segments can be transmitted by using a plurality of pieces of UCI.

For example, the channel information #3 may be obtained by performing scalar quantization on initial channel information.

For example, the channel information #3 may be obtained by performing codebook-based quantization on initial channel information.

For a specific feedback mode, refer to the descriptions in the method 500. Details are not described herein again. Alternatively, the channel information #3 may be obtained in another feedback mode.

The K segments of the channel information #3 may also be referred to as K parts of the channel information #3. To be specific, the channel information #3 is divided into K parts.

Lengths of the K segments may be the same or different. To be specific, the K pieces of UCI may include same or different quantities of bits.

The following describes a manner of division into the K segments with reference to an example 71 to an example 73.

Example 71:

Optionally, the K segments may be determined based on content of the K segments.

To be specific, the terminal device may segment the channel information #3 based on specific information included in each segment.

For example, content of each of the K segments may be predefined or may be configured by the network device.

In a possible implementation, the channel information #3 may be obtained by performing scalar quantization on the initial channel information.

Optionally, a dimension of the channel information #3 obtained through scalar quantization is the same as a dimension of channel information that has not undergone scalar quantization.

For example, the channel information #3 may be a two-dimensional matrix with a dimension of $F \times N_{tx}$. $F$ indicates bandwidth. $N_{tx}$ indicates a quantity of antenna ports of the network device.

For example, the channel information #3 may be a three-dimensional matrix with a dimension of $F \times N_{tx} \times N_{rank}$. $N_{rank}$ indicates a quantity of ranks of an eigenvector.

For example, the channel information #3 may be a three-dimensional matrix with a dimension of $F \times N_{tx} \times N_{rx}$. $N_{rx}$ indicates a quantity of antenna ports of the terminal device.

The content of each of the K segments may be an element in the foregoing matrix. The terminal device may segment the channel information #3 based on a specific element included in each segment.

For example, the content of each segment may be indicated by a dimension range corresponding to the segment. The dimension range corresponding to the segment is a range, in each dimension, of content included in the segment. The content of each segment is within the dimension range corresponding to the segment.

A dimension range corresponding to each segment may be predefined or may be configured by the network.

For example, the dimension range may be a continuous range or a discontinuous range.

An example in which the channel information #3 is a three-dimensional matrix with a dimension of $F \times N_{tx} \times N_{rank}$ is below for description. For ease of description, an example in which indexes of dimensions of the channel information #3 are consecutive indexes is used below for description.

For example, a dimension range corresponding to a segment m among the K segments may include at least one of the following: an $x_m$th subband to an $(x_{m+1}-1)$th subband, a $y_m$th antenna port of the network device to a $(y_{m+1}-1)$th antenna port of the network device, or a $z_m$th stream to a $(z_{m+1}-1)$th stream. $x_m$, $x_{m+1}-1$, $y_m$, $x_{m+1}-1$, $z_m$, and $z_{m+1}-1$ are positive integers. $x_m$ indicates a minimum value of a subband index in the segment m, $y_m$ indicates a minimum value of an antenna port index of the network device in the segment m, and $z_m$ indicates a minimum value of a stream index in the segment m.

For example, the dimension range corresponding to the segment m among the K segments may include the $x_m$th subband to the $(x_{m+1}-1)$th subband, the $y_m$th antenna port of the network device to the $(y_{m+1}-1)$th antenna port of the network device, and the $z_m$th stream to the $(z_{m+1}-1)$th stream. The segment m includes an element, in the channel information #3, that corresponds to a subband index within $[x_m, x_{m+1}-1]$, an antenna port index of the network device within $[y_m, y_{m+1}-1]$, and a stream index within $[z_m, z_{m+1}-1]$.

For another example, a dimension range corresponding to a segment m among the K segments may include at least one of the following: $x_m'$ subbands starting from an $x_m$th subband, $y_m'$ antenna ports of the network device that start from a $y_m$th antenna port of the network device, or $z_m'$ streams starting from a $z_m$th stream. $x_m'$, $y_m'$, and $z_m'$ are positive integers.

The foregoing descriptions are merely example manners of representing a continuous range. A dimension range may alternatively be represented in another manner. This is not limited in this embodiment of this application. For example, the dimension range corresponding to the segment m may include at least one of the following: a set of subbands, a set of antenna ports of the network device, or a set of streams. Elements in the set may be inconsecutive.

Alternatively, content of each of the K segments may be determined by the terminal device.

For example, for the channel information #3 obtained through scalar quantization, the terminal device may determine a dimension range corresponding to each segment.

In this case, the terminal device may notify the network device of the dimension range corresponding to each segment.

Further, an order of elements in a segment may be predefined or may be configured by the network device. The order of the elements in the segment is an order of elements in corresponding UCI.

For example, in a segment, elements in the channel information #3 that belong to the segment are sequentially sorted in the following order: an ascending order of frequency domain indexes, an ascending order of antenna port indexes of the network device, and an ascending order of stream indexes.

For example, for elements in the segment m, frequency domain indexes are $x_m$ to $x_{m+1}-1$, antenna port indexes of the network device are $y_m$ to $y_{m+1}-1$, and stream indexes are $z_m$ to $z_{m+1}-1$. After being sequentially sorted in ascending order of the frequency domain indexes, in ascending order of the antenna port indexes of the network device, and in ascending order of the stream indexes, the elements in the segment m may be expressed as follows: $(x_m, y_m, z_m)$, $(x_m+1, y_m, z_m)$, ..., $(x_{m+1}-1, y_m, z_m)$, $(x_m, y_m+1, z_m)$, $(x_m+1, y_m+1, z_m)$, ..., $(x_{m+1}-1, y_m+1, z_m)$, $(x_m, y_m+2, z_m)$, $(x_m+1, y_m+2, z_m)$, ..., $(x_{m+1}-1, y_m+2, z_m)$, ..., $(x_{m+1}-1, y_{m+1}-1, z_m)$, $(x_m, y_m, z_m+1)$, $(x_m+1, y_m, z_m+1)$, ..., $(x_{m+1}-1, y_m, z_m+1)$, $(x_m, y_m+1, z_m+1)$, $(x_m+1, y_m+1, z_m+1)$, ..., $(x_{m+1}-1, y_m+1, z_m+1)$, $(x_m, y_m+2, z_m+1)$, $(x_m+1, y_m+2, z_m+1)$, ..., $(x_{m+1}-1, y_m+2, z_m+1)$, ..., $(x_{m+1}-1, y_{m+1}-1, z_m+1)$, ..., $(x_{m+1}-1, y_{m+1}-1, z_{m+1}-1)$.

For another example, in a segment, elements in the channel information #3 that belong to the segment are sequentially sorted in the following order: an ascending order of antenna port indexes of the network device, an ascending order of frequency domain indexes, and an ascending order of stream indexes.

For another example, in a segment, elements in the channel information #3 that belong to the segment are sequentially sorted in the following order: a descending order of antenna port indexes of the network device, a descending order of frequency domain indexes, and a descending order of stream indexes.

It should be understood that the foregoing descriptions are merely examples, and constitute no limitation on the solution in this embodiment of this application.

Alternatively, an order of elements in a segment may be determined by the terminal device. In this case, the terminal device may notify the network device of an order of elements in a segment.

In a possible implementation, the channel information #3 may be obtained by performing codebook-based quantization on the initial channel information.

For the channel information #3 obtained through codebook-based quantization, content of the channel information #3 may include at least one of the following: basis selection information, coefficient selection information, coefficient phase information, coefficient amplitude information, or the like.

The basis selection information indicates a specific selected basis. The coefficient selection information indicates a specific selected non-zero coefficient. The coefficient amplitude information and the coefficient phase information may be collectively referred to as coefficient value information. The coefficient value information indicates a value of a non-zero coefficient.

For example, the channel information #3 may include any one or more of the following: $i_{1,1}$, $i_{1,2}$, $i_{1,8,l}$, $i_{2,3,l}$, $i_{1,5}$, $i_{i,6,l}$, $i_{2,4,l}$, $i_{2,5,l}$, or $i_{1,7,l}$. $i_{1,1}$ indicates spatial domain basis selection information, $i_{1,2}$ indicates oversampling selection information, $i_{1,8,l}$ indicates a coefficient with a largest value among non-zero coefficients at each layer, $i_{2,3,l}$ indicates reference amplitude information, $i_{1,5}$ indicates common frequency domain basis selection information, $i_{i,6,l}$ indicates frequency domain basis selection information at each layer, $i_{2,4,l}$ indicates amplitude information of each coefficient at each layer, $i_{2,5,l}$ indicates phase information of each coefficient at each layer, and $i_{1,7,l}$ indicates non-zero coefficient selection information at each layer. The basis selection information may include $i_{1,1}$, $i_{1,2}$, $i_{1,5}$, and $i_{1,6,l}$. The coefficient selection information may include $i_{1,7,l}$. The coefficient phase information may include $i_{2,5,l}$. The coefficient amplitude information may include $i_{2,4,l}$.

Content of each segment may be predefined or may be configured by the network. To be specific, specific information that is in the channel information #3 and that is included in each segment is determined in a predefined manner or through configuration by the network.

For example, one segment may include one or more content items.

For example, among the K segments, a segment 1 may include basis selection information and coefficient selection information, a segment 2 may include coefficient amplitude information, and a segment 3 may include coefficient phase information.

For example, one segment may alternatively include a part of content of one content item. To be specific, one content item may be distributed to a plurality of segments.

For example, among the K segments, a segment 1 may include basis selection information and coefficient selection information, a segment 2 may include coefficient amplitude information, a segment 3 may include a part of coefficient phase information, and a segment 4 may include another part of the coefficient phase information.

It should be understood that the foregoing content of the segments is merely an example, and constitutes no limitation on the solution in this embodiment of this application.

Alternatively, content of each of the K segments may be determined by the terminal device.

In this case, the terminal device may notify the network device of the content of each segment.

Further, an order of content of a segment may be predefined or may be configured by the network device.

For example, a segment 1 among the K segments includes basis selection information and coefficient selection information, and an order of content of the segment 1 may be as follows: spatial domain basis selection information, oversampling selection information, common frequency domain basis selection information, frequency domain basis selection information at each layer, a coefficient with a largest value among non-zero coefficients at each layer, and non-zero coefficient selection information at each layer.

Alternatively, an order of the plurality of content items may be determined by the terminal device. In this case, the terminal device may notify the network device of the order of the plurality of content items.

Example 72:

Optionally, step 710 may include: The terminal device generates the channel information #3, and segments the channel information #3 based on a length of a segment, or segments the channel information #3 based on K. Content of the channel information #3 is sorted in a first order.

In other words, the content of the channel information #3 is sorted in the first order, and then the channel information #3 is segmented based on a length of each segment or based on a quantity K of segments.

The first order may be predefined or may be configured by the network device.

The following describes the first order with reference to examples.

In a possible implementation, the channel information #3 may be obtained by performing scalar quantization on the initial channel information.

For the channel information #3 obtained through scalar quantization, content of the channel information #3 may include an element of the foregoing matrix. The first order may be determined based on an index of each dimension of the matrix.

For example, the channel information #3 is a three-dimensional matrix with a dimension of $F \times N_{tx} \times N_{rank}$. For example, elements in the three-dimensional matrix are sequentially sorted according to the following rule (an example of the first order): an ascending order of frequency domain indexes, an ascending order of antenna port indexes of the network device, and an ascending order of stream indexes.

For example, the frequency domain indexes are 1 to F, the antenna port indexes of the network device are 1 to $N_{tx}$, and the stream indexes are 1 to $N_{rank}$. After being sorted in the first order, the channel information #3 may be expressed as follows: (1, 1, 1), (2, 1, 1), ..., (F, 1, 1), (1, 2, 1), (2, 2, 1), ..., (F, 2, 1), (1, 3, 1), (2, 3, 1), ..., (F, 3, 1), ..., (F, $N_{tx}$, 1), (1, 1, 2), (2, 1, 2), ..., (F, 1, 2), (1, 2, 2), (2, 2, 2), ..., (F, 2, 2), (1, 3, 2), (2, 3, 2), ..., (F, 3, 2), ..., (F, $N_{tx}$, 2), ..., (F, $N_{tx}$, $N_{rank}$).

(1, 1, 1) indicates an element corresponding to a frequency domain index 1, an antenna port index 1 of the network device, and a stream index 1. (2, 1, 1) indicates an element corresponding to a frequency domain index 2, the antenna port index 1 of the network device, and the stream index 1. By analogy, (F, $N_{tx}$, $N_{rank}$) indicates an element corresponding to a frequency domain index F, an antenna port index $N_{tx}$ of the network device, and a stream index $N_{rank}$.

For example, the channel information #3 is a two-dimensional matrix with a dimension of $F \times N_{tx}$. For example, elements in the two-dimensional matrix are sequentially sorted according to the following rule (an example of the first order): an ascending order of frequency domain indexes, and an ascending order of antenna port indexes of the network device.

For example, the channel information #3 is a three-dimensional matrix with a dimension of $F \times N_{tx} \times N_{rx}$. For example, elements in the three-dimensional matrix are sequentially sorted according to the following rule (an example of the first order): an ascending order of frequency domain indexes, an ascending order of antenna port indexes of the network device, and an ascending order of antenna port indexes of the terminal device.

It should be understood that the foregoing descriptions are merely examples, and the first order may alternatively be another order. This is not limited in this embodiment of this application.

In a possible implementation, the channel information #3 may be obtained by performing codebook-based quantization on the initial channel information.

For the channel information #3 obtained through codebook-based quantization, content of the channel information #3 may include at least one of the following: basis selection information, coefficient selection information, coefficient value information, and the like.

For example, the channel information #3 may include any one or more of the following: $i_{1,1}$, $i_{1,2}$, $i_{1,8,l}$, $i_{2,3,l}$, $i_{1,5}$, $i_{i,6,l}$, $i_{2,4,l}$, $i_{2,5,l}$, or $i_{1,7,l}$. $i_{1,1}$ indicates spatial domain basis selection information, $i_{1,2}$ indicates oversampling selection information, $i_{1,8,l}$ indicates a coefficient with a largest value among non-zero coefficients at each layer, $i_{2,3,l}$ indicates reference amplitude information, $i_{1,5}$ indicates common frequency domain basis selection information, $i_{i,6,l}$ indicates frequency domain basis selection information at each layer, $i_{2,4,l}$ indicates amplitude information of each coefficient at each layer, $i_{2,5,l}$ indicates phase information of each coefficient at each layer, and $i_{1,7,l}$ indicates non-zero coefficient selection information at each layer.

For example, the first order may be the following order: the spatial domain basis selection information, the oversampling selection information, the coefficient with the largest value among the non-zero coefficients at each layer, the reference amplitude information at each layer, the common frequency domain basis selection information, the frequency domain basis selection information at each layer, a part of the amplitude information of each coefficient at each layer, a part of the phase information of each coefficient at each layer, a part of the non-zero coefficient selection information at each layer, another part of the amplitude information of each coefficient at each layer, another part of the phase information of each coefficient at each layer, and another part of the non-zero coefficient selection information at each layer.

For another example, the first order may be the following order: the spatial domain basis selection information, the oversampling selection information, the common frequency domain basis selection information, the frequency domain basis selection information at each layer, the non-zero coefficient selection information at each layer, the coefficient with the largest value among the non-zero coefficients at each layer, the reference amplitude information, the amplitude information of each coefficient at each layer, and the phase information of each coefficient at each layer.

It should be understood that the first order is merely an example of an order, and constitutes no limitation on the content of the channel information #3. For example, if the channel information #3 does not include one of the foregoing content, the content may be ignored when the channel information #3 is sorted in the first order. For example, the channel information #3 includes the spatial domain basis selection information, the oversampling selection information, the coefficient with the largest value among the non-zero coefficients at each layer, the reference amplitude information, the common frequency domain basis selection information, the frequency domain basis selection information at each layer, the amplitude information of each coefficient at each layer, and the phase information of each coefficient at each layer. The first order may be as follows: the spatial domain basis selection information, the oversampling selection information, the common frequency domain basis selection information, the frequency domain basis selection information at each layer, the coefficient with the largest value among the non-zero coefficients at each layer, the reference amplitude information, the amplitude information of each coefficient at each layer, and the phase information of each coefficient at each layer.

For example, the first order may alternatively be determined by the terminal device. In this case, the terminal device may notify the network device of the first order.

The following describes a manner of dividing, by the terminal device, the channel information #3 into a plurality of segments based on a length of a segment with reference to examples.

In this case, a value of K may be determined based on a total length of the channel information #3 and a length of each segment. The total length of the channel information #3 is a quantity of bits for representing the channel information #3.

In a possible implementation, the length of the segment may be predefined. The length of each segment is less than or equal to the maximum code length supported by the UCI.

For example, the threshold #3 may indicate lengths of at least K-1 segments among the K segments. The threshold #3 may be predefined.

For example, the lengths of the at least K-1 segments among the K segments are the threshold #3.

The terminal device may divide the channel information #3 based on the threshold #3, where the lengths of the K-1 segments are the threshold #3, and a length of a remaining segment may be determined based on the total length of the channel information #3 and a total length of the K-1 segments. The length of the remaining segment is less than or equal to the threshold #3.

K may be determined based on the threshold #3 and the total length of the channel information #3. For example, K-1 may be a quotient of q divided by Q. q indicates the total length of the channel information #3. N is an integer greater than 1. The length of the remaining segment is $q - Q \times (K-1)$, to be specific, a remainder of q divided by Q. Q indicates a length of each of the K-1 segments, and Q is a positive integer. q indicates the total length of the channel information #3, and q is an integer greater than 1.

In another possible implementation, the length of the segment may be configured by the network device.

For example, the threshold #3 may indicate lengths of at least K-1 segments among the K segments. The threshold #3 may be configured by the network device. For a specific manner of segmentation, refer to the foregoing descriptions. Details are not described herein again.

For example, the method 700 may further include: The terminal device receives indication information #6 sent by the network device, where the indication information #6 indicates lengths of segments. The lengths of the segments may be different. For example, the indication information #6 may indicate a set of candidate lengths of a segment.

In a possible implementation, a length range of a segment may be predefined.

For example, the threshold #3 may indicate a maximum value of the length of the segment. The threshold #3 may be predefined.

The terminal device may determine a length of each segment, to make the length of each segment be less than or equal to the threshold #3.

For example, the threshold #3 may be the maximum code length supported by the UCI.

In another possible implementation, a length range of a segment may be configured by the network device.

The length range of the segment may be explicitly configured.

For example, the threshold #3 may indicate a maximum value of the length of the segment. The threshold #3 may be configured by the network device.

For a specific manner of segmentation in this case, refer to the foregoing descriptions. Details are not described herein again.

For example, the network device may directly indicate a range of a length of a segment transmitted on each of K uplink resources used to transmit the channel information #3. The K uplink resources are respectively used to transmit the K pieces of UCI.

The K uplink resources may be understood as uplink resources scheduled by the network device at K times. Alternatively, the K uplink resources may be understood as K periodic uplink resources configured by the network device. Alternatively, an uplink resource scheduled by the network device at a time is distributed in K time resource units. The time resource unit may be one or a combination of a plurality of slots. The K uplink resources may be understood as the K time resource units.

The length range of the segment may alternatively be implicitly configured.

For example, the method 700 may further include: The terminal device receives uplink resource configuration information #1 sent by the network device, where the uplink resource configuration information #1 indicates K uplink resources used to transmit the channel information #3, and the K uplink resources are respectively used to transmit the K pieces of UCI. The terminal device determines a length of each segment based on each uplink resource and an MCS. In this case, the K uplink resources may be understood as K time resource units in an uplink resource scheduled by the network device at a time.

For example, one uplink resource may include a plurality of resource elements (resource element, RE). The terminal device may determine, based on the MCS and a quantity of REs on the uplink resource that are used to transmit the UCI, a quantity of bits that can be transmitted by using the uplink resource, and then determine a quantity of uncoded bits that can be carried in the uplink resource. The quantity may be used as a length of UCI that can be carried in the uplink resource, in other words, a maximum value of a length of a segment that can be carried in the uplink resource. The terminal device may determine a length of each segment based on the maximum value of the length of the segment that can be carried in the uplink resource, to make the length of each segment be less than or equal to a length of UCI that can be carried in an uplink resource used to transmit the segment.

The following describes a manner of dividing, by the terminal device, the channel information #3 into a plurality of segments based on K with reference to examples.

In a possible implementation, a value of K may be predefined.

In a possible implementation, a value of K may be configured by the network device.

For example, the network device knows a total length of the channel information #3, and may configure a proper value of K based on the total length of the channel information #3. For example, a feedback configuration corresponding to the channel information #3 may be predefined or may be configured by the network device. In this case, the network device knows the total length of the channel information #3, and may configure a proper value of K based on the total length of the channel information #3.

For another example, the network device knows a range of a total length of the channel information #3, and may configure a proper value of K based on the range of the total length of the channel information #3. For example, a range of a parameter in a feedback configuration corresponding to the channel information #3 may be predefined or may be configured by the network device. In this case, the network device knows the range of the total length of the channel information #3, and may configure a proper value of K based on the range of the total length of the channel information #3.

Optionally, the method 700 further includes: The network device sends indication information #8 (an example of second indication information) to the terminal device, where the indication information #8 indicates the value of K.

The network device may explicitly configure the value of K. In other words, the indication information #8 may explicitly indicate the value of K. For example, the indication information #8 includes the value of K.

The network device may alternatively implicitly configure the value of K. In other words, the indication information #8 may implicitly indicate the value of K.

For example, the method 700 may further include: The terminal device receives uplink resource configuration information #1 sent by the network device.

In this case, the uplink resource configuration information #1 may be used as the indication information #8. The network device may implicitly configure the value of K by using a quantity of scheduled uplink resources used to transmit the channel information #3. The quantity of uplink resources used to transmit the channel information #3, that is, a quantity of time resource units, is the value of K. That is, one piece of UCI is transmitted on each uplink resource by default.

The terminal device may determine a manner of dividing the channel information #3, to obtain the K segments.

For example, lengths of the first K-1 segments among the K segments are Q, $Q = \left\lceil q / K \right\rceil$, and a length of the last segment is $q - Q \times (K-1)$. q indicates the total length of the channel information #3, and q is an integer greater than 1. $\lceil \ \rceil$ indicates a rounding symbol.

For example, the channel information #3 includes 2000 bits, K=2, one of the two segments includes the first 1000 bits, and the other segment includes the last 1000 bits.

For example, the terminal device may alternatively perform division at any position to obtain the K segments, provided that a length of each of the K segments is less than the threshold #3.

In another possible implementation, a value of K and a length of a segment may alternatively be completely determined by the terminal device.

The foregoing case in which the network device configures a segmentation manner may be understood as that a correspondence between the channel information #3 and the UCI or a correspondence between the K pieces of UCI is configured by the network device.

The foregoing case in which the terminal device determines a segmentation manner may be understood as that a correspondence between the channel information #3 and the UCI or a correspondence between the K pieces of UCI is determined by the terminal device and indicated to the network device. For example, the terminal device may notify the network device of at least one of the following: a value of K or lengths of the K segments.

Example 73:

Optionally, step 730 may include: The terminal device generates the channel information #3, and segments the channel information #3 based on boundaries of various pieces of information in the channel information #3. Content of the channel information #3 is sorted in a first order.

One piece of information in the channel information #3 is shortest information with a physical meaning. In other words, each segment includes one or more pieces of information.

This helps ensure integrity of information in a segment.

For the channel information #3 obtained through scalar quantization, one piece of information may be one element. For example, during scalar quantization, the initial channel information is quantized into 4 bits. In this case, each element in the channel information #3 is represented by 4 bits, and 4 bits representing one element are one piece of information. 4 bits belonging to a same element are in a same segment.

For the channel information #3 obtained through codebook-based quantization, one piece of information may be any one of the following: spatial domain basis selection information, oversampling selection information, reference amplitude information at each layer, frequency domain basis selection information at each layer, amplitude information of each coefficient, phase information of each coefficient, or the like. The phase information of each coefficient is used as an example. Bits belonging to phase information of a same coefficient are in a same segment.

The example 73 may be used in combination with some implementations in the example 72. Examples are used below for description.

For example, the terminal device may divide the channel information #3 based on a length range of each segment and a boundary of each piece of information in the channel information #3.

In this case, a length of each segment is within a length range of the segment, and the segment includes one or more pieces of information.

For the channel information #3 obtained through scalar quantization, if bits belonging to a same element are included in two segments, when a length range of a segment is met, all of the bits belonging to the element may be distributed to the first segment or the last segment.

For example, for the channel information #3 obtained through scalar quantization, the channel information #3 includes a total of 12 bits, and each element in the channel information #3 is represented by 4 bits. A length of each segment is less than or equal to 6 bits. For example, a segment 1 includes 6 bits, a segment 2 includes 2 bits, and a segment 3 includes 4 bits. In this case, bits belonging to a same element are included in two segments: the segment 1 and the segment 2. All of the bits belonging to the element may be distributed to the segment 2.

For the channel information #3 obtained through codebook-based quantization, if bits of a same piece of information are included in two segments, when a length range of a segment is met, all of the bits of the information may be distributed to the first segment or the last segment.

For example, for the channel information #3 obtained through codebook-based quantization, if bits of phase information of a same coefficient are included into two segments, all of the bits of the phase information of the coefficient may be distributed to the first segment or the last segment.

For example, the terminal device may divide the channel information #3 based on K and a boundary of each piece of information in the channel information #3.

In this case, each segment includes one or more pieces of information, and the channel information #3 is divided into a total of K segments.

For specific descriptions, refer to the foregoing descriptions. Details are not described herein again.

In some of the foregoing implementations, a length of each segment is determined by the terminal device. In this case, the network device does not know the length of each segment, and the terminal device may notify the network device of the length of each segment, in other words, notify the network device of a length of each piece of UCI.

Optionally, the terminal device may send indication information #9 (an example of third indication information) to the network device, to indicate a length of each of the K pieces of UCI, or indicate a length of each of the K segments.

In this way, the network device can decode each piece of UCI to obtain each segment of the channel information #3.

The K pieces of UCI may be transmitted by using J uplink resources. J is a positive integer.

The following describes an uplink resource used to transmit the K pieces of UCI with reference to examples.

The K pieces of UCI may be transmitted by using a same uplink resource. That is, J=1.

Alternatively, the K pieces of UCI may be transmitted by using a plurality of uplink resources. That is, J>1.

The plurality of uplink resources may be understood as uplink resources scheduled by the network device at a plurality of times. Alternatively, the plurality of uplink resources may be understood as a plurality of periodic uplink resources configured by the network device. Alternatively, an uplink resource scheduled by the network device at a time may be distributed in a plurality of time resource units. The time resource unit may be one or a combination of a plurality of slots. The plurality of uplink resources may be understood as the plurality of time resource units.

In this case, even if a length of the channel information #3 exceeds a limitation of a length of UCI that can be carried in one uplink resource, a remaining part of the channel information #3 does not need to be discarded, and the K pieces of UCI may be respectively transmitted by using a plurality of uplink resources, so that the network device can obtain the complete channel information #3. Further, if a length of a segment exceeds a limitation of a length of UCI that can be carried in one uplink resource, the segment may be transmitted by using a plurality of uplink resources, so that the network device can obtain the complete channel information #3.

When J>1, one or more of the K pieces of UCI may be transmitted on each uplink resource. Quantities of UCI transmitted on all uplink resources may be the same or different.

For an uplink resource, the network device may decode each piece UCI based on a quantity of pieces of UCI transmitted on the uplink resource and a length of each piece of UCI transmitted on the uplink resource, to obtain K segments included in the UCI transmitted on the uplink resource.

If the network device does not know the quantity of pieces of UCI transmitted on each uplink resource or the length of each piece of UCI, the terminal device may notify the network device of the quantity of pieces of UCI transmitted on each uplink resource and/or the length of each piece of UCI, so that the network device can decode the UCI transmitted on each uplink resource.

The following describes a case in which J=1 with reference to examples.

For example, K may be configured by the network device or may be predefined. In this case, the network device knows a value of K. The terminal device divides the channel information #3 based on the value of K, and lengths of the K segments are determined by the terminal device. In this case, the terminal device may notify the network device of the lengths of the K segments transmitted on an uplink resource.

For another example, lengths of K-1 segments among the K segments may be configured by the network device or may be predefined, and a length of a remaining segment and a value of K are determined by the terminal device based on the lengths of the K-1 segments and a total length of the channel information #3. If the network device does not know the total length of the channel information #3 or the value of K, the terminal device may notify the network device of at least two of the following: the length of the remaining segment, the value of K, or the total length of the channel information #3.

For another example, a maximum value of a length of a segment is configured by the network device or is predefined. The terminal device divides the channel information #3, to make a length of each segment be less than or equal to the maximum value of the length of the segment. The terminal device may notify the network device of the length of each segment. The terminal device may further notify the network device of a value of K or a total length of the channel information #3.

The following describes a case in which J>1 with reference to examples.

For example, a quantity of pieces of UCI transmitted on each uplink resource may be configured by the network device or may be predefined.

Optionally, the network device may send indication information #11 (an example of fifth indication information) to the terminal device, where the indication information #11 indicates a quantity of segments transmitted on each uplink resource. The quantity of segments transmitted on each uplink resource is a quantity of pieces of UCI transmitted on each uplink resource.

For example, a specific segment transmitted on each of the J uplink resources may be predefined or may be configured by the network device.

Optionally, the indication information #11 may further indicate an identifier of a segment transmitted on each uplink resource. In other words, the indication information #11 may further indicate a specific segment transmitted on each uplink resource. For example, the indication information #11 may indicate a number of a segment transmitted on each uplink resource, for example, including a number of each transmitted segment, or one or more of the following information: a starting number of the transmitted segment, a quantity of segments, or an ending number of the transmitted segment. A part, not indicated by the indication information #11, of the one or more items may be obtained in another manner, for example, predefined in a protocol. A number of each segment may indicate a position of the segment among the K segments. In other words, numbers of the K segments may indicate an order of the K segments. The indication information #11 may indicate an order of segments transmitted on each uplink resource by indicating numbers of the segments transmitted on each uplink resource.

The foregoing case in which the network device performs configuration may be understood as that a correspondence between the channel information #3 and the uplink resource or a correspondence between the plurality of uplink resources is configured by the network device.

Alternatively, the terminal device may determine, based on a length of UCI that can be carried in each of the J uplink resources, a quantity of segments to be transmitted on each uplink resource, to make a total length of UCI transmitted on each uplink resource be less than or equal to a length of UCI that can be carried in the uplink resource.

The terminal device may notify the network device of a quantity of pieces of UCI transmitted on each uplink resource.

Optionally, the terminal device may send indication information #14 (an example of sixth indication information) to the network device, where the indication information #14 may indicate the quantity of pieces of UCI transmitted on each uplink resource.

Optionally, the indication information #14 may further indicate an identifier of UCI transmitted on each uplink resource, in other words, indicate specific UCI transmitted on each uplink resource.

In other words, the terminal device may notify the network device of an order of segments transmitted on each uplink resource, to be specific, notify the network device of a position, among the K segments, of a segment included in UCI transmitted on each uplink resource.

For example, the indication information #14 may indicate a number of a segment transmitted on the uplink resource, for example, including a number of each transmitted segment, or one or more of the following information: a starting number of the transmitted segment, a quantity of segments, or an ending number of the transmitted segment. A part, not indicated by the indication information #14, of the one or more items may be obtained in another manner, for example, predefined in a protocol. A number of each segment indicates a position of the segment among the K segments. Numbers of the K segments may indicate an order of the K segments.

A length of UCI that can be carried in each uplink resource may be predefined or may be configured by the network device.

Further, if the network device does not know a length of a segment transmitted on each uplink resource, the terminal device may notify the network device of the length of the segment transmitted on each uplink resource. For example, lengths of the K segments may be determined by the terminal device. In this case, the terminal device may notify the network device of the length of the segment transmitted on each uplink resource.

Optionally, the terminal device may send indication information #15 (an example of seventh indication information) to the network device, where the indication information #15 indicates that the plurality of uplink resources correspond to the same channel information #3.

In other words, the indication information #15 may indicate specific uplink resources used to transmit the channel information #3.

The terminal device may notify the network device of channel information to which information transmitted on each uplink resource belongs. In other words, the terminal device may notify the network device of specific uplink resources on which same channel information is transmitted.

For example, each uplink resource may carry an identifier, and the identifier is used to distinguish between channel information. If two uplink resources carry a same identifier, information transmitted by using the two uplink resources indicates same channel information. If two uplink resources carry different identifiers, information transmitted by using the two uplink resources indicates different channel information. The identifier may be used as the indication information #15.

The foregoing case in which the terminal device notifies the network device of specific uplink resources used to transmit UCI, a quantity of pieces of UCI transmitted on each uplink resource, and specific UCI transmitted on each uplink resource may be understood as that a correspondence between the channel information #3 and the uplink resource or a correspondence between the plurality of uplink resources is determined by UE and indicated to a base station.

When J is greater than 1, types of the J uplink resources may be the same or different.

For example, the J uplink resources may be resources dedicated for transmission of channel information. A resource dedicated for transmission of channel information is a resource used to transmit only channel information, without transmitting uplink data.

For example, the J uplink resources may be resources reused for channel information and uplink data. A resource reused for channel information and uplink data indicates that the uplink resource may be used to transmit channel information and uplink data.

For example, when J is greater than 1, some uplink resources may be resources dedicated for transmission of channel information, and other uplink resources may be resources reused for channel information and uplink data.

In a possible implementation, the terminal device receives uplink resource configuration information #2 (an example of first uplink resource configuration information) sent by the network device, where the uplink resource configuration information #2 indicates an uplink resource #1 (an example of a first uplink resource) used to transmit the channel information #3. Step 720 may include: The terminal device transmits the K pieces of UCI on the uplink resource #1.

Optionally, the uplink resource configuration information #2 may further indicate whether the uplink resource #1 can be used to transmit UCI. When the uplink resource #1 can be used to transmit UCI, the terminal device may transmit the K pieces of UCI on the uplink resource #1.

For example, the uplink resource #1 may be considered as one uplink resource.

For example, the uplink resource #1 may be distributed in J time resource units, and the uplink resource #1 may be considered as J uplink resources. To be specific, the network device schedules J uplink resources at a time. For example, the uplink resource configuration information #2 may indicate a quantity of segments transmitted in each time resource unit and/or a specific segment transmitted in each time resource unit. That is, the uplink resource configuration information #2 may be used as the indication information #11.

In another possible implementation, the network device may configure J periodic uplink resources. Each periodicity includes an uplink resource used to transmit UCI. The network device may decode UCI on each uplink resource based on a quantity of pieces of UCI transmitted on the uplink resource and a length of each piece of UCI transmitted on the uplink resource, to obtain a segment included in the UCI transmitted on the uplink resource.

In a possible implementation, the terminal device receives uplink resource configuration information #3 (an example of second uplink resource configuration information) sent by the network device, where the uplink resource configuration information #3 indicates an uplink resource #2 (an example of a second uplink resource). Step 720 may include: The terminal device transmits a part of the K pieces of UCI on the uplink resource #2.

Optionally, the uplink resource configuration information #3 may further indicate whether the uplink resource #2 can be used to transmit UCI. When the uplink resource #2 can be used to transmit UCI, the terminal device may transmit a part of the K pieces of UCI on the uplink resource #2.

The uplink resource #2 may be considered as one uplink resource, and the uplink resource #2 belongs to the J uplink resources.

For example, the uplink resource #2 may be the $1^{st}$ uplink resource used to transmit the K pieces of UCI, and step 720 may include: The terminal device transmits, on the uplink resource #2, UCI, among the K pieces of UCI, that is included in the first k segments among the K segments, where k is a positive integer.

The first k pieces of UCI are the first k pieces of transmitted UCI among the K pieces of UCI.

Optionally, the uplink resource configuration information #3 may further indicate a quantity of pieces of UCI transmitted on the uplink resource #2, and/or specific UCI, among the K pieces of UCI, that is to be transmitted. For example, the uplink resource configuration information #3 may indicate a number of UCI transmitted on the uplink resource #2. The uplink resource configuration information #3 may be used as the indication information #11.

Further, that the terminal device transmits the part of the K pieces of UCI on the uplink resource #2 may include: The terminal device transmits the part of the K pieces of UCI and indication information #12 (an example of fourth indication information) on the uplink resource #2. The indication information #12 indicates at least one of the following: a total length of untransmitted UCI among the K pieces of UCI, or whether the K pieces of UCI include untransmitted UCI. Alternatively, when the part of the K pieces of UCI include the $1^{st}$ piece of UCI, the indication information #12 indicates at least one of the following: a total length of the channel information #3, a total length of untransmitted UCI among the K pieces of UCI, or whether the K pieces of UCI include untransmitted UCI.

Whether the K pieces of UCI include untransmitted UCI may be indicated in a plurality of manners.

For example, the indication information #12 may indicate a quantity of pieces of UCI transmitted on the uplink resource #2 and/or an identifier of the UCI, to be specific, indicate specific UCI transmitted on the uplink resource #2. The network device may determine whether there is untransmitted UCI based on the quantity of pieces of UCI transmitted on the uplink resource #2, a quantity of pieces of transmitted UCI, and a value of K. If the value of K is determined by the terminal device, the terminal device may notify the network device of the value of K. In this case, the indication information #12 and the indication information #14 may be same information.

For example, the indication information #12 may directly indicate whether there is untransmitted UCI. For example, if there is untransmitted UCI, a corresponding flag bit may be "1"; or if there is no untransmitted UCI, a flag bit may be "0".

For example, the indication information #12 indicates at least one of the following: a total length of untransmitted UCI among the K pieces of UCI, an identifier indicating whether the K pieces of UCI include untransmitted UCI, a quantity of pieces of UCI transmitted on the uplink resource #2, or an identifier of UCI.

The $1^{st}$ piece of UCI is the $1^{st}$ piece of transmitted UCI among the K pieces of UCI, or UCI used to transmit a segment ranked first in the channel information #3. For example, the $1^{st}$ piece of UCI may be UCI included in the $1^{st}$ segment among the K segments.

The indication information #12 may be used as independent UCI and transmitted together with the part of the K pieces of UCI on the uplink resource #2.

The untransmitted UCI is an untransmitted segment.

Alternatively, the terminal device may transmit the indication information #12 by using another uplink resource.

For example, when the K pieces of UCI include untransmitted UCI, the terminal device may wait for the network device to schedule another uplink resource, to transmit the untransmitted UCI among the K pieces of UCI.

For example, the terminal device receives uplink resource configuration information #31 sent by the network device, where the uplink resource configuration information #31 indicates an uplink resource, and indicates that the uplink resource is used for transmitting UCI. The uplink resource may be a resource dedicated for transmission of UCI.

Further, the uplink resource configuration information #31 may further indicate a quantity of pieces of UCI transmitted on the uplink resource, and/or specific UCI, among remaining UCI, that is to be transmitted. The uplink resource configuration information #31 may be used as the indication information #12.

Alternatively, when the K pieces of UCI include untransmitted UCI, the terminal device may transmit remaining untransmitted UCI by using one or more other subsequent uplink resources, for example, transmit the untransmitted UCI among the K pieces of UCI by using an uplink resource used for transmitting uplink data. That is, the remaining UCI is transmitted by using an uplink resource reused for UCI and uplink data.

Optionally, the method 700 may further include: The terminal device receives uplink resource configuration information #4 sent by the network device, where the uplink resource configuration information #4 (an example of third uplink resource configuration information) indicates an uplink resource #3 (an example of a third uplink resource). The terminal device transmits indication information #13 on the uplink resource #3, where the indication information #13 indicates a total length of the channel information #3.

In this case, the uplink resource #3 does not belong to the J uplink resources.

For example, the terminal device may wait for the network device to schedule another uplink resource, to transmit the K pieces of UCI.

For example, the terminal device receives uplink resource configuration information #41 sent by the network device, where the uplink resource configuration information #41 indicates an uplink resource, and indicates that the uplink resource is used for transmitting UCI. The uplink resource may be a resource dedicated for transmission of UCI.

In the solution in this embodiment of this application, the terminal device may request an uplink resource from the network device to transmit an untransmitted segment. This helps properly utilize uplink resources, to avoid a waste of resources.

Optionally, step 720 may include: The terminal device transmits the part of the K pieces of UCI to the network device. The method 700 may further include: discarding untransmitted UCI among the K pieces of UCI, where timing starting from a transmission moment of the 1st piece of UCI among the K pieces of UCI is greater than or equal to a threshold #5 (an example of a second threshold).

In other words, starting from a transmission starting moment of a CSI report of the channel information #3, if transmission duration of a transmitted segment among the K segments is greater than or equal to the threshold #5, an untransmitted segment among the K segments is discarded, in other words, the untransmitted segment is no longer to be transmitted.

For example, a timer #1 is started at the transmission moment of the 1st piece of UCI, and if timing of the timer #1 is greater than or equal to the threshold #5, the untransmitted UCI among the K pieces of UCI is discarded.

For example, the transmission moment of the 1st piece of UCI may be a transmission starting moment or a transmission ending moment of the 1st piece of UCI, or another moment that uses the transmission starting moment or the transmission ending moment of the 1st piece of UCI as a reference, provided that the moment can represent duration of transmitting channel information by using the UCI. This is not limited herein.

For another example, whether duration between a transmission starting moment of a segment and the transmission starting moment of the CSI report of the channel information #3 is greater than or equal to the threshold #5 is determined. If yes, the segment and all remaining segments are discarded. If no, the segment is to be transmitted.

If duration of transmitting the channel information #3 is excessively long, the terminal device may determine that transmission of the channel information #3 fails, and discard a remaining segment. This helps avoid a waste of resources.

Optionally, step 720 may include: The terminal device transmits the part of the K pieces of UCI to the network device. The method 700 may further include: discarding untransmitted UCI among the K pieces of UCI, where timing starting from a transmission moment of a CSI report of channel information #4 (an example of second channel information) is greater than or equal to a threshold #6 (an example of a third threshold), and the channel information #3 is used to measure precision of the channel information #4.

Alternatively, the channel information #3 may be referred to as a label corresponding to the channel information #4.

The channel information #4 and the channel information #3 are channel information having a correspondence.

For example, the channel information #4 and the channel information #3 may correspond to same initial channel information. To be specific, the channel information #4 and the channel information #3 may be obtained based on same initial channel information.

Optionally, the terminal device may send indication information #16 to the network device, where the indication information #16 may indicate specific channel information #4 corresponding to the channel information #3. For example, the indication information #16 may indicate an index of a CSI report for sending the channel information #4, an index of a resource for sending the channel information #4, an index of a reference signal for measuring the channel information #4, or an index of a resource for sending the reference signal.

For example, the index of the resource for sending the channel information #4 may be an identifier of a transmission slot of the resource for transmitting the channel information #4.

For example, the index of the resource for sending the reference signal may be an identifier of a transmission slot of the resource for transmitting the reference signal.

For example, the identifier of the transmission slot may be represented by an identifier of a starting slot for transmission, or may be represented by an identifier of a starting slot for transmission and a quantity of transmission slots. The identifier of the transmission slot may alternatively be represented by an identifier of an ending slot for transmission and a quantity of transmission slots. The identifier of the transmission slot may alternatively be represented by an identifier of a starting slot for transmission and an identifier of an ending slot for transmission. Alternatively, the identifier of the transmission slot may be represented by a bitmap (bitmap) of the transmission slot.

Optionally, at least one segment in the channel information #3 and the channel information #4 may be sent on a same uplink resource. For example, UCI used to transmit the channel information #4 and the 1st piece of UCI used to send the channel information #3 are sent on a same uplink resource.

For example, the channel information #4 may be compressed CSI reported in a conventional mode (for example, based on an R16 codebook).

For another example, the channel information #4 may be channel information reported in an AI-based feedback mode. To be specific, the channel information #4 may be obtained based on an AI model.

For example, the AI model may be a two-side model. A submodel, deployed on the terminal device, of the two-side model may be used to generate channel information to be fed back to the network device. A submodel deployed on the network device may be used to reconstruct channel information. In other words, in the two-side model, channel information fed back to the network device may be generated by a submodel of the AI model.

For example, the AI model may include a CSI generator and a CSI reconfigurator. The CSI generator may be deployed on the terminal device, and the CSI reconfigurator may be deployed on the network device. The terminal device may generate CSI feedback information, that is, channel information to be fed back to the network device, based on initial channel information by using the CSI generator, and feed back the channel information to the network device by using a CSI report. The network device may reconstruct CSI information by using the CSI reconfigurator to obtain CSI recovery information. The CSI recovery information may be used as the channel information #4.

For specific descriptions of the CSI generator and the CSI reconfigurator, refer to the foregoing descriptions. To avoid repetition, details are not described herein again.

It should be understood that the foregoing descriptions are merely an example, and the AI model may alternatively be another type of model. This is not limited in this embodiment of this application. For ease of description, in this embodiment of this application, an example in which the AI model includes the CSI generator and the CSI reconfigurator is mainly used for description, and constitutes no limitation on the solution in this embodiment of this application.

In this case, that the channel information #3 is used to measure the precision of the channel information #4 may also be understood as that the channel information #3 is used to measure performance of the AI model, that is, is used for model monitoring. To be specific, when the channel information #3 is used for model monitoring, during transmission of the channel information #3, if duration that has elapsed since a transmission moment of the channel information #4 is greater than or equal to the threshold #6, the terminal device may determine that transmission of the channel information #3 fails, and discard a remaining segment, in other words, no longer transmit an untransmitted segment.

For example, the transmission moment of the channel information #4 may be a starting moment of transmission of the channel information #4. Alternatively, the transmission moment of the channel information #4 may be a completion moment of transmission of the channel information #4. Alternatively, the transmission moment of the channel information #4 may be another moment that uses a starting moment or an ending moment of transmission of the channel information #4 as a reference, provided that the moment can represent duration of transmitting the channel information #4. This is not limited herein.

During transmission of the channel information #3, if duration between a current moment and the transmission moment of the channel information #4 is greater than or equal to the threshold #6, an untransmitted segment is discarded.

For example, a timer #2 is started at the transmission moment of the channel information #4, and if timing of the timer #2 is greater than or equal to the threshold #6, the untransmitted UCI among the K pieces of UCI is discarded.

For another example, whether duration between a transmission starting moment of a segment and the transmission moment of the channel information #4 is greater than or equal to the threshold #6 is determined. If yes, the segment and all remaining segments are discarded. If no, the segment is to be transmitted.

The channel information #3 is used to measure precision of the channel information #4. If excessively long duration has elapsed since the transmission moment of the channel information #4, actual channel information may have changed, and it is difficult to measure current performance of a model by using the channel information #3 and the channel information #4. The terminal device may determine that transmission of the channel information #3 fails, and discard a remaining segment. This helps avoid a waste of resources.

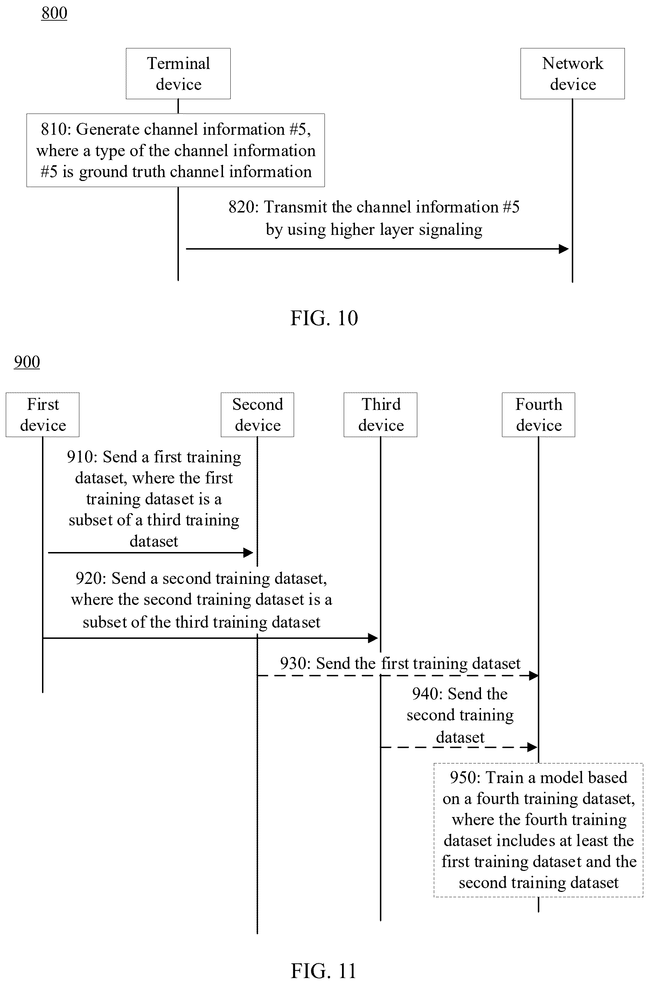

FIG. 10 shows still another communication method according to an embodiment of this application.

As shown in FIG. 10, the method 800 may include the following steps.

810: A terminal device generates channel information #5 (an example of fifth channel information), where a type of the channel information #5 is ground truth channel information.

820: The terminal device transmits the channel information #5 to a network device by using higher layer signaling.

The channel information #5 may be used for model monitoring, model training, or the like.

The network device may perform data processing based on the channel information #5, or forward the channel information #5.

For example, performing data processing based on the channel information #5 may include: performing model training or model monitoring based on the channel information #5.

For example, forwarding the channel information #5 may include: forwarding the channel information #5 to another device with an AI module. The AI module is configured to implement a corresponding AI function, for example, model monitoring or model training. For example, the AI module may be the RIC shown in FIG. 2.

For example, the channel information #5 may be obtained by performing scalar quantization on initial channel information.

For example, the channel information #5 may be obtained by performing codebook-based quantization on initial channel information.

For example, the channel information #5 may be generated based on a first feedback configuration. In this case, the channel information #5 and the channel information #1 may be same channel information.

For a specific feedback mode, refer to the descriptions in the method 500. Details are not described herein again. Alternatively, the channel information #5 may be generated in another manner.

In the solution in this embodiment of this application, channel information may be transmitted by using higher layer signaling, so that the network device can obtain channel information with high overheads, namely, high-precision channel information.

Optionally, the higher layer signaling includes an RRC message or a medium access control control element (medium access control control element, MAC CE).

For ease of description, in this embodiment of this application, the RRC message is mainly used as an example for description.

One RRC message may be used to transmit one or more pieces of channel information of a ground truth channel information type.

Optionally, the RRC message (an example of a first RRC message) may be further used to transmit channel information #6 (an example of sixth channel information), and the channel information #5 is used to measure precision of the channel information #6.

Alternatively, the channel information #5 may be referred to as a label corresponding to the channel information #6.

In other words, the channel information #5 and the channel information #6 may be transmitted in a same RRC message.

The channel information #5 and the channel information #6 are channel information having a correspondence. For specific descriptions, refer to the channel information #4 and the channel information #3 in the foregoing descriptions.

For example, the channel information #6 may be channel information fed back based on AI. In this case, the channel information #5 may be used for model monitoring.

If the channel information #6 is not transmitted in the RRC message, the terminal device may further notify the network device of an association relationship between the channel information #5 and the channel information #6. To be specific, the terminal device may notify the network device of two pieces of channel information that correspond to each other.

Optionally, the RRC message may further indicate the association relationship between the channel information #5 and the channel information #6.

For example, the RRC message may further indicate UCI including the channel information #6.

In other words, the RRC message may further indicate specific UCI that includes the channel information #6 corresponding to the channel information #5.

For example, the UCI including the channel information #6 may be indicated by a transmission moment of the UCI. To be specific, the RRC message may further indicate the transmission moment of the UCI including the channel information #6. The transmission moment of the UCI may be indicated by an identifier of a transmission slot of the UCI.

The identifier of the transmission slot may be represented by an identifier of a starting slot for transmission, or may be represented by an identifier of a starting slot for transmission and a quantity of transmission slots. The identifier of the transmission slot may alternatively be represented by an identifier of an ending slot for transmission and a quantity of transmission slots. The identifier of the transmission slot may alternatively be represented by an identifier of a starting slot for transmission and an identifier of an ending slot for transmission. Alternatively, the identifier of the transmission slot may be represented by a bitmap of the transmission slot.

For example, the transmission moment of the UCI may be represented by an identifier of a starting slot for transmitting the UCI and a quantity of transmission slots. For another example, the transmission moment of the UCI may be represented by an identifier of a starting slot for transmitting the UCI and an identifier of an ending slot for transmitting the UCI. For another example, the transmission moment of the UCI may be represented by a bitmap of a transmission slot of the UCI. For example, the transmission moment of the UCI may be represented by an identifier of an ending slot for transmitting the UCI and a quantity of transmission slots.

For another example, the RRC message may further indicate an index of a reference signal used to measure the channel information #6, or an index of a resource used to send the reference signal, for example, an identifier of a transmission slot of the resource.

It should be understood that the foregoing descriptions are merely examples, and the terminal device may alternatively indicate the association relationship between the channel information #5 and the channel information #6 in another manner. For example, the terminal device may further send other indication information to indicate an uplink resource for transmitting the channel information #5 and an uplink resource for transmitting the channel information #6. For example, the uplink resource may carry an identifier, and channel information transmitted on uplink resources with a same identifier is channel information having a correspondence.

Optionally, the RRC message may further indicate common assistance information #1 of one or more pieces of channel information of the ground truth channel information type that are transmitted by using the RRC message, and the one or more pieces of channel information of the ground truth channel information type include the channel information #5.

For example, the assistance information #1 may be represented in a form of an ID. For example, the assistance information #1 may include one or more of the following: a vendor ID of the terminal device, a model ID of the terminal device, a type ID of the terminal device, or the like. For another example, the assistance information #1 may include one or more of the following: a vendor ID of a chip, a type ID of a chip, a model ID of a chip, or the like.

For example, the assistance information #1 may be represented as specific content. For example, the assistance information #1 may include one or more of the following: a vendor of the terminal device, a type of the terminal device, a model of the terminal device, or the like. For another example, the assistance information #1 may include one or more of the following: a vendor of a chip, a type of a chip, a model of a chip, or the like.

Optionally, the RRC message may further indicate assistance information #2 of the channel information #5. The assistance information #2 is assistance information specific to the channel information #5.

For example, the assistance information #2 may be represented in a form of an ID. For example, the assistance information #2 may include an ID of a moment of CSI measurement and/or an ID of a reference signal configuration of the CSI measurement. The moment of the CSI measurement may be a measurement moment of the initial channel information corresponding to the channel information #5.

For example, the assistance information #2 may be represented as specific content. The assistance information #2 may include a moment of CSI measurement, precision of the channel information #5, and/or the like.

The following describes an RRC message for transmitting channel information of the ground truth channel information type with reference to examples.

For example, an RRC information element (information element) for transmitting the channel information #5 may be a CSI ground truth message (CSI-groundtruth-message). Each CSI-groundtruth-message may include one or more pieces of channel information of the ground truth channel information type, and the channel information of the ground truth channel information type may be indicated by a CSI ground truth (CSI-groundtruth).

For example, the CSI-groundtruth-message may further include at least one of the following: an identifier (identifier, ID) of the message, or common assistance information #1 of one or more pieces of ground truth CSI in the message.

Each CSI-groundtruth may include one piece of channel information of the ground truth channel information type.

Further, the CSI-groundtruth may further include an ID of the channel information #5.

Further, the CSI-groundtruth may further include the channel information #6, or an identifier of UCI used to transmit the channel information #6.

Further, the CSI-groundtruth may further include the assistance information #2 of the channel information #5.

In addition, it is further found through research that a large amount of training data is usually needed for training an AI. If training data is transmitted by using a terminal device, severe air interface overheads of the terminal device occur.

In view of this, an embodiment of this application further provides a communication method. A training dataset is split into a plurality of subsets, and the plurality of subsets are transmitted to a training device through a plurality of terminal devices respectively, to avoid severe air interface overheads of the terminal devices.

FIG. 11 shows a communication method according to an embodiment of this application.

As shown in FIG. 11, the method 900 may include the following steps.

910: A second device receives a first training dataset from a first device. The first training dataset includes T1 pieces of training data, and T1 is a positive integer. The first training dataset is a subset of a third training dataset. The third training dataset is used for model training.

920: A third device receives a second training dataset from the first device. The second training dataset includes T2 pieces of training data, and T2 is a positive integer. The second training dataset is a subset of the third training dataset. The second training dataset and the first training dataset are different subsets of the third training dataset.

Optionally, the method 900 may further include step 930 to step 950. 930: The second device sends the first training dataset to a fourth device.

940: The third device sends the second training dataset to the fourth device.

950: The fourth device trains a model based on a fourth training dataset. The fourth training dataset includes at least the first training dataset and the second training dataset.

It should be noted that the numbers of the steps in the method 900 are merely intended for ease of description, and constitute no limitation on an execution order of the steps in the method 900. For example, step 910 and step 920 may be performed simultaneously, and step 930 and step 940 may be performed simultaneously.

Each piece of training data is a training sample input to an AI model, or each piece of training data is a training sample and a corresponding label.

For example, one training sample may be one piece of channel information. For example, a type of the channel information may be any one of the following: ground truth channel information, a channel response, an eigenvector matrix of a channel, a precoding matrix, or the like.

In the solution in this embodiment of this application, the first device divides the third training dataset into a plurality of subsets, and transmits the plurality of subsets through a plurality of terminal devices, and a device that receives the plurality of subsets may reassemble the plurality of subsets into a training dataset, and perform model training based on the reassembled training dataset. This can avoid severe air interface overheads of terminal devices.

In some scenarios, a network device needs to send a training dataset to a terminal device, to enable the terminal device to train an AI model.

For example, the first device may be a network device, the second device and the third device may be terminal devices, and the fourth device is a server or a cloud server.

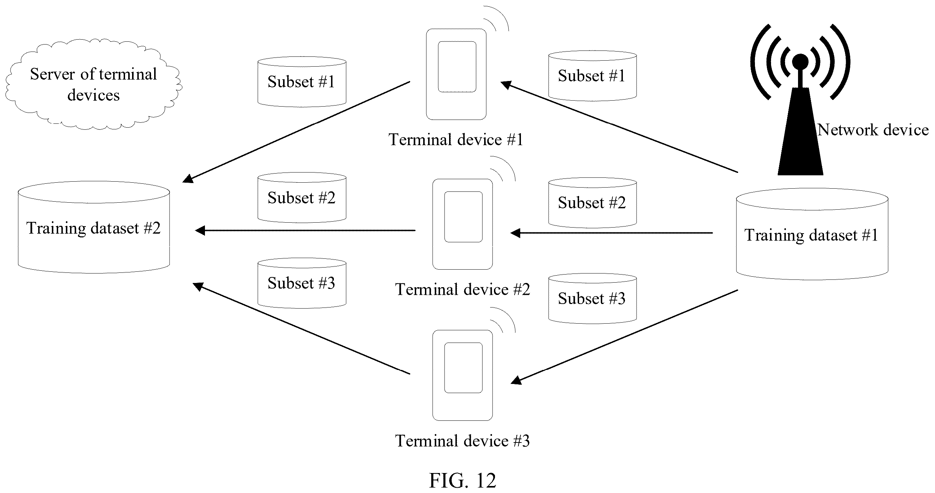

Terminal devices of a same vendor or a same model may usually use a same AI model, and model training is usually performed by a server of the vendor of the terminal devices. As shown in FIG. 12, a network device divides a training dataset #1 (an example of the third training dataset) into a plurality of subsets, for example, a subset #1, a subset #2, and a subset #3 in FIG. 12; and transmits, through a plurality of terminal devices, for example, a terminal device #1, a terminal device #2, and a terminal device #3 in FIG. 12, the plurality of subsets to a server (server) of the terminal devices, so that the server can receive the plurality of subsets and reassemble the plurality of subsets into a training dataset #2 (an example of the fourth training dataset).

It should be understood that a quantity of subsets obtained through splitting and a quantity of devices in FIG. 12 are merely examples, and constitute no limitation on the solution in this embodiment of this application.

In some scenarios, a terminal device may send a training dataset to a network device, and the network device trains an AI model.

For example, the first device may be a server or a cloud server, the second device and the third device may be terminal devices, and the fourth device is a network device.

The network device may be a network device on which one or more AI modules are deployed.

For example, the network device may be one or more of the following devices shown in FIG. 1: the core network device, the access network node (RAN node), or the OAM. For example, the AI module may be the RIC shown in FIG. 2, for example, a near-real-time RIC or a non-real-time RIC. For example, the near-real-time RIC is deployed on the RAN node (for example, a CU or a DU), and the non-real-time RIC is deployed on the OAM, the cloud server, the core network device, or another network device. The RIC may obtain, from the RAN node (for example, the CU, a CU-CP, a CU-UP, the DU, and/or an RU), subsets from a plurality of terminal devices, reassemble the subsets into a training dataset #2, and perform training based on the training dataset #2.

For example, the near-real-time RIC and the non-real-time RIC each may be independently deployed as a network element, and the network device may be the near-real-time RIC or the non-real-time RIC.

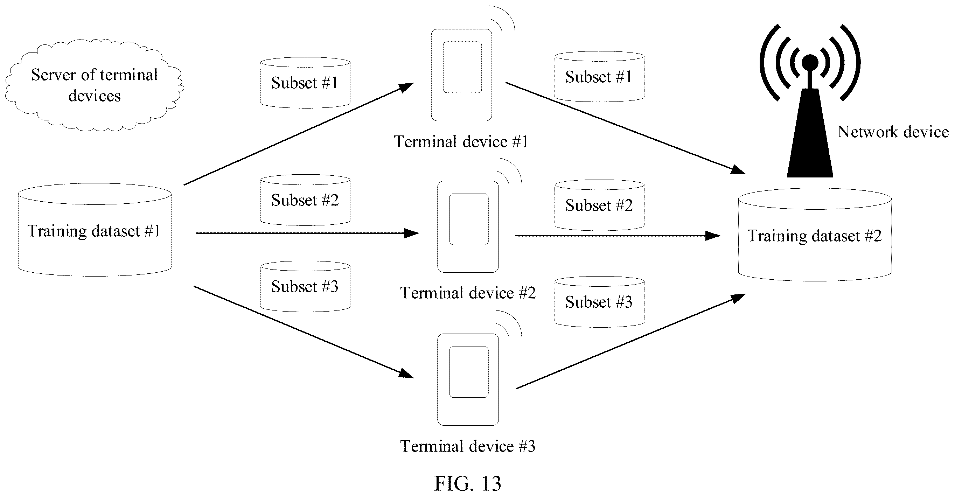

As shown in FIG. 13, a server of terminal devices divides a training dataset #1 into a plurality of subsets, and transmits the plurality of subsets to a network device through a plurality of terminal devices (for example, the second device and the third device), so that the network device can receive the plurality of subsets and reassemble the plurality of subsets into a training dataset, for example, the training dataset #2.

For ease of description, in the method 900, an example in which the first device is a network device is mainly used for description, and constitute no limitation on the solution in this embodiment of this application.

The solution in this embodiment of this application may be applied to an independent training scenario of a two-side model. A CSI feedback model is used below as an example for description. The CSI feedback model includes a CSI generator and a CSI reconfigurator. The first device trains a first CSI feedback model, where the first CSI feedback model includes a first CSI generator and a first CSI reconfigurator.

For example, an input and an output of a trained first CSI generator may be used as training data in the third training dataset. Specifically, the input of the first CSI generator may be used as a training sample, and the output of the first CSI generator may be used as a label corresponding to the training sample. The fourth device may train a second CSI generator based on the fourth training dataset, to enable the second CSI generator to output CSI feedback information that is the same as CSI feedback information output by the first CSI generator. The first CSI generator matches the first CSI reconfigurator, and training data of the second CSI generator is obtained based on the input and the output of the first CSI generator. In this way, a trained second CSI generator can be used in cooperation with the first CSI reconfigurator. For example, the first device is an RIC or a network device including an RIC, and the RIC may train the first CSI feedback model. In addition, the RIC obtains the output of the trained first CSI generator. The input and the output of the trained first CSI generator may be used as training data in the third training dataset and sent to a plurality of terminal devices through a RAN node or directly sent to a plurality of terminal devices.

For example, an input and an output of a trained first CSI reconfigurator may be used as training data in the third training dataset. The input of the first CSI reconfigurator may be used as a training sample, and the output of the first CSI reconfigurator may be used as a label corresponding to the training sample. The fourth device may train a second CSI reconfigurator based on the fourth training dataset, to enable the second CSI reconfigurator to output CSI reconstruction information that is the same as CSI reconstruction information output by the first CSI reconfigurator. The first CSI generator matches the first CSI reconfigurator, and training data of the second CSI reconfigurator is obtained based on the input and the output of the first CSI reconfigurator. In this way, a trained second CSI reconfigurator can be used in cooperation with the first CSI generator. For example, the first device is an RIC or a network device including an RIC, and the RIC may train the first CSI feedback model. In addition, the RIC obtains the output of the trained first CSI reconfigurator. The input and the output of the trained first CSI reconfigurator may be used as training data in the third training dataset and sent to a plurality of terminal devices through a RAN node or directly sent to a plurality of terminal devices.

Optionally, step 910 may include: The second device receives the first training dataset and first information from the first device. The first information indicates an attribute of the first training dataset.

The first training dataset and the first information may be transmitted in a same message, or may be transmitted in different manners or messages. For example, the first information is transmitted by using an air interface message, and the first training dataset is transmitted by using a message that is not defined in a protocol.

The attribute of the first training dataset may include at least one of the following: an identifier of the third training dataset, an identifier of the first training dataset, a value of T1, positions of the T1 pieces of training data in the third training dataset, an amount of training data in the third training dataset, a minimum value of an amount of training data that is in the third training dataset and that is sufficient for training, a time domain attribute of the T1 pieces of training data, quantization information of the first training dataset, and quantizer information corresponding to the third training dataset.

The value of T1 is a size of the first training dataset, to be specific, an amount of training data in the first training dataset.

For example, the positions of the T1 pieces of training data in the third training dataset may be represented in the following manners.

For example, the third training dataset may be divided into a plurality of subsets. An identifier is set for each subset, and the identifier of the subset may indicate a position of the subset in the third training dataset. The identifier of the first training dataset or an identifier of a subset included in the first training dataset may indicate the positions of the T1 pieces of training data in the third training dataset.

For another example, identifiers are set for all training data in the third training dataset. An identifier of each piece of training data may indicate a position of the training data in the third training dataset. Identifiers of the T1 pieces of training data may indicate the positions of the T1 pieces of training data in the third training dataset.

For another example, consecutive identifiers are set for all training data in the third training dataset. An identifier of each piece of training data may indicate a position of the training data in the first training dataset. An identifier of any one of the T1 pieces of training data may indicate the positions of the T1 pieces of training data in the third training dataset. For example, an identifier of the 1st piece of training data among the T1 pieces of training data or an identifier of the last piece of training data among the T1 pieces of training data may indicate the positions of the T1 pieces of training data in the third training dataset.

The minimum value w of the amount of training data that is in the third training dataset and that is sufficient for training is a minimum amount w of training data needed for model training. w is less than or equal to the amount of training data in the third training dataset. w is a positive integer. When an amount of training data received by the fourth device is greater than or equal to w, it can be considered that the dataset is successfully received, and model training may be performed.

For example, when T1 is greater than 1, the time domain attribute of the T1 pieces of training data may include at least one of the following: whether the T1 pieces of training data are continuous training data in time domain, identifiers of training data, among the T1 pieces of training data, that is continuous in time domain, a time interval or a periodicity between training data, among the T1 pieces of training data, that is continuous in time domain, or a moving speed of a terminal device.

Whether training data is continuous in time domain indicates whether the training data is correlated in time domain. For example, the training data is channel information. If a plurality of pieces of training data are a plurality of pieces of channel information obtained by a same device through periodic measurement, the plurality of pieces of training data are training data that is continuous in time domain.

The identifiers of the training data, among the T1 pieces of training data, that is continuous in time domain indicate specific training data, among the T1 pieces of training data, that is continuous in time domain.

A time domain attribute of training data plays an important role in performance of an AI model including a time domain dimension. The AI model including a time domain dimension indicates that an input and an output of the AI model are correlated with time. For example, the AI model including a time domain dimension may be an AI model used for CSI prediction or an AI model used for time domain compression of channel information. For specific descriptions, refer to the foregoing descriptions. Details are not described herein again.

The quantization information of the first training dataset indicates a quantization mode of training data in the first training dataset.

For example, the quantization information of the first training dataset may include at least one of the following: quantization precision in a feedback mode based on scalar quantization, basis selection information in a feedback mode based on codebook-based quantization, coefficient selection information in a feedback mode based on codebook-based quantization, coefficient quantization precision in a codebook-based quantization mode, or the like.

For example, the training data in the first training dataset may be channel information obtained through scalar quantization. In this case, the quantization information of the first training dataset may include the quantization precision in the feedback mode based on scalar quantization.

For another example, the training data in the first training dataset may be channel information obtained through codebook-based quantization. In this case, the quantization information of the first training dataset may include at least one of the following: basis selection information of the training data, coefficient selection information of the training data, coefficient quantization precision of the training data, or the like.

For specific descriptions of the basis selection information, the coefficient selection information, or the coefficient quantization precision, refer to the foregoing descriptions. Details are not described herein again.

In a CSI feedback scenario, a terminal device and a network device need to agree upon a CSI quantization mode. When sending a training dataset, the first device may send quantizer information corresponding to the training dataset. The quantizer may also be understood as a quantizer corresponding to the first CSI generator or a quantizer corresponding to the first CSI reconfigurator.

The quantizer information corresponding to the third training dataset may be a quantizer or an index of a quantizer.

Optionally, step 920 may include: The third device receives the second training dataset and second information from the first device. The second information indicates an attribute of the second training dataset.

The second training dataset and the second information may be transmitted in a same message. Alternatively, the second training dataset and the second information may be transmitted in different manners or messages. For example, the second information is transmitted by using an air interface message, and the second training dataset is transmitted by using a message that is not defined in a protocol.

The attribute of the second training dataset may include at least one of the following: an identifier of the third training dataset, an identifier of the second training dataset, a value of T2, positions of the T2 pieces of training data in the third training dataset, an amount of training data in the third training dataset, a minimum value of an amount of training data that is in the third training dataset and that is sufficient for training, a time domain attribute of the T2 pieces of training data, quantization information of the second training dataset, and quantizer information corresponding to the third training dataset.

The value of T2 is a size of the second training dataset, to be specific, an amount of training data in the second training dataset.

For descriptions of the attribute of the second training dataset, refer to the foregoing descriptions of the attribute of the first training dataset. To avoid repetition, details are not described herein again.

Optionally, the method 900 further includes: A fifth device sends first request information to the first device. The first request message is used to request a fifth training dataset. The fifth training dataset includes T3 pieces of training data, and T3 is a positive integer. The fifth training dataset is a subset of the third training dataset.

The fifth device may be any one of the second device or the third device. Alternatively, the fifth device may be another device different from the second device and the third device.

In other words, the fifth device may request specific training data from the first device.

For example, after receiving a plurality of pieces of training data in the third training dataset, the fifth device finds that there is unsuccessfully received training data, and the fifth device may request the unsuccessfully received training data (for example, the fifth training dataset) from the first device. For example, the fifth device may be the second device. After receiving the first training dataset, the fifth device finds that there is unsuccessfully received training data, and requests the fifth training dataset, namely, the unsuccessfully received training data, from the first device. The fifth training dataset may be a part or all of the first training dataset. For another example, the fifth device may be the third device. After receiving the second training dataset, the fifth device finds that there is unsuccessfully received training data, and requests the fifth training dataset, namely, the unsuccessfully received training data, from the first device. The fifth training dataset may be a part or all of the second training dataset. For another example, the fifth device may be a device other than the second device and the third device, and the fifth training dataset may include a part or all of the first training dataset, or may include a part or all of the second training dataset, or may not include training data in the first training dataset or the second training dataset.

As described above, an identifier may be set for each piece of training data in the third training dataset, and the identifier of each piece of training data may indicate a position of the training data in the third training dataset. For example, the third training dataset includes a total of 1000 pieces of training data, and identifiers of the 1000 pieces of training data are consecutive identifiers of 1 to 1000. The fifth device receives 500 pieces of training data with identifiers of 1 to 500 and 300 pieces of training data with identifiers of 701 to 1000. The fifth device may request 200 pieces of training data with identifiers of 501 to 700.

For example, after the fourth device receives a plurality of pieces of training data in the third training dataset, an amount of received training data is less than w, and the fifth device may request unreceived training data in the third training dataset from the first device.

Optionally, the first request information may include at least one of the following: the identifier of the third training dataset, an identifier of the fifth training dataset, identifiers of the T3 pieces of training data, or an identifier of received training data.

For example, the identifiers of the T3 pieces of training data may be an identifier of each piece of training data among the identifiers of the T3 pieces of training data. For another example, if identifiers of training data in the third training dataset are consecutive, the identifiers of the T3 pieces of training data may be an identifier of the 1st piece of training data among the identifiers of the T3 pieces of training data and a value of T3. Alternatively, the identifiers of the T3 pieces of training data may be an identifier of the last piece of training data among the T3 pieces of training data and a value of T3.

It can be understood that the information names used in some of the foregoing embodiments are merely examples and constitute no limitation on the protection scope of embodiments of this application.

It can be further understood that the formulas used in embodiments of this application are merely examples for description and constitute no limitation on the protection scope of embodiments of this application. During calculation of the foregoing parameters, calculation may be performed based on the foregoing formulas, or calculation may be performed based on variations of the foregoing formulas, or calculation may be performed in another manner, to meet calculation results of the formulas.

It can be further understood that some optional features in embodiments of this application may be independent of other features in some scenarios, or may be combined with other features in some scenarios. This is not limited.

It can be further understood that the solutions in embodiments of this application may be appropriately combined for use, and explanations or descriptions of terms in the embodiments may be mutually referenced or explained in the embodiments. This is not limited.

It can be further understood that various numeric sequence numbers in embodiments of this application do not mean an execution order, but are merely intended for differentiation for ease of description, and therefore should not constitute any limitation on implementation processes of embodiments of this application.

It can be further understood that, in the foregoing method embodiments, methods and operations implemented by a device may alternatively be implemented by a component (for example, a chip or a circuit) of the device.

Corresponding to the methods provided in the foregoing method embodiments, embodiments of this application further provide a corresponding apparatus. The apparatus includes corresponding modules for performing the foregoing method embodiments. The modules may be software, hardware, or a combination of software and hardware. It can be understood that the technical features described in the method embodiments are also applicable to the following apparatus embodiments.

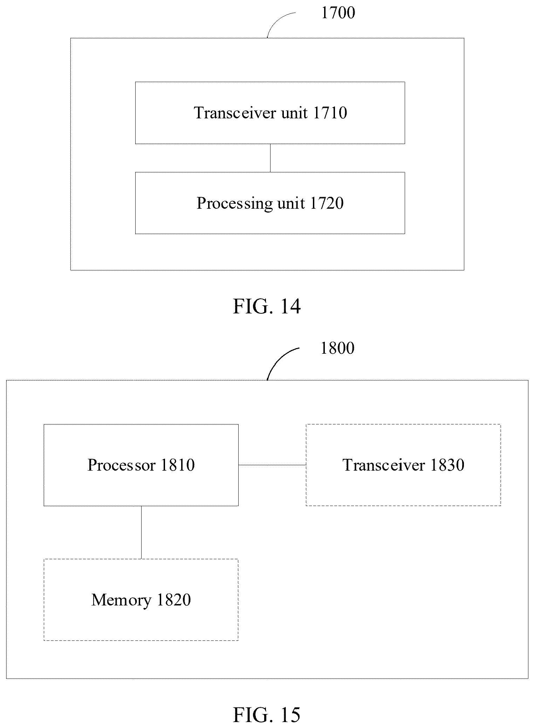

FIG. 14 is a diagram of a communication apparatus 1700 according to an embodiment of this application. The apparatus 1700 includes a transceiver unit 1710 and a processing unit 1720. The transceiver unit 1710 may be configured to implement a corresponding communication function. The transceiver unit 1710 may also be referred to as a communication interface, a communication unit, or the like. The processing unit 1720 may be configured to implement a corresponding processing function, for example, configure a resource. The processing unit 1720 may also be referred to as a processor or the like.

Optionally, the apparatus 1700 further includes a storage unit. The storage unit may be configured to store instructions and/or data. The processing unit 1720 may read the instructions and/or the data in the storage unit, so that the apparatus implements actions of a device or a network element in the foregoing method embodiments.

The apparatus 1700 may be a terminal device, or may be a communication apparatus that is used in a terminal device or used in cooperation with a terminal device and that can implement a communication method performed on the terminal device side. Alternatively, the apparatus 1700 may be a network device, or may be a communication apparatus that is used in a network device or used in cooperation with a network device and that can implement a communication method performed on the network device side.

When the apparatus 1700 is used in a terminal device, the apparatus 1700 may implement the steps or the processes performed by the terminal device in the foregoing method embodiments. The transceiver unit 1710 may be configured to perform sending/receiving-related operations of the terminal device in the foregoing method embodiments. The processing unit 1720 may be configured to perform processing-related operations of the terminal device in the foregoing method embodiments.

When the apparatus 1700 is used in a network device, the apparatus 1700 may implement the steps or the processes performed by the network device in the foregoing method embodiments. The transceiver unit 1710 may be configured to perform sending/receiving-related operations of the network device in the foregoing method embodiments. The processing unit 1720 may be configured to perform processing-related operations of the network device in the foregoing method embodiments.

It should be understood that specific processes of performing the foregoing corresponding steps by the units are described in detail in the foregoing method embodiments. For brevity, details are not described herein again.

It should be further understood that the apparatus 1700 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 1700 may be specifically the terminal device in the foregoing embodiments, and may be configured to perform the processes and/or the steps corresponding to the terminal device in the foregoing method embodiments; or the apparatus 1700 may be specifically the network device in the foregoing embodiments, and may be configured to perform the processes and/or the steps corresponding to the network device in the foregoing method embodiments. To avoid repetition, details are not described herein again.

The apparatus 1700 in the foregoing solutions has a function of implementing corresponding steps performed by a device (for example, the terminal device, or for another example, the network device) in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to separately perform sending/receiving operations and related processing operations in the method embodiments.

In addition, the transceiver unit 1710 may alternatively be a transceiver circuit (for example, may include a receiver circuit and a transmitter circuit), and the processing unit may be a processing circuit.

It should be noted that the apparatus in FIG. 14 may be a network element or a device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit that is integrated on the chip. This is not limited herein.

FIG. 15 is a diagram of another communication apparatus 1800 according to an embodiment of this application. The apparatus 1800 includes a processor 1810. The processor 1810 is configured to execute a computer program or instructions stored in a memory 1820, or read data or signaling stored in the memory 1820, to perform the methods in the foregoing method embodiments. Optionally, there are one or more processors 1810.

Optionally, as shown in FIG. 15, the apparatus 1800 further includes the memory 1820, and the memory 1820 is configured to store a computer program or instructions and/or data. The memory 1820 may be integrated with the processor 1810, or may be disposed separately. Optionally, there are one or more memories 1820.

Optionally, as shown in FIG. 15, the apparatus 1800 further includes a transceiver 1830, and the transceiver 1830 is configured to send and/or receive a signal. For example, the processor 1810 is configured to control the transceiver 1830 to send and/or receive a signal.

In a solution, the apparatus 1800 may be used in a terminal device. Specifically, the apparatus 1800 may be a terminal device, or may be an apparatus that can support the terminal device in implementing the functions of the terminal device in any one of the foregoing examples. The apparatus 1800 is configured to implement the operations performed by the terminal device in the foregoing method embodiments.

For example, the processor 1810 is configured to execute the computer program or instructions stored in the memory 1820, to implement related operations of the terminal device in the foregoing method embodiments.

In another solution, the apparatus 1800 may be used in a network device. Specifically, the apparatus 1800 may be a network device, or may be an apparatus that can support the network device in implementing the functions of the network device in any one of the foregoing examples. The apparatus 1800 is configured to implement the operations performed by the network device in the foregoing method embodiments.

For example, the processor 1810 is configured to execute the computer program or instructions stored in the memory 1820, to implement related operations of the network device in the foregoing method embodiments.

It should be understood that the processor mentioned in embodiments of this application may be a central processing unit (central processing unit, CPU), or may be another general-purpose processor, a digital signal processor (digital signal processor, DSP), an ASIC, a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or transistor logic device, or a discrete hardware component, a memory (storage module) may be integrated into the processor.

It should be further noted that the memory described in this specification is intended to include but is not limited to these memories and any other appropriate type of memory.

An embodiment of this application further provides a computer-readable storage medium. The computer-readable storage medium stores computer instructions for implementing a method performed by a communication device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, a method performed by a device (for example, the terminal device, or for another example, the network device) in the foregoing method embodiments is implemented.

An embodiment of this application further provides a communication system, including the foregoing terminal device and network device. The terminal device and the network device may implement the communication method shown in any one of the foregoing examples.

Optionally, the system further includes a device that communicates with the foregoing terminal device and/or network device.

For descriptions and beneficial effects of related content of any one of the apparatuses provided above, refer to a corresponding method embodiment provided above. Details are not described herein again.

In several embodiments provided in this application, it should be understood that the disclosed apparatuses and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatuses or units may be implemented in electrical, mechanical, or other forms.

All or some of the foregoing embodiments may be implemented by software, hardware, firmware, or any combination thereof. When the embodiments are implemented by software, all or some of the embodiments may be implemented in a form of a computer program product. The computer program product includes one or more computer instructions. When the computer program instructions are loaded and executed on a computer, all or some of the processes or the functions according to embodiments of this application are generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk drive, a ROM, a RAM, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:

   generating first channel information, wherein the first channel information comprises K segments, K is an integer greater than 1, a length of each of the K segments is less than or equal to a first threshold, a type of the first channel information is ground truth channel information, and the first channel information is any one of the following: a channel response, a channel eigenvector matrix, a precoding matrix, reference signal received power, or a signal to interference plus noise ratio; and
   transmitting a part or all of K pieces of uplink control information UCI to a network device, wherein the K pieces of UCI respectively comprise the K segments.

2. The method according to claim 1, wherein the first threshold is less than or equal to a maximum code length supported by the UCI.

3. The method according to claim 1 or 2, wherein the first threshold is predefined, or the method further comprises:
   receiving first indication information from the network device, wherein the first indication information indicates the first threshold.

4. The method according to any one of claims 1 to 3, wherein a length of each of at least K-1 segments of the K segments is equal to the first threshold.

5. The method according to claim 1 or 2, wherein the method further comprises:
   receiving second indication information from the network device, wherein the second indication information indicates a value of K.

6. The method according to any one of claims 1 to 5, wherein the method further comprises:
   sending third indication information to the network device, wherein the third indication information indicates lengths of the K segments.

7. The method according to any one of claims 1 to 6, wherein the method further comprises:
   receiving first uplink resource configuration information from the network device, wherein the first uplink resource configuration information indicates a first uplink resource; and transmitting the part or all of the K pieces of uplink control information UCI to the network device comprises:
   transmitting the K pieces of UCI to the network device by using the first uplink resource.

8. The method according to any one of claims 1 to 6, wherein the method further comprises:
   receiving second uplink resource configuration information from the network device, wherein the second uplink resource configuration information indicates a second uplink resource; and transmitting the part or all of the K pieces of uplink control information UCI to the network device comprises:

transmitting the part of the K pieces of UCI to the network device by using the second uplink resource.

9. The method according to claim 8, wherein transmitting the part of the K pieces of UCI to the network device by using the second uplink resource comprises:

transmitting the part of the K pieces of UCI and fourth indication information to the network device by using the second uplink resource, wherein the fourth indication information indicates at least one of the following: a total length of untransmitted UCI among the K pieces of UCI, or whether the K pieces of UCI comprise untransmitted UCI; or
when the part of the K pieces of UCI comprise the 1st piece of UCI among the K pieces of UCI, the fourth indication information indicates at least one of the following: a total length of the first channel information, a total length of untransmitted UCI among the K pieces of UCI, or whether the K pieces of UCI comprise untransmitted UCI.

10. The method according to any one of claims 1 to 6, wherein transmitting the part or all of the K pieces of uplink control information UCI to the network device comprises:
transmitting the part or all of the K pieces of UCI to the network device by using a plurality of uplink resources; and the method further comprises:
receiving fifth indication information from the network device, wherein the fifth indication information indicates a quantity of pieces of UCI transmitted on each of the plurality of uplink resources.

11. The method according to any one of claims 1 to 6, wherein transmitting the part or all of the K pieces of uplink control information UCI to the network device comprises:
transmitting the part or all of the K pieces of UCI to the network device by using a plurality of uplink resources; and the method further comprises:
sending sixth indication information to the network device, wherein the sixth indication information indicates a quantity of pieces of UCI transmitted on each of the plurality of uplink resources.

12. The method according to any one of claims 1 to 6, wherein transmitting the part or all of the K pieces of uplink control information UCI to the network device comprises:
transmitting the part or all of the K pieces of UCI to the network device by using a plurality of uplink resources; and the method further comprises:
sending seventh indication information to the network device, wherein the seventh indication information indicates that the plurality of uplink resources correspond to same first channel information.

13. The method according to any one of claims 1 to 12, wherein transmitting the part or all of the K pieces of uplink control information UCI to the network device comprises:
transmitting the part of the K pieces of UCI to the network device; and the method further comprises:
discarding untransmitted UCI among the K pieces of UCI, wherein timing starting from a transmission moment of the 1st piece of UCI among the K pieces of UCI is greater than or equal to a second threshold.

14. The method according to any one of claims 1 to 12, wherein transmitting the part or all of the K pieces of uplink control information UCI to the network device comprises:
transmitting the part of the K pieces of UCI to the network device; and the method further comprises:
discarding untransmitted UCI among the K pieces of UCI, wherein timing starting from a transmission moment of second channel information is greater than or equal to a third threshold, and the first channel information is used to measure precision of the second channel information.

15. A communication method, comprising:

generating third channel information based on a first feedback configuration, to enable a total length of the third channel information to be less than or equal to a maximum code length supported by UCI, wherein a type of the third channel information is ground truth channel information;
transmitting first UCI to a network device, wherein the first UCI comprises the third channel information;
generating fourth channel information based on a second feedback configuration, wherein precision of the fourth channel information is lower than precision of the third channel information, and a type of the fourth channel information is not ground truth channel information; and
transmitting second UCI to the network device, wherein the second UCI comprises the fourth channel information.

16. The method according to claim 15, wherein the precision of the third channel information is greater than or equal to a fourth threshold.

17. The method according to claim 16, wherein the fourth threshold is predefined, or the method further comprises: receiving eighth indication information from the network device, wherein the eighth indication information indicates the fourth threshold.

18. The method according to any one of claims 15 to 17, wherein a configuration item of the first feedback configuration comprises at least one of the following: a subband configuration of the third channel information, a layer configuration of the third channel information, a quantization precision configuration in a feedback mode based on scalar quantization, a basis configuration in a feedback mode based on codebook-based quantization, or a non-zero coefficient configuration in a feedback mode based on codebook-based quantization.

19. The method according to any one of claims 15 to 18, wherein a parameter value of a first configuration item in the configuration item of the first feedback configuration is based on a range of the first configuration item.

20. The method according to claim 19, wherein the range of the first configuration item is predefined, or the method further comprises: receiving ninth indication information from the network device, wherein the ninth indication information indicates the range of the first configuration item.

21. The method according to claim 19 or 20, wherein the first configuration item comprises at least one of the following: the subband configuration of the third channel information, the layer configuration of the third channel information, the quantization precision configuration in the feedback mode based on scalar quantization, the basis configuration in the feedback mode based on codebook-based quantization, or the non-zero coefficient configuration in the feedback mode based on codebook-based quantization;

a range of the subband configuration comprises at least one of the following: a value range of a quantity of subbands of the third channel information, a set of subband combinations of the third channel information, or a value range of a subband granularity of the third channel information;
a range of the layer configuration comprises at least one of the following: a value range of a quantity of layers of the third channel information, or a set of layer combinations of the third channel information;
a range of the quantization precision configuration in the feedback mode based on scalar quantization comprises a value range of quantization precision in the feedback mode based on scalar quantization;
a range of the basis configuration in the feedback mode based on codebook-based quantization comprises at least one of the following: a value range indicating a quantity of bases of the third channel information in the feedback mode based on codebook-based quantization, or a set indicating a basis combination of the third channel information in the feedback mode based on codebook-based quantization; or
a range of the non-zero coefficient configuration in the feedback mode based on codebook-based quantization comprises at least one of the following: a value range indicating a quantity of non-zero coefficients of the third channel information in the feedback mode based on codebook-based quantization, or a value range indicating non-zero coefficient quantization precision of the third channel information in the feedback mode based on codebook-based quantization.

22. The method according to any one of claims 15 to 21, wherein parameter values of a plurality of configuration items in the first feedback configuration are based on a correspondence between the parameter values of the plurality of configuration items in the first feedback configuration.

23. The method according to claim 22, wherein a parameter value of a second configuration item in the first feedback configuration is based on a parameter value of a third configuration item in the first feedback configuration and the correspondence between the parameter values of the plurality of configuration items in the first feedback configuration, and the third configuration item and the second configuration item belong to the plurality of configuration items.

24. The method according to claim 22 or 23, wherein the correspondence between the parameter values of the plurality of configuration items is predefined, or the method further comprises: receiving tenth indication information from the network device, wherein the tenth indication information indicates the correspondence between the parameter values of the plurality of configuration items.

25. The method according to any one of claims 15 to 24, wherein the method further comprises: sending eleventh indication information to the network device, wherein the eleventh indication information indicates parameter values of a part or all of configuration items in the first feedback configuration.

26. A communication method, comprising:

generating fifth channel information, wherein a type of the fifth channel information is ground truth channel information; and
transmitting the fifth channel information to a network device by using higher layer signaling.

27. The method according to claim 26, wherein the higher layer signaling comprises a first radio resource control RRC message.

28. The method according to claim 27, wherein the first RRC message is further used to transmit sixth channel information, and the fifth channel information is used to measure precision of the sixth channel information.

29. The method according to claim 27, wherein the first RRC message indicates an association relationship between the fifth channel information and sixth channel information, and the fifth channel information is used to measure precision of the sixth channel information.

30. A communication method, comprising:

sending a first training dataset to a second device, wherein the first training dataset comprises T1 pieces of training data, and T1 is a positive integer; and
sending a second training dataset to a third device, wherein the second training dataset comprises T2 pieces of training data, T2 is a positive integer, the second training dataset and the first training dataset are different subsets of a third training dataset, and the third training dataset is used for model training.

31. The method according to claim 30, wherein sending the first training dataset to the second device comprises: sending the first training dataset and first information to the second device, wherein the first information indicates an attribute of the first training dataset.

32. The method according to claim 31, wherein the first training dataset and the first information are transmitted in different manners or messages.

33. The method according to claim 31 or 32, wherein the attribute of the first training dataset comprises at least one of the following: an identifier of the third training dataset, an identifier of the first training dataset, a value of T1, positions of the T1 pieces of training data in the third training dataset, an amount of training data in the third training dataset, a minimum value of an amount of training data that is in the third training dataset and that is sufficient for training, a time domain attribute of the T1 pieces of training data, quantization information of the first training dataset, and quantizer information corresponding to the third training dataset.

34. The method according to any one of claims 30 to 33, wherein the method further comprises: receiving first request information from a fifth device, wherein the first request information is used to request a fifth training dataset, the fifth training dataset comprises T3 pieces of training data, T3 is a positive integer, and the fifth training dataset is a subset of the third training dataset.

35. The method according to claim 34, wherein the first request information comprises at least one of the following: the identifier of the third training dataset, an identifier of the fifth training dataset, identifiers of the T3 pieces of training data, or an identifier of received training data.

36. A communication method, comprising:

receiving a part or all of K pieces of UCI from a terminal device, wherein the K pieces of UCI respectively comprise K segments of first channel information, K is an integer greater than 1, a length of each of the K segments is less than or equal to a first threshold, a type of the first channel information is ground truth channel information, and the first channel information is any one of the following: a channel response, a channel eigenvector matrix, a precoding matrix, reference signal received power, or a signal to interference plus noise ratio; and

obtaining, based on the part or all of the K pieces of UCI, a segment comprised in the part or all of the K pieces of UCI.

37. The method according to claim 36, wherein the first threshold is less than or equal to a maximum code length supported by the UCI.

38. The method according to claim 36 or 37, wherein the first threshold is predefined, or the method further comprises:
sending first indication information to the terminal device, wherein the first indication information indicates the first threshold.

39. The method according to any one of claims 36 to 38, wherein a length of each of at least K-1 segments of the K segments is equal to the first threshold.

40. The method according to claim 36 or 37, wherein the method further comprises:
sending second indication information to the terminal device, wherein the second indication information indicates a value of K.

41. The method according to any one of claims 36 to 40, wherein the method further comprises:
receiving third indication information from the terminal device, wherein the third indication information indicates lengths of the K segments.

42. The method according to any one of claims 36 to 41, wherein the method further comprises:
sending first uplink resource configuration information to the terminal device, wherein the first uplink resource configuration information indicates a first uplink resource; and receiving the part or all of the K pieces of UCI from the terminal device comprises:
receiving the K pieces of UCI from the terminal device by using the first uplink resource.

43. The method according to any one of claims 36 to 41, wherein the method further comprises:
sending second uplink resource configuration information to the terminal device, wherein the second uplink resource configuration information indicates a second uplink resource; and receiving the part or all of the K pieces of UCI from the terminal device comprises:
receiving the part of the K pieces of UCI from the terminal device by using the second uplink resource.

44. The method according to claim 43, wherein receiving the part of the K pieces of UCI from the terminal device by using the second uplink resource comprises:

receiving the part of the K pieces of UCI and fourth indication information from the terminal device by using the second uplink resource, wherein the fourth indication information indicates at least one of the following: a total length of untransmitted UCI among the K pieces of UCI, or whether the K pieces of UCI comprise untransmitted UCI; or
when the part of the K pieces of UCI comprise the $1^{st}$ piece of UCI among the K pieces of UCI, the fourth indication information indicates at least one of the following: a total length of the first channel information, a total length of untransmitted UCI among the K pieces of UCI, or whether the K pieces of UCI comprise untransmitted UCI.

45. The method according to any one of claims 36 to 41, wherein receiving the part or all of the K pieces of UCI from the terminal device comprises:
receiving the part or all of the K pieces of UCI from the terminal device by using a plurality of uplink resources; and the method further comprises:
sending fifth indication information to the terminal device, wherein the fifth indication information indicates a quantity of pieces of UCI transmitted on each of the plurality of uplink resources.

46. The method according to any one of claims 36 to 41, wherein receiving the part or all of the K pieces of UCI from the terminal device comprises:
receiving the part or all of the K pieces of UCI from the terminal device by using a plurality of uplink resources; and the method further comprises:
receiving sixth indication information from the terminal device, wherein the sixth indication information indicates a quantity of pieces of UCI transmitted on each of the plurality of uplink resources.

**47.** The method according to any one of claims 36 to 41, wherein receiving the part or all of the K pieces of UCI from the terminal device comprises:

receiving the part or all of the K pieces of UCI from the terminal device by using a plurality of uplink resources; and the method further comprises:

receiving seventh indication information from the terminal device, wherein the seventh indication information indicates that the plurality of uplink resources correspond to same first channel information.

**48.** A communication method, comprising:

receiving first UCI from a terminal device, wherein the first UCI comprises third channel information, the third channel information corresponds to a first feedback configuration, and a type of the third channel information is ground truth channel information; and

receiving second UCI from the terminal device, wherein the second UCI comprises fourth channel information, the fourth channel information corresponds to a second feedback configuration, precision of the fourth channel information is lower than precision of the third channel information, and a type of the fourth channel information is not ground truth channel information.

**49.** The method according to claim 48, wherein the precision of the third channel information is greater than or equal to a fourth threshold.

**50.** The method according to claim 49, wherein the fourth threshold is predefined, or the method further comprises:
sending eighth indication information to the terminal device, wherein the eighth indication information indicates the fourth threshold.

**51.** The method according to any one of claims 48 to 50, wherein a configuration item of the first feedback configuration comprises at least one of the following: a subband configuration of the third channel information, a layer configuration of the third channel information, a quantization precision configuration in a feedback mode based on scalar quantization, a basis configuration in a feedback mode based on codebook-based quantization, or a non-zero coefficient configuration in a feedback mode based on codebook-based quantization.

**52.** The method according to any one of claims 48 to 51, wherein a parameter value of a first configuration item in the configuration item of the first feedback configuration is based on a range of the first configuration item.

**53.** The method according to claim 52, wherein the range of the first configuration item is predefined, or the method further comprises:
sending ninth indication information to the terminal device, wherein the ninth indication information indicates the range of the first configuration item.

**54.** The method according to claim 52 or 53, wherein the first configuration item comprises at least one of the following: the subband configuration of the third channel information, the layer configuration of the third channel information, the quantization precision configuration in the feedback mode based on scalar quantization, the basis configuration in the feedback mode based on codebook-based quantization, or the non-zero coefficient configuration in the feedback mode based on codebook-based quantization;

a range of the subband configuration comprises at least one of the following: a value range of a quantity of subbands of the third channel information, a set of subband combinations of the third channel information, or a value range of a subband granularity of the third channel information;
a range of the layer configuration comprises at least one of the following: a value range of a quantity of layers of the third channel information, or a set of layer combinations of the third channel information;
a range of the quantization precision configuration in the feedback mode based on scalar quantization comprises a value range of quantization precision in the feedback mode based on scalar quantization;
a range of the basis configuration in the feedback mode based on codebook-based quantization comprises at least one of the following: a value range indicating a quantity of bases of the third channel information in the feedback mode based on codebook-based quantization, or a set indicating a basis combination of the third channel information in the feedback mode based on codebook-based quantization; or
a range of the non-zero coefficient configuration in the feedback mode based on codebook-based quantization comprises at least one of the following: a value range indicating a quantity of non-zero coefficients of the third channel information in the feedback mode based on codebook-based quantization, or a value range indicating non-zero coefficient quantization precision of the third channel information in the feedback mode based on codebook-based quantization.

55. The method according to any one of claims 48 to 54, wherein parameter values of a plurality of configuration items in the first feedback configuration are based on a correspondence between the parameter values of the plurality of configuration items in the first feedback configuration.

56. The method according to claim 55, wherein a parameter value of a second configuration item in the first feedback configuration is based on a parameter value of a third configuration item in the first feedback configuration and the correspondence between the parameter values of the plurality of configuration items in the first feedback configuration, and the third configuration item and the second configuration item belong to the plurality of configuration items.

57. The method according to claim 55 or 56, wherein the correspondence between the parameter values of the plurality of configuration items is predefined, or the method further comprises:
sending tenth indication information to the terminal device, wherein the tenth indication information indicates the correspondence between the parameter values of the plurality of configuration items.

58. The method according to any one of claims 48 to 57, wherein the method further comprises:
receiving eleventh indication information from the terminal device, wherein the eleventh indication information indicates parameter values of a part or all of configuration items in the first feedback configuration.

59. A communication method, comprising:

receiving fifth channel information from a terminal device by using higher layer signaling, wherein a type of the fifth channel information is ground truth channel information; and
performing data processing based on the fifth channel information, or forwarding the fifth channel information.

60. The method according to claim 59, wherein the higher layer signaling comprises a first RRC message.

61. The method according to claim 60, wherein the first RRC message is further used to transmit sixth channel information, and the fifth channel information is used to measure precision of the sixth channel information.

62. The method according to claim 60, wherein the first RRC message indicates an association relationship between the fifth channel information and sixth channel information, and the fifth channel information is used to measure precision of the sixth channel information.

63. A communication method, wherein the method comprises:

receiving a first training dataset from a first device, wherein the first training dataset comprises T1 pieces of training data, and T1 is a positive integer; and
sending the first training dataset to a fourth device, to enable the fourth device to train a model based on a fourth training dataset, wherein the fourth training dataset comprises at least the first training dataset and a second training dataset, the first training dataset and the second training dataset are different subsets of a third training dataset, the second training dataset comprises T2 pieces of training data, and T2 is a positive integer.

64. The method according to claim 63, wherein receiving the first training dataset from the first device further comprises:
receiving the first training dataset and first information from the first device, wherein the first information indicates an attribute of the first training dataset.

65. The method according to claim 64, wherein the first training dataset and the first information are transmitted in different manners or messages.

66. The method according to claim 64 or 65, wherein the attribute of the first training dataset comprises at least one of the following: an identifier of the third training dataset, an identifier of the first training dataset, a value of T1, positions of the T1 pieces of training data in the third training dataset, an amount of training data in the third training dataset, a minimum value of an amount of training data that is in the third training dataset and that is sufficient for training, a time domain attribute of the T1 pieces of training data, quantization information of the first training dataset, and quantizer information corresponding to the third training dataset.

67. The method according to any one of claims 63 to 66, wherein the method further comprises:
sending first request information to the first device, wherein the first request message is used to request a fifth training dataset, the fifth training dataset comprises T3 pieces of training data, T3 is a positive integer, and the fifth training dataset is a subset of the third training dataset.

68. The method according to claim 67, wherein the first request information comprises at least one of the following: the identifier of the third training dataset, an identifier of the fifth training dataset, identifiers of the T3 pieces of training data, or an identifier of received training data.

69. A computer-readable storage medium, wherein the computer-readable storage medium comprises instructions, and when the instructions are run by a processor, the method according to any one of claims 1 to 14 is implemented, the method according to any one of claims 15 to 25 is implemented, the method according to any one of claims 26 to 29 is implemented, the method according to any one of claims 30 to 35 is implemented, the method according to any one of claims 36 to 47 is implemented, the method according to any one of claims 48 to 58 is implemented, the method according to any one of claims 59 to 62 is implemented, or the method according to any one of claims 63 to 68 is implemented.

70. A communication apparatus, wherein the communication apparatus comprises a processor and a storage medium, the storage medium stores instructions, and when the instructions are run by the processor, the communication apparatus is enabled to perform the method according to any one of claims 1 to 14, the method according to any one of claims 15 to 25, the method according to any one of claims 26 to 29, the method according to any one of claims 30 to 35, the method according to any one of claims 36 to 47, the method according to any one of claims 48 to 58, the method according to any one of claims 59 to 62, or the method according to any one of claims 63 to 68.

71. A communication apparatus, comprising a processor, wherein the processor is configured to process data and/or information, to implement the method according to any one of claims 1 to 14, implement the method according to any one of claims 15 to 25, implement the method according to any one of claims 26 to 29, implement the method according to any one of claims 30 to 35, implement the method according to any one of claims 36 to 47, implement the method according to any one of claims 48 to 58, implement the method according to any one of claims 59 to 62, or implement the method according to any one of claims 63 to 68.

72. A chip, comprising a processor, wherein the processor is configured to run a program or instructions, to implement the method according to any one of claims 1 to 14, implement the method according to any one of claims 15 to 25, implement the method according to any one of claims 26 to 29, implement the method according to any one of claims 30 to 35, implement the method according to any one of claims 36 to 47, implement the method according to any one of claims 48 to 58, implement the method according to any one of claims 59 to 62, or implement the method according to any one of claims 63 to 68.

73. A computer program product, comprising computer program code or instructions, wherein when the computer program code or the instructions are run, the method according to any one of claims 1 to 14 is implemented, the method according to any one of claims 15 to 25 is implemented, the method according to any one of claims 26 to 29 is implemented, the method according to any one of claims 30 to 35 is implemented, the method according to any one of claims 36 to 47 is implemented, the method according to any one of claims 48 to 58 is implemented, the method according to any one of claims 59 to 62 is implemented, or the method according to any one of claims 63 to 68 is implemented.

74. A communication system, comprising one or a combination of the following communication apparatuses: a communication apparatus for performing the method according to any one of claims 1 to 14, a communication apparatus for the method according to any one of claims 15 to 25, a communication apparatus for the method according to any one of claims 26 to 29, a communication apparatus for the method according to any one of claims 30 to 35, a communication apparatus for the method according to any one of claims 36 to 47, a communication apparatus for the method according to any one of claims 48 to 58, a communication apparatus for the method according to any one of claims 59 to 62, or a communication apparatus for the method according to any one of claims 63 to 68.

FIG. 1

FIG. 2

100

Terminal
device 120

Terminal
device 130

Network
device 110

FIG. 3

200

AI network
element 140

Network
device 110

Terminal
device 120

Terminal
device 130

FIG. 4

$V \longrightarrow$ Encoder $\xrightarrow{z}$ Decoder $\longrightarrow V'$

FIG. 5

Performance feedback

Training data

Model training

Data source

Model deployment/ update

Model feedback

Inference data

Model inference

Output

Actor entity

## FIG. 6

<u>500</u>

Terminal device

Network device

510: Generate channel information #1 based on a first feedback configuration, where a total length of the channel information #1 is less than or equal to a maximum code length supported by UCI, and a type of the channel information #1 is ground truth channel information

520: Transmit UCI #1, where the UCI #1 corresponds to the channel information #1

## FIG. 7

Eigenmatrix
$N_{tx} \times N_{sb}$

Decomposition →

Spatial domain basis matrix $N_{tx} \times N_{tx}$

×

Coefficient matrix $N_{tx} \times N_{sb}$

×

Frequency domain basis matrix $N_{sb} \times N_{sb}$

Dimension reduction

Dimension reduction

Dimension reduction

Spatial domain basis matrix $N_{tx} \times 2L$

Coefficients $2L \times R$

Frequency domain bases $R \times N_{sb}$

FIG. 8

700

Terminal device

Network device

710: Generate channel information #3, where the channel information #3 includes K segments, K is an integer greater than 1, a type of the channel information #3 is ground truth channel information, and a length of each segment is less than or equal to a threshold #3

720: Transmit a part or all of K pieces of UCI, where the K pieces of UCI respectively correspond to the K segments

FIG. 9

800

```
┌──────────┐                                          ┌──────────┐
│ Terminal │                                          │ Network  │
│  device  │                                          │  device  │
└────┬─────┘                                          └────┬─────┘
┌────┴────────────────────────────┐                       │
│ 810: Generate channel information#5,                     │
│ where a type of the channel information                  │
│ #5 is ground truth channel information │                 │
└────┬────────────────────────────┘                       │
     │    820: Transmit the channel information #5         │
     │          by using higher layer signaling           │
     │ ─────────────────────────────────────────────────▶ │
     │                                                     │
```

FIG. 10

900

```
┌────────┐          ┌────────┐     ┌────────┐      ┌────────┐
│ First  │          │ Second │     │ Third  │      │ Fourth │
│ device │          │ device │     │ device │      │ device │
└───┬────┘          └───┬────┘     └───┬────┘      └───┬────┘
    │ 910: Send a first │              │               │
    │  dataset, where the first        │               │
    │  training dataset is a           │               │
    │  subset of a third training      │               │
    │        dataset                   │               │
    │ ─────────────────▶               │               │
    │ 920: Send a second training dataset,             │
    │  where the second training dataset is a          │
    │     subset of the third training dataset         │
    │ ───────────────────────────────▶                 │
    │         930: Send the first training dataset      │
    │                   │ ─ ─ ─ ─ ─ ─ ─ ─ ─ ─ ─ ─ ─ ─ ▶ │
    │                   │          940: Send the        │
    │                   │          second training      │
    │                   │             dataset           │
    │                   │ ─ ─ ─ ─ ─ ─ ─ ─ ─ ─ ─ ─ ─ ─ ▶ │
    │                   │              │  ┌─────────────┴──────┐
    │                   │              │  │ 950: Train a model based │
    │                   │              │  │ on a fourth training dataset, │
    │                   │              │  │ where the fourth training │
    │                   │              │  │ dataset includes at least the │
    │                   │              │  │ first training dataset and the │
    │                   │              │  │ second training dataset │
    │                   │              │  └─────────────┬──────┘
    │                   │              │               │
```

FIG. 11

FIG. 12

FIG. 13

1700

Transceiver unit 1710

Processing unit 1720

FIG. 14

1800

Processor 1810

Transceiver 1830

Memory 1820

FIG. 15

# INTERNATIONAL SEARCH REPORT

| International application No. |
| --- |
| **PCT/CN2024/085915** |

| A. | CLASSIFICATION OF SUBJECT MATTER |
| --- | --- |
| | H04B7/06(2006.01)i |

According to International Patent Classification (IPC) or to both national classification and IPC

| B. | FIELDS SEARCHED |
| --- | --- |

Minimum documentation searched (classification system followed by classification symbols)

    IPC: H04B H04L H04W

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 人工智能, 机器学习, 信道状态信息, 信道, 信息, 分段, 分片, 部分, 上行控制信息, 发送, 传输, 反馈, 配置, 精度, 小于, 大于, 高, 低, 真值, 无线资源控制, 训练, 数据集, 子集, 划分, 多个, 空口, 开销, 减少, 降低, AI, ML, CSI, channel, information, segment, portion, part, UCI, transmission, feedback, configuration, precision, less than, more than, high, low, ground-truth, RRC, training, data set, divide, multiple, radio, overhead, reduce

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | US 2021099211 A1 (SAMSUNG ELECTRONICS CO., LTD.) 01 April 2021 (2021-04-01) claims 1-20 | 1-25, 36-58, 69-74 (when referring to claims 1-25 and 36-58) |
| X | CN 107276652 A (BEIJING XINWEI TELECOM TECHNOLOGY INC.) 20 October 2017 (2017-10-20) description, paragraphs [0058]-[0070] | 26-27, 59-60, 69-74 (when referring to claims 26-27 and 59-60) |
| A | CN 107276652 A (BEIJING XINWEI TELECOM TECHNOLOGY INC.) 20 October 2017 (2017-10-20) description, paragraphs [0058]-[0070] | 28-29, 61-62, 69-74 (when referring to claims 28-29 and 61-62) |
| A | US 2016094325 A1 (HUAWEI TECHNOLOGIES CO., LTD.) 31 March 2016 (2016-03-31) claims 1-20 | 30-35, 63-68, 69-74 (when referring to claims 30-35 and 63-68) |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 June 2024** | **24 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2024/085915**

### C.    DOCUMENTS CONSIDERED TO BE RELEVANT

| Category* | Citation of document, with indication, where appropriate, of the relevant passages | Relevant to claim No. |
|---|---|---|
| A | CN 110380833 A (VIVO COMMUNICATION TECHNOLOGY CO., LTD.) 25 October 2019 (2019-10-25)<br>entire document | 1-74 |
| A | WO 2021102917 A1 (NOKIA SHANGHAI BELL CO., LTD. et al.) 03 June 2021 (2021-06-03)<br>entire document | 1-74 |
| A | WO 2021209973 A1 (LENOVO (SINGAPORE) PTE. LTD.) 21 October 2021 (2021-10-21)<br>entire document | 1-74 |
| A | NOKIA et al. "(TP for TR 37.817): ML-related Data Support"<br>*3GPP TSG-RAN WG3 Meeting #112-e R3-212373*, 27 May 2021 (2021-05-27),<br>entire document | 1-74 |
| A | NTT DOCOMO, INC. "Discussion on Other Aspects on AI/ML for CSI Feedback Enhancement"<br>*3GPP TSG RAN WG1 #112 R1-2301486*, 03 March 2023 (2023-03-03),<br>entire document | 1-74 |

Form PCT/ISA/210 (second sheet) (July 2022)

## INTERNATIONAL SEARCH REPORT

| International application No. |
|---|
| **PCT/CN2024/085915** |

**Box No. III      Observations where unity of invention is lacking (Continuation of item 3 of first sheet)**

This International Searching Authority found multiple inventions in this international application, as follows:

The same technical feature of claims (1, 36, 69-74 (when referring to claims 1-14 and 36-47)), claims (15, 48, 69-74 (when referring to claims 15-25 and 48-58)), and claims 26, 59, 69-74 (when referring to claims 26-29 and 59-62) is "channel information"; however, channel information is a common technical means in the art. Claims (30, 63 and 69-74 (when referring to claims 30-35 and 63-68)) and the above three groups of claims do not have a same or corresponding technical feature. It can be seen that the above four groups of claims do not have a same or corresponding special technical feature, and do not belong to a single general inventive concept. Therefore, the above four groups of claims lack unity of invention (PCT Rule 13.1 and 13.2).

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**    ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2024/085915**

| Patent document cited in search report | | | Publication date (day/month/year) | Patent family member(s) | | | Publication date (day/month/year) |
|---|---|---|---|---|---|---|---|
| US | 2021099211 | A1 | 01 April 2021 | US | 2022360308 | A1 | 10 November 2022 |
| | | | | WO | 2021066497 | A1 | 08 April 2021 |
| | | | | KR | 20220075397 | A | 08 June 2022 |
| CN | 107276652 | A | 20 October 2017 | | None | | |
| US | 2016094325 | A1 | 31 March 2016 | EP | 2991283 | A1 | 02 March 2016 |
| | | | | WO | 2014205727 | A1 | 31 December 2014 |
| | | | | CN | 105284082 | A | 27 January 2016 |
| CN | 110380833 | A | 25 October 2019 | | None | | |
| WO | 2021102917 | A1 | 03 June 2021 | CN | 114747250 | A | 12 July 2022 |
| WO | 2021209973 | A1 | 21 October 2021 | US | 2023171070 | A1 | 01 June 2023 |
| | | | | EP | 4136785 | A1 | 22 February 2023 |
| | | | | CN | 115398830 | A | 25 November 2022 |

Form PCT/ISA/210 (patent family annex) (July 2022)

**REFERENCES CITED IN THE DESCRIPTION**

**Patent documents cited in the description**

*   CN 202310396390